# NEW EUROPEAN PATENT SPECIFICATION

(11) **EP 0 385 120 B2**
(45) Date of publication and mention of the opposition decision: **15.06.2005**
(45) Mention of the grant of the patent: 19.04.1995
(21) Application number: 90101890.3
(22) Date of filing: 31.01.1990
(51) Int. Cl.: C09B 62/503, C09B 62/04, D06P 1/38

(54) **Fiber reactive asymmetric dioxazine compounds and their use as fiber reactive dyes**
Faserreaktive asymmetrische Dioxazinverbindungen und deren Verwendung als faserreaktive Farbstoffe
Composés dioxazine asymétriques et leur utilisation comme colorants réactifs avec les fibres

(30) Priority: 01.02.1989 JP 2440989; 07.02.1989 JP 2951889; 07.02.1989 JP 2951989; 07.02.1989 JP 2952089
(43) Date of publication of application: 05.09.1990
(73) Proprietor: Sumitomo Chemical Company, Limited, Tokyo 104-8260 (JP)
(72) Inventor: Miyamoto, Tetsuya, Takatsuki-shi (JP); Takahashi, Miyao, Minoo-shi (JP); Fujisaki, Takahiko, Takarazuka-shi (JP); Ikeou, Shinei, Hirakata-shi (JP); Omura, Takashi, Kobe-shi (JP); Harada, Naoki, Suita-shi (JP)
(74) Representative: VOSSIUS & PARTNER

(56) References cited:
- EP-A- 0 074 928
- EP-A- 0 076 782
- EP-A- 0 170 838

## Description

The present invention relates to fiber reactive asymmetric dioxazine compounds, their production and their use as fiber reactive dyes. More specifically, the present invention relates to fiber reactive asymmetric dioxazine compounds useful for dyeing or printing hydroxyl or amide-group-containing materials, particularly those such as cellulose fibers, natural or synthetic polyamide or polyurethane fibers, leathers or their mixed fibers to give dyed or printed products having superior fastness properties such as light fastness, wet fastness and chlorine fastness.

Fiber reactive dioxazine compounds useful for dyeing or printing such materials are known as disclosed in, for example, JP-A-57-14654, 61-14265, 63-75066 EP-A-0 170 838, EP-A-0 076 782, EP-A-074 928 and JP-A-63-170463.

However, these known dioxazine compounds are not yet satisfactory in their dye performance such as, for example, level dyeing property, build-up property and dyeing velocity as well as fastness properties such as chlorine fastness, and they still require to be improved in such dye performance. Of these problems, fastness properties of dyed or printed hydroxyl or amide group-containing materials, particularly those such as chlorine fastness of dyed or printed hydroxyl group-containing materials, are particularly significant.

The present inventors have undertaken extensive studies to solve such problems and found a fact that a specific asymmetric dioxazine compound can meet such needs.

The present invention provides a dioxazine compound according to any of claims 1 to 11, a process for their production according to claim 12, a process for their use according to claim 13 and their use according to claim 14.

The dioxazine compound of the formula (I) in accordance with the present invention inciudes those having the following formulas (I-1), (I-2), (I-3) and (I-4) in the free acid form: 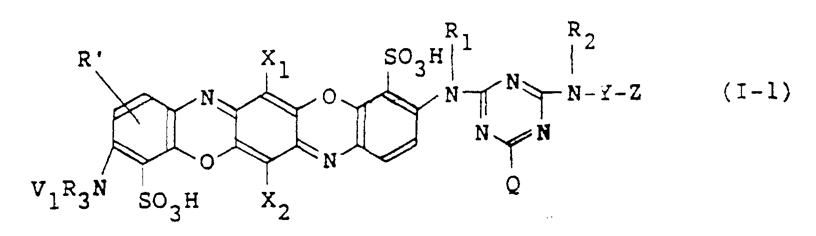 wherein R' is halogen, sulfo or alkoxy, V, is hydrogen, unsubstituted or substituted alkyl or an acyl group of the formula (1), and R₁, R₂, R₃, X₁, X₂, Y, Z and Q are as defined above, 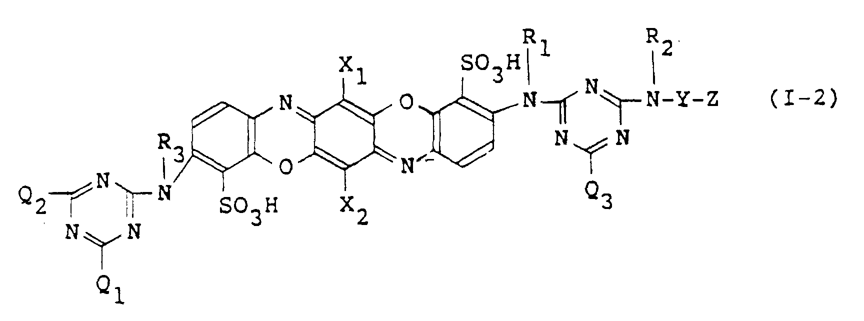 wherein Q₃ is unsubstituted or substituted amino or a group of the formula (3), and R₁, R₂, R₃, X₁, X₂, Y, Z, Q₁ and Q₂ are as defined above. 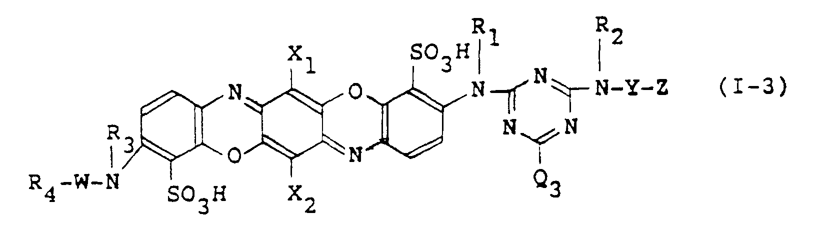 wherein R₁, R₂, R₃, R₄, W, X₁, X₂, Y, Z and
Q₃ are as defined above, and 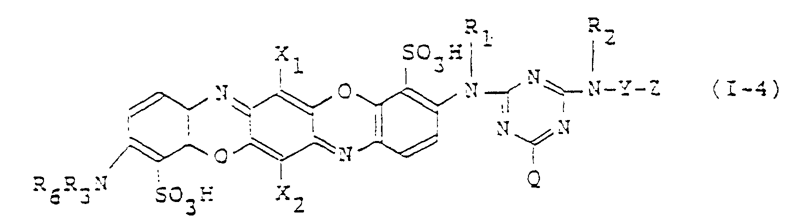 wherein R₆ is sulfoalkyl, and R₁, R₂, R₃, X₁, X₂, Y, Z and Q are as defined above. Unless otherwise indicated "alkyl" if used either alone or as part of another group, preferably comprises 1 to 4 carbon atoms.

With respect to the symbol R, in the above formulas, the halogen is preferably fluorine and chlorine and the alkoxy includes C₁ to C₄ alkoxy such as methoxy and ethoxy.

With respect to the symbols R₁, R₂, R₃, and R₅, the alkyl is preferably one having 1 to 4 carbon atoms, which is unsubstituted or substituted by hydroxy, cyano, C₁ to C₄ alkoxy, halogen, carbamoyl, carboxy, C₁ to C₄ alkoxycarbonyl, C₁ to C₄ alkylcarbonyloxy, sulfo or sulfamoyl. Preferred examples of those represented by R₁, R₂, R₃ and R₅ are hydrogen, methyl, ethyl, n-propyl, isopropyl, n-butyl, isobutyl, sec-butyl, 2-hydroxyethyl, 2-hydroxypropyl, 3-hydroxypropyl, 2-hydroxybutyl, 3-hydroxybutyl, 4-hydroxybutyl, 2,3-dihydroxypropyl, 3,4-dihydroxybutyl, cyanomethyl, 2-cyanoethyl, 3-cyanopropyl, methoxymethyl, ethoxymethyl, 2-methoxyethyl, 2-ethoxyethyl, 3-methoxypropyl, 3-ethoxypropyl, 2-hydroxy-3-methoxypropyl, chloromethyl, bromomethyl, 2-chloroethyl, 2-bromoethyl, 3-chloropropyl, 3-bromopropyl, 4-chlorobutyl, 4-bromobutyl, carboxymethyl, 2-carboxyethyl, 3-carboxypropyl, 4-carboxybutyl, 1,2-dicarboxyethyl, carbamoylmethyl, 2-carbamoylethyl, 3-carbamoylpropyl, 4-carbamoylbutyl, methoxycarbonylmethyl, ethoxycarbonylmethyl, 2-methoxycarbonylethyl, 2-ethoxycarbonylethyl, 3-methoxycarbonylpropyl, 3-ethoxycarbonylpropyl, 4-methoxycarbonylbutyl, 4-ethoxycarbonylbutyl, ethylcarbonyloxymethyl, ethylcarbonyloxymethyl, 2-methylcarbonyloxyethyl, 2-ethylcarbonyloxyethyl, 3-methylcarbonoyloxypropyl, 3-ethylcarbonyloxypropyl, 4-methylcarbonyloxybutyl, 4-ethylcarbonyloxybutyl, sulfomethyl. 2-sulfoethyl, 3-sulfopropyl, 4-sulfobutyl, sulfamoylmethyl, 2-sulfamoylethyl, 3-sulfamoylpropyl and 4-sulfamoylbutyl. Of these preferable R₁ is hydrogen.

With respect to the symbol R₄, the group of -W-R₄ stands for an acyl group including alkyl-, alkenyl- or phenyl-carbonyl groups such as acetyl, propionyl and benzoyl and alkyl-, alkenyl- or phenyl-sulfonyl groups such as methanesulfonyl and p-toluenesulfonyl. The alkyl, alkenyl and phenyl in the acyl group can be substituted by carboxy or sulfo. Such substituted acyl groups include, for example, carboxyethylcarbonyl, carboxyvinylcarbonyl, o-, m- or p-carboxyphenylcarbonyl, o-, m- or p-sulfophenylcarbonyl and o-, m- or p-sulfophenylsulfonyl.

With respect to the symbols X₁ and X₂, the halogen is preferably chlorine or bromine, the alkyl and alkoxy includes those having 1 to 4 carbon atoms such as methyl, ethyl and ethoxy, respectively.

Of these represented by X₁ and X₂, chlorine and bromine are particularly preferred. With respect to the symbols Y and Y₁, the alkylene includes these having 1 to 4 carbon atoms, preferably (̵CH₂)̵₂, (̵CH₂)̵₃ and (̵CH₂)̵₂O(̵CH₂)̵₂.

The phenylene includes those unsubstituted or substituted once or twice by methyl, ethyl, methoxy, ethoxy, chlorine, bromine, nitro, carboxy or sulfo, and the naphthylene includes those unsubstituted or substituted once by sulfo. Examples thereof are: 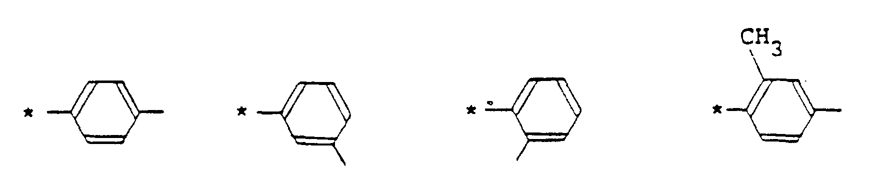 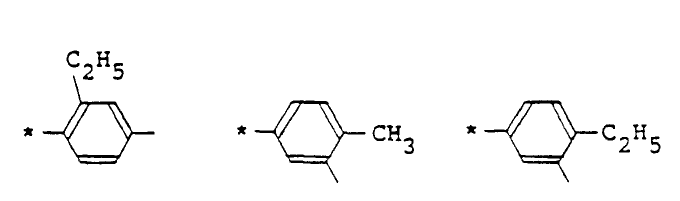 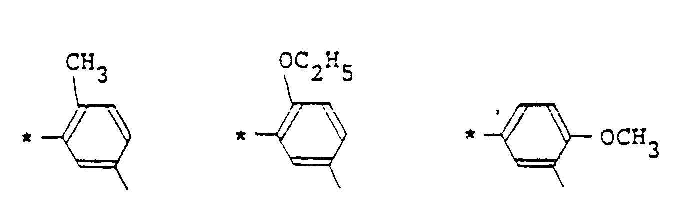 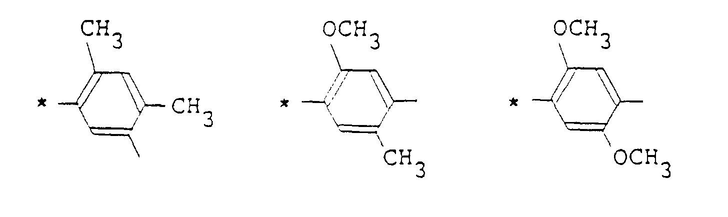 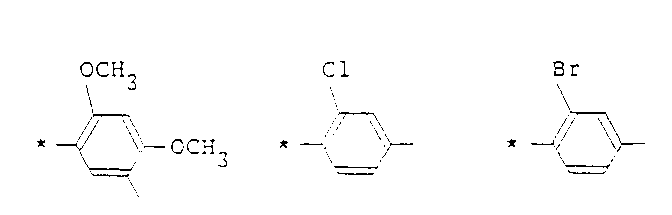 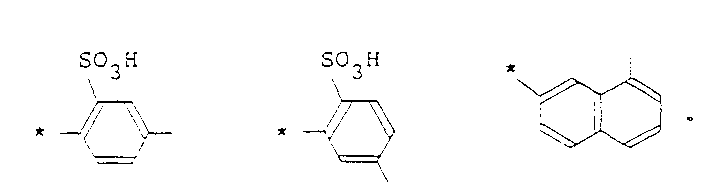 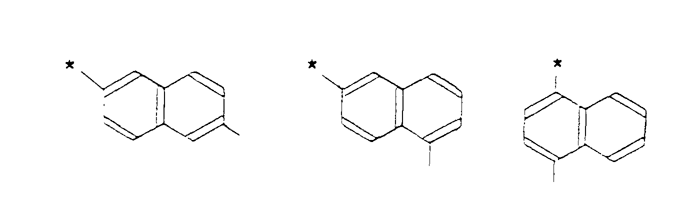 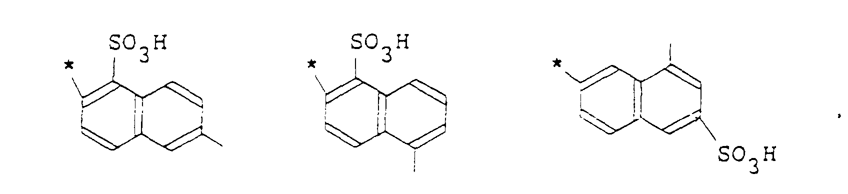 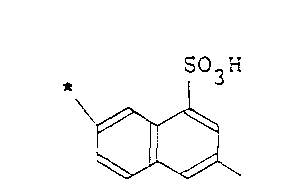 In the above formulas, the linkage marked with* bonds to the group

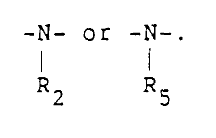

With respect to the symbols Z' and Z", the group capable of being split by the action of an alkali is well known in this art and includes, for example, sulfuric acid ester, thiosulfuric acid ester, phosphoric acid ester, acetic acid ester and other ester groups, and halogen atoms. Among those represented by Z and Z₁, particularly, preferred are -SO₂CH=CH₂ and -SO₂CH₂CH₂OSO₃H.

With respect to the symbol Q, the halogen includes fluorine, chlorine and bromine. Of these, preferred are fluorine and chlorine. The alkoxy includes, for example, methoxy and ethoxy. The unsubstituted or substituted amino which is also represented by Q₁, Q₂ and Q₃ includes amino, alkylamino, N,N-dialkylamino, cycloalkylamino, aralkylamino, arylamino and N,N-disubstituted amino such as N,N-dialkylamino, N-alkyl-N-cycloalkyl and N-alkyl-N-arylamino, as well as heterocyclic ring-containing amino which heterocyclic ring may be further addition-condensed with a homocyclic ring and N-heterocyclic ring-constituting amino which may contain additional hetero atoms (in the present invention, the term "N-heterocyclic ring-constituting amino" is intended to mean such that the nitrogen atom of the amino is a member forming a heterocyclic ring).

In the above definition with respect to the amino, the alkyl is a straight or branched one preferably having 1 to 4 carbon atoms, and preferable examples of the cycloalkyl, aralkyl and aryl are cyclohexyl, benzyl, phenethyl, phenyl and naphthyl, respectively. Examples of the heterocyclic ring are furan, thiophene, pyrazole, pyridine, pirimidine, quinoline, benzimidazole, benzthiazole and benzoxazole. The N-heterocyclic ring-constituting amino is preferably a six-membered ring which may contain additional hetero atoms such as nitrogen, oxygen and sulphur. The above-mentioned alkyl, cycloalkyl, aralkyl, aryl, heterocyclic ring and N-heterocyclic ring may be unsubstituted or substituted by halogen, nitro, cyano, trifluoromethyl, sulfamoyl, carbamoyl, C₁ to C₄ alkyl, C₁ to C₄ alkoxy, acylamino, ureido, hydroxyl, carboxy, sulfomethyl and sulfo.

Preferable examples of the amino represented by Q are -NH₂, methylamino, hydroxymethylamino, ethylamino, propylamino, butylamino, hexylamino, β-methoxyethylamino, β-ethoxyethylamino, γ-methoxypropylamino, N,N-dimethylamino, N,N-di-hydroxymethylamino, N,N-diethylamino. β-chloroethylamino, β-cyanoethyiamino, N,N-di-β-hydroxyethylamino, β-hydroxyethylamino, γ-hydroxypropylamino, benzylamino, phenethylamino, cyclohexylamino, N-methyl-N-phenylamino, N-ethyl-N-phenylamino, N-propyl-N-phenylamino, N-butyl-N-phenylamino, N-β-cyanoethyl-N-phenylamino, N-ethyl-2-methylphenylamino, N-ethyl-4-methylphenylamino, N-ethyl-3-sulfophenylamino, N-ethyl-4-sulfophenylamino, phenylamino, toluidino, xylidino, chloroanilino, anisidino, phenetidino, 2-, 3- or 4-sulfoanilino, 2,4- or 2,5-disulfoanilino, sulfomethylanilino, N-sulfomethylanilino, 3- or 4-carboxyphenylamino, 2-carboxy-5-sulfophenylamino, 2-carboxy-4-sulfophenylamino, 2-methoxy-5-sulfophenylamino, 2-methyl-5-sulfophenylamino, 4-sulfonaphthyl-(1)-amino, 3,6-disulfonaphthyl-(1)-amino, 3,6,8-trisulfonaphthyl-(1)-amino, 4,6,8-trisulfonaphthyl-(1 )-amino, 6-sulfonaphthyl-(2)-amino, 4,8-disulfonaphthyl-(2)-amino, 3,6,8-trisulfonaphthyl-(2)-amino, 4,6,8-trisulfonaphthyl-(2)-amino, pyridyl-(2)-amino, morpholino, piperidino, piperazino, N-β-hydroxyethyl-N-methylamino, N-ethyl-N-hydroxymethylamino, carboxymethyl amino, β-carboxyethylamino, β-sulfoethylamino and N-(β-sulfoethyl)-N-methylamino.

Among the dioxazine compounds in accordance with the present invention, preferred embodiments are those having sulfo as R' in the aforesaid formula (I-1), those having hydrogens as both R₁ and R₃ in the formulas (I-2) and (I-3).

The dioxazine compound of the formulae I-1, I-2, I-3 and I-4 may be in the form of a free acid or a salt of an alkali metal or alkaline earth metal. Of those metal salts, preferred are sodium, potassium and lithium salts.

The dioxazine compound of the formulae I-1, I-2, I-3 and I-4 can be produced in the following manner.

The intermediate dioxazine compound of the formula (II), the amine of the formula (III) with or without the compound of the formula (IV) can be subjected to condensation reactions in an optional order with a 1,3,5-trihalogeno-s-triazine, thereby obtaining the desired dioxazine compound of the formulae I-1, I-2, I-3 and I-4.

Although any of the condensation reactions can be carried out under optional reaction conditions and the order of the condensation reactions is not limited, the first condensation can be preferably carried out at a temperature of -10° to 40°C and at a pH ranging from 2 to 9, the second condensation at a temperature of 0° to 70°C and at a pH ranging from 2 to 9, and if any, the third condensation at a temperature of 10° to 100°C and at a pH ranging from 2 to 7. The order of the condensation reactions can be determined preferably in such a manner that any compound having the lowest reactivity to the 1,3,5-trihalogeno-s-triazine is subjected to first condensation reaction.

The intermediate dioxazine compound of the formula (II) can be prepared in a conventional manner, for example, in the following manner.

A 1,4-benzoquinone represented by the following formula (V), 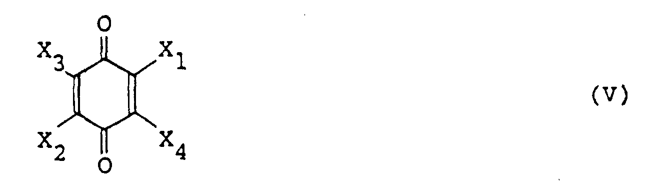 wherein X₁ and X₂ are as defined above, and X₃ and X₄ are each halogen, can be subjected to condensation reaction with a diaminobenzene represented by the following formula (VI) in the free acid form, 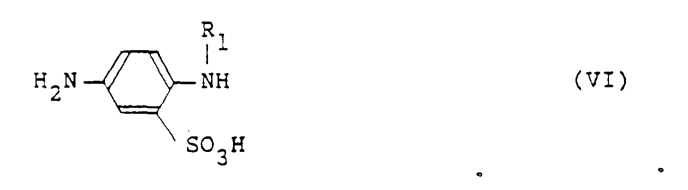 wherein R₁ is as defined above. and a sulfodiaminobenzene represented by the following formula (VII) in the free acid form, 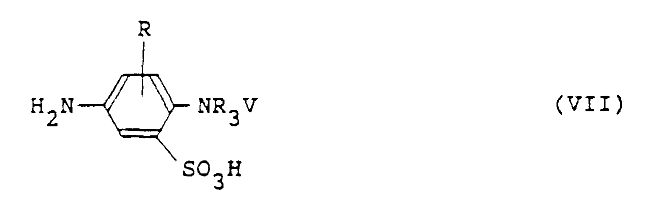 wherein R, R₃ and V are as defined above, thereby obtaining a dianilide compound represented by the following formula (VIII) in the free acid form, 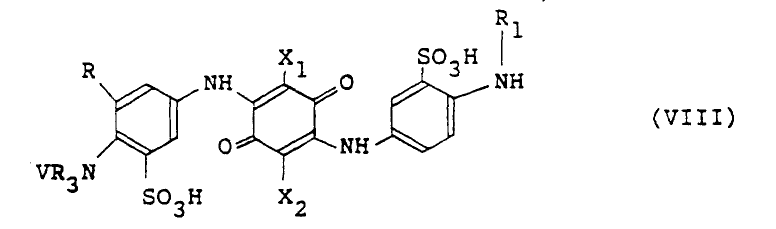 wherein R, R₁, R₃, V, X₁ and X₂ are as defined above. Successively, the dianilide compound can be subjected to cyclization reaction, if necessary in the presence of an oxidizing agent, thereby obtaining the desired intermediate dioxazine compound (II).

In the above manner, the diaminobenzene (VI) may be replaced by another diaminobenzene represented by the following formula (IX) in the free acid form, 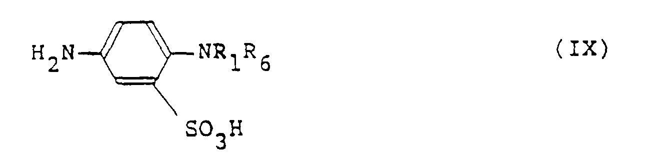 wherein R is as defined above, and R₆ is alkyl such as methyl, ethyl and propyl, to obtain a dianilide represented by the following formula (X) in the free acid form. 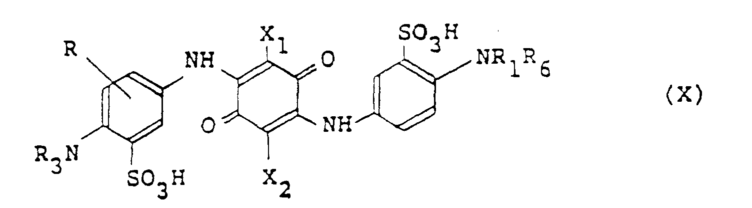 wherein R, R₁, R₃, R₆, V, X₁ and X₂ are as defined above The dianilide can be simultaneously subjected to cyclization and dealkylation, if desired in the presence of an oxidizing agent, thereby obtaining the desired intermediate dioxazine compound (II).

In case where the desired intermediate dioxazine compound (II) is the one having unsubstituted or substituted alkyl groups as both R₃ and V, it can be prepared also by alkylating the dianilide (VIII) or the intermediate dioxazine compound (II) which have been obtained using the sulfodiaminobenzene of the formula (VII) wherein both R₃ and V are hydrogen atoms.

In case where the desired intermediate dioxazine compound (II) is the one having sulfo as R, or the acyl group of the formulae I-1, I-2, I-3 and I-4 as V it can be prepared also by sulfonating or acylating the intermediate dioxazine compound (II) having hydrogen as R or V, respectively.

In the present invention, when at least one of R₃ and V is unsubstituted or substituted alkyl, or V is the acyl group (1), such dioxazine compound of the formulae I-1, I-2, I-3 and I-4 can be produced also by alkylating or acylating the intermediate dioxazine compound (II) having hydrogen as at least one of R₃ and V, or V, respectively.

In addition, the dioxazine compound represented by the formula (I-2) can be also produced by subjecting a 2,4,6-trihalogeno-s-triazine to condensation reactions with an intermediate dioxazine compound which is represented by a formula corresponding to the formulae I-1, I-2, I-3 and I-4, provided that V is hydrogen and Q is replaced by Q₃, and which can be prepared in any manner described above, and respective amine compounds of the formulas H-Q, and H-Q₂ wherein Q₁ and Q₂ are as defined above, in an optional order. In case where Q₂ is the same as Q₃ in their meanings, such dioxazine compound can be produced also by reacting an intermediate tioxazine compound which is represented by a formula corresponding to the formula (I-2), provided that Q₂ and Q₃ are each halogen, and which can be prepared in any manner described above, with two molar amounts of an amine-compound represented by H-Q₃ in which Q₃ is as defined above.

Further, the dioxazine compound of the formula (I-3) can be produced also in the following manner. A 2,4,6-trihalogeno-s-triazine can be subjected to condensation reactions with the intermediate dioxazine compound (II) wherein V is hydrogen, the amine (III) and the amine compound of the formula H-Q₃ in which Q₃ is as defined above, in an optional order. In a course of the above condensation reaction, intermediate dioxazine compounds represented by the following formulas (II-1), (II-2), (II-3) and (II-4) in their free acid forms, 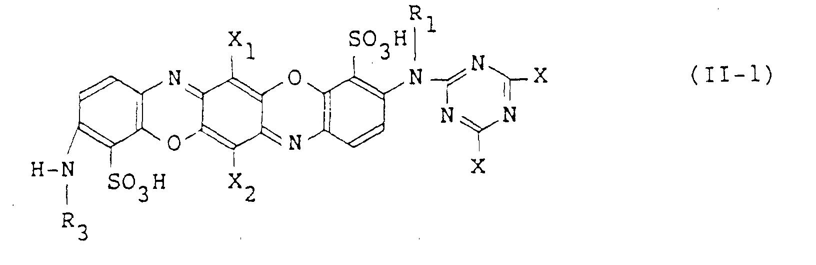 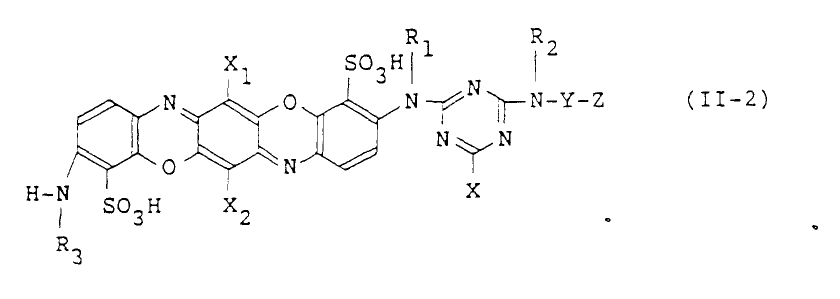 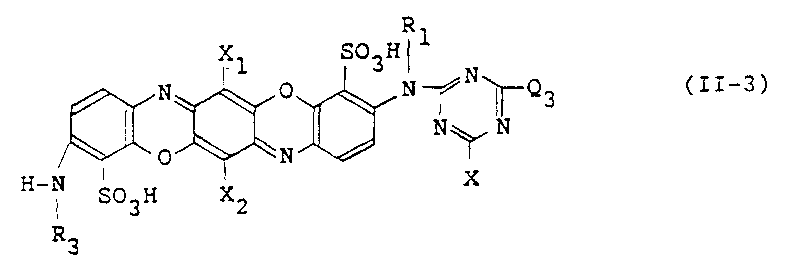 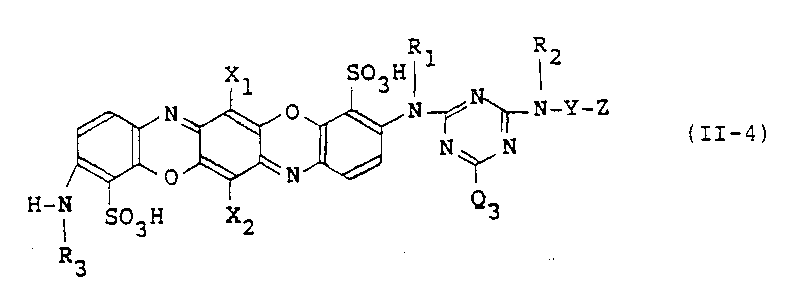 wherein X is halogen, X₁, X₂, R₁, R₂, R₃, Q₃, Y and Z are as defined above, can be obtained. Successively, the intermediate dioxazine compounds can be subjected to acylation in a conventional manner, and the resulting compounds corresponding to the formulas (II-1), (II-2) and (II-3) can be further subjected to condensation reaction with the remaining amine or amines, whereby the desired dioxazine compound of the formula (I-3) can be produced.

The dioxazine compound I-1, I-2, I-3 and I-4 in accordance with the present invention is fiber-reactive and useful for dyeing or printing hydroxyl group-containing and amide group-containing materials. The materials are favorably in a fibrous form including unmixed or mixed fibers.

The hydroxyl group-containing materials include natural or synthetic hydroxyl group-containing materials such as cellulose fiber materials, regenerated products thereof and polyvinyl alcohol. Examples of the cellulose fiber materials are cotton and other vegetable fibers such as linen, hemp, jute and ramie fibers. Examples of the regenerated cellulose fibers are viscose staple and filament viscose.

The amide group-containing materials include synthetic or natural polyamide and polyurethane. Examples of the materials, particularly in the fibrous forms, are wool and other animal furs, silk, leather, polyamide-6,6, polyamide-6, polyamide-11 and polyamide-4.

The dyeing may be carried out in a suitable manner, which can be selected-from conventional manners depending on the physical and chemical properties of said fiber materials.

For example, cellulose fiber materials can be dyed using the present compound by an exhaustion dyeing, padding including cold batch-up dyeing or printing method.

The exhaustion dyeing can be carried out at a relatively low temperature in the presence of an acid binding agent such as sodium carbonate, trisodium carbonate, trisodium phosphate and sodium hydroxide,
if desired using a neutral salt such as sodium sulfate and sodium chloride optionally together with dissolving assistants, penetrants or level dyeing agents. The neutral salt which can be used for promoting exhaustion of the dye may be added to a dye bath at the time when a bath temperature reaches a level desired for the dyeing or prior thereto. Alternatively the neutral salt may be added thereto dividedly.

The padding can be carried out by padding the fiber materials at ambient temperature or an elevated temperature, and after drying, steaming or dry-heating the materials to perform the dye-fixation.

The printing can be carried out in a one-phase or two-phase manner. The one-phase printing may be conducted by printing the fiber materials with a printing paste containing an acid binding agent such as sodium hydrogen carbonate, followed by steaming at a temperature of 100° to 160°C. The two phase printing may be conducted by printing the fiber materials with a neutral or weakly acidic printing paste, and passing the materials through a hot alkaline bath containing an electrolyte or over-padding the materials with an alkaline padding liquor containing an electrolyte, followed by a steaming or dry-heating treatment.

For the preparation of the printing paste, a paste or emulsifier such as sodium alginate, starch ether and the like may be used, if desired, together with a conventional auxiliary agent such as urea and/or dispersing agent.

The acid binding agent useful for fixing the compound of the present invention on the cellulose fiber materials includes water-soluble basic salts consisting of alkali or alkaline earth metals and inorganic or organic acids or compounds capable of liberating alkalis under heating conditions. Preferred are alkali metal hydroxides and alkali metal salts of inorganic or organic acids having a weak or medium strength. Particularly preferred are sodium salts and potassium salts. Examples thereof are sodium hydroxide, potassium hydroxide, sodium hydrogencarbonate, sodium carbonate, sodium formate, potassium carbonate, sodium dihydrogenphosphate, disodium hydrogenphosphate, trisodium phosphate, sodium silicate and sodium trichloroacetate .

The dyeing of natural or synthetic polyamide and polyurethane fiber materials can be carried out by performing exhaustion in an acid or weak acid bath, while controlling the pH value, and making the bath neutral, or in some cases alkaline to perform the fixation. The dyeing temperature ranges usually from 60° to 120°C. In order to achieve a level dyeing, there may be used a conventional level dyeing agent such as a condensation product between cyanuric chloride and 3 times by mole of aminobenzenesulfonic acid or aminonaphthalenesulfonic acid, or an addition product between stearylamine and ethylene oxide.

The present dioxazine compound I-1, I-2, I-3 and I-4 can be characterized by excellent dye performances in the dyeing and printing of fiber materials, particularly those such as cellulose fiber materials. For example, the compound can give a dyed or printed product excellent in light fastness, perspiration-light fastness, wet fastness such as washing resistance, peroxide-washing resistance, perspiration resistance and acid-hydrolysis resistance, and alkali fastness, chlorine fastness, abrasion fastness and iron fastness.

The dioxazine compound I-1, I-2, I-3 and I-4 can also exhibit excellent build-up, level-dyeing and wash-off properties and high solubility as well as high exhaustion and fixation percentages. Moreover, the dioxazine compound I-1, I-2, I-3 and I-4 can hardly be affected by changes in a dyeing temperature and dyeing bath ratio, so that a dyed product with a constant quality can be obtained with superior reproducibility.

Moreover, the dioxazine compound I-1, I-2, I-3 and I-4 can be characterized in properties such that the compound I-1, I-2, I-3 and I-4 is hard to change in its quality even when brought into contact with a basic substance-during storage, and products dyed or printed with the compound I-1, I-2, I-3 and I-4 are hard to change in their color even when they are subjected to fix treatment or resin-finishing.

The present invention is illustrated in more detail with reference to the following Examples, which are only illustrative, and in which parts and % are by weight.

### Example 1

1,4-Phenylenediamine-2,6-disulfonic acid (26.8 parts) and 1,4-phenylenediamine-2-sulfonic acid (18.8 parts) were dissolved in water (500 parts), and chloranil (24.6 parts) was added thereto. The mixture was adjusted to a pH from 4 to 8 at ambient temperature and stirred to complete the reaction. Thereafter, the reaction mixture was salted out, and the crystals produced were isolated and dried to obtain a dianilide represented by the following formula in the free acid form.

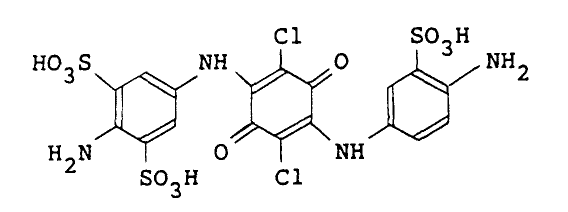

The dianilide (62.9 parts) was added to oleum of 10 to 30% strength (1500 parts) within a temperature of 0° to 15°C, and the mixture was stirred at 15° to 40°C to complete the reaction. The reaction mixture was poured into ice water to produce crystals, which were then separated by filtration. The cake was mixed with water, and the mixture was adjusted to a pH ranging from 3 to 6 using aqueous sodium hydroxide solution and salted out using sodium chloride. The crystals were isolated on a filter to obtain a first intermediate dioxazine compound represented by the following formula in the free acid form.

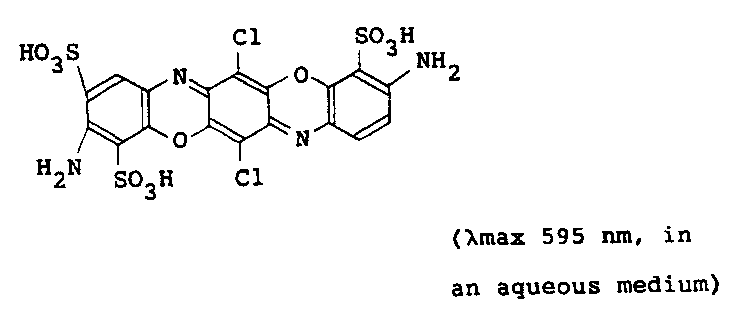

The intermediate dioxazine compound (62.5 parts) was dissolved in water (1500 parts), and cyanuric chloride (18.5 parts) was added thereto at a temperature of 5° to 30°C. The mixture was stirred to complete the reaction, while controlling the pH within a range of 2 to 7 using aqueous sodium carbonate solution. Successively, sulfanilic acid (17.3 parts) was added thereto, and the mixture was stirred at 30° to 50°C within that pH range. The reaction mixture was salted out using sodium chloride, and the crystals were separated to obtain a second intermediate dioxazine compound represented by the following formula in the free acid form. 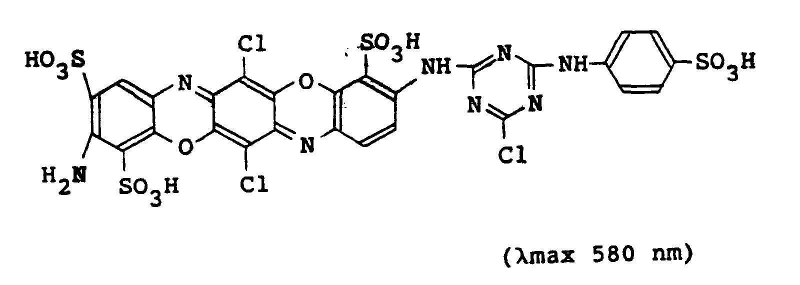 <

The above intermediate dioxazine compound (909.8 parts) was dissolved in water, and 1-aminobenaminobenzene-3-β-sulfatoethylsulfone (28.1 parts) was added thereto. The mixture was heated to 50° to 70 °C, while controlling the pH within a range of 2 to 5, and stirring was continued under the conditions described above to complete the reaction. Potassium chloride was added to the reaction mixture allowed to cool at ambient temperature, and crystals produced were separated on a filter to obtain a desired asymmetrlc dioxazine compound represented by the following formula in the free acid form.

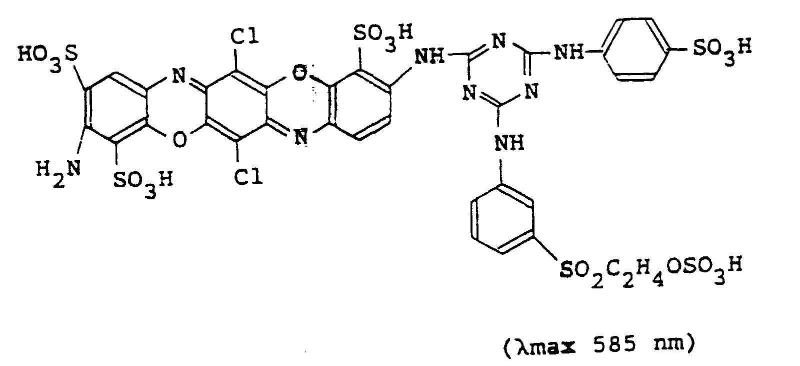

### Example 2

Example 1 was repeated, provided that bromanil was used in place of chloranil in an equimolar amount, thereby obtaining a dianilide, first and second intermediate dioxazine compounds and finally a desired asymmetric dioxazine compound in this order, the anilide having the following formula in the free acid form, 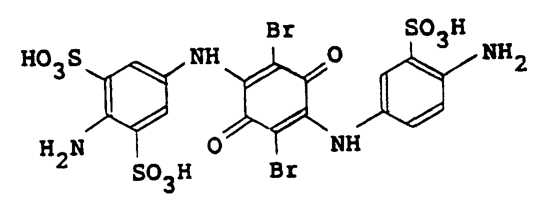 the first intermediate dioxazine compound having the following formula in the free acid form, 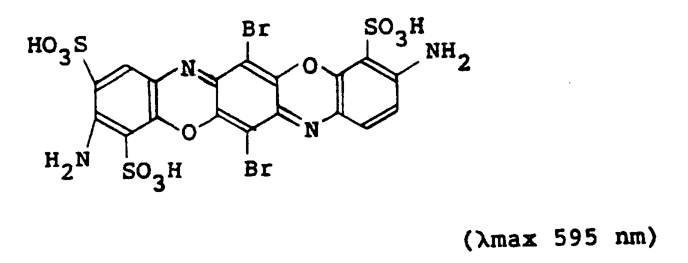 the second intermediate dioxazine compound having the following formula, 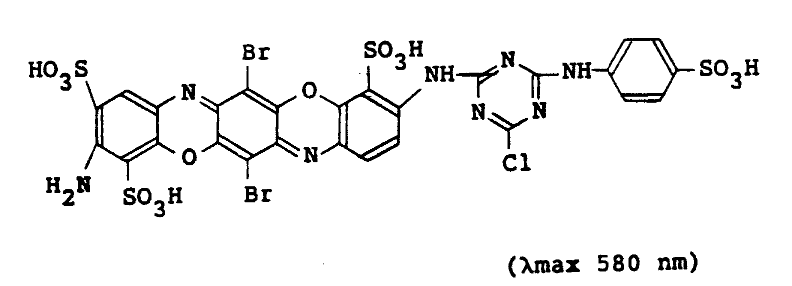 and the asymmetric dioxazine compound having the following formula in the free acid form.

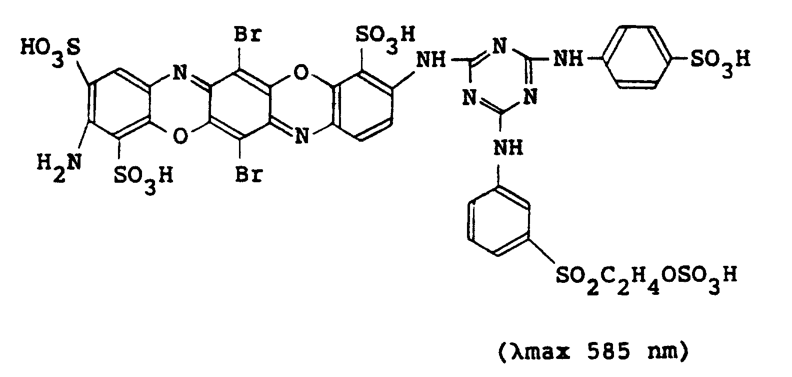

### Dyeing Example 1

Respective asymmetric dioxazine compounds obtained in Examples 1 and 2 (each of 0.1, 0.3 and 0.6 parts) were dissolved in water (200 parts) to prepare each dye bath. Sodium sulfate (10 parts) and cotton (10 parts) were added to the bath, and the bath was heated to 60°C. Sodium carbonate (4 parts) was added thereto, and dyeing was continued for 1 hour at that temperature. Thereafter cotton taken out was washed with water, soaped, again washed with water and then dried to obtain each dyed product of a blue color superior in fastness properties, particularly those such as chlorine fastness. The build-up property was found to be superior.

### Examples 3 to 50

Example 1 was repeated, provided that 1,4-phenylenediamine-2,6-disulfonic acid used in Example 1 was replaced by a phenylenediamine as shown in the following table to obtain a corresponding first intermediate dioxazine compound as shown in the table, and 1-aminobenzene-3-β-sulfatoethylsulfone used in Example 1 was replaced by an amine compound also as shown in the table, thereby obtaining a corresponding asymmetric dioxazine compound. A color obtained by dyeing cotton in a manner similar to that of Dyeing Example 1 using the asymmetric dioxazine compound was also as shown in the following table.

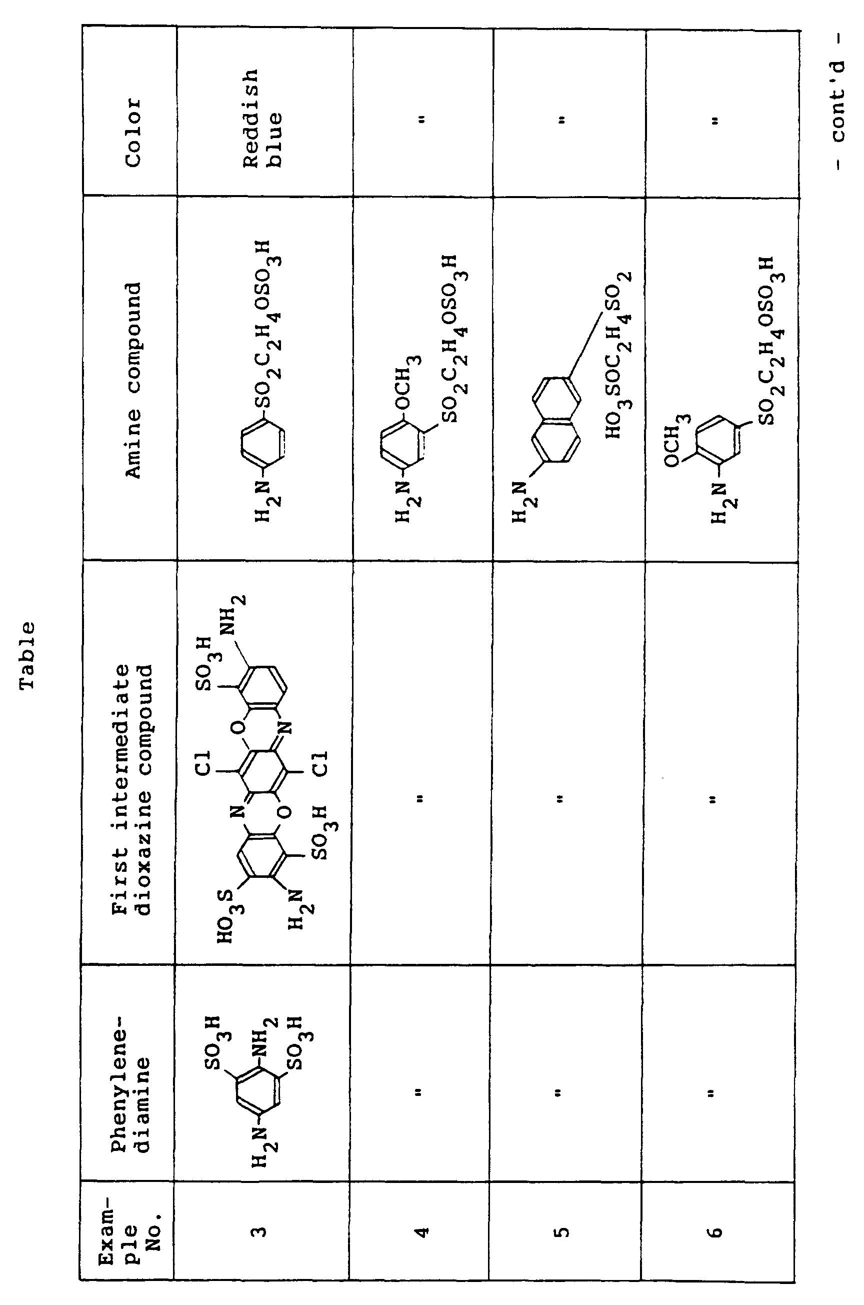

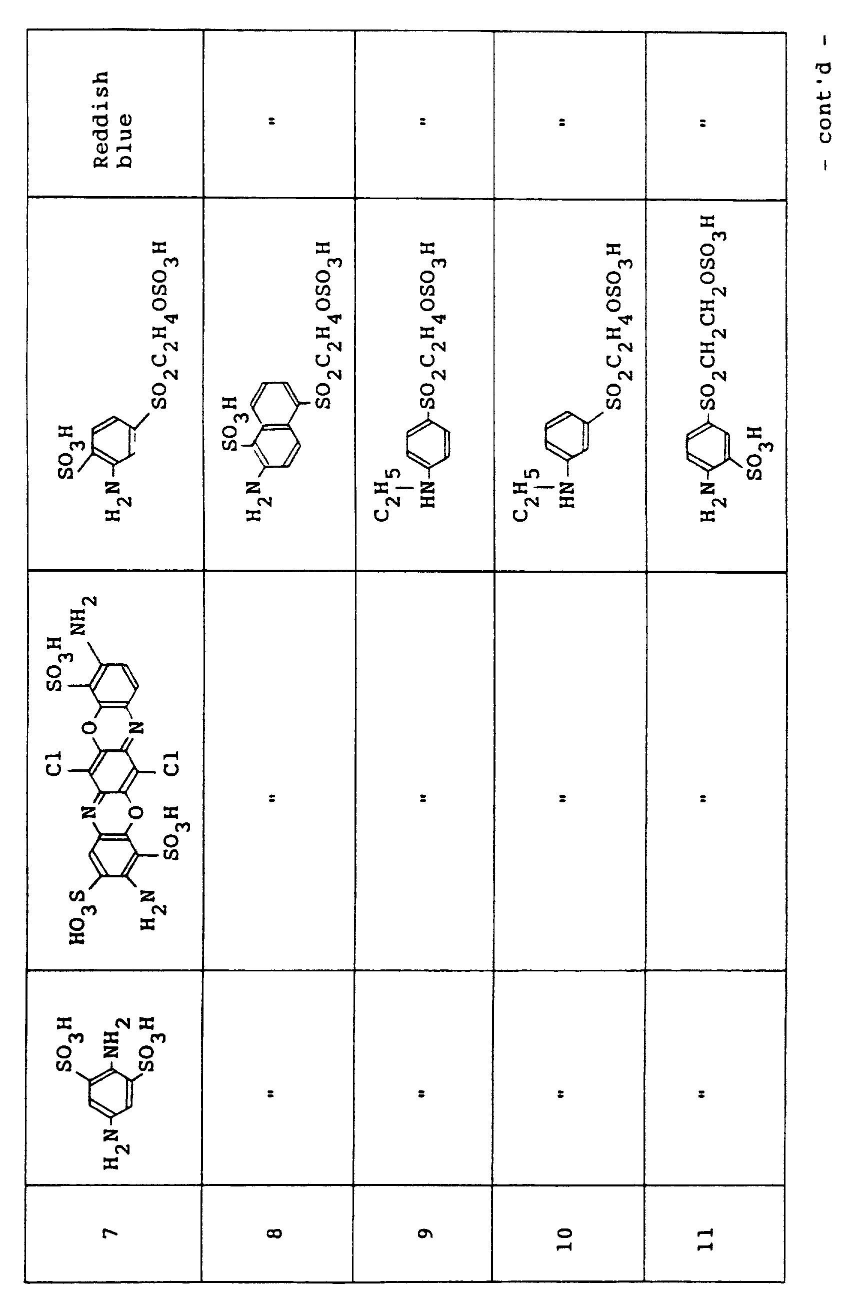

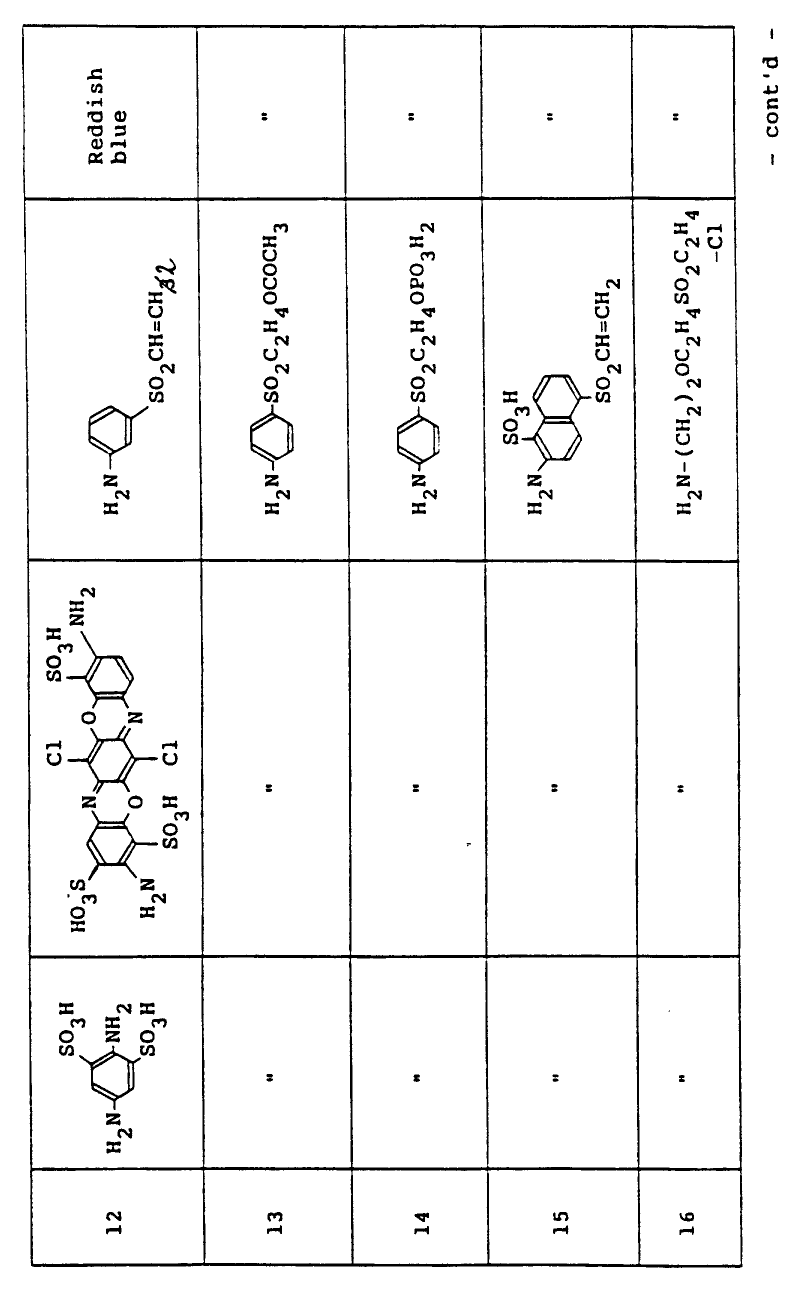

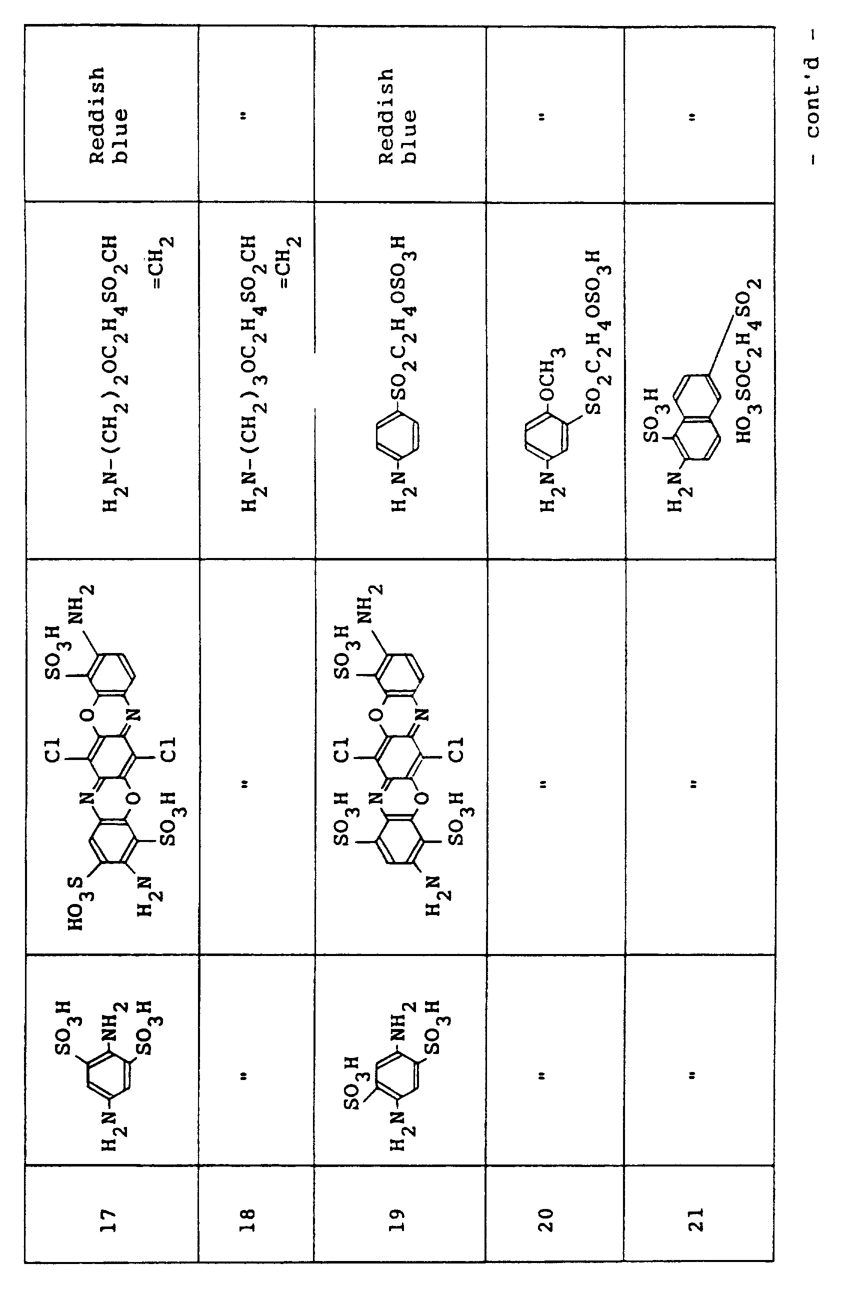

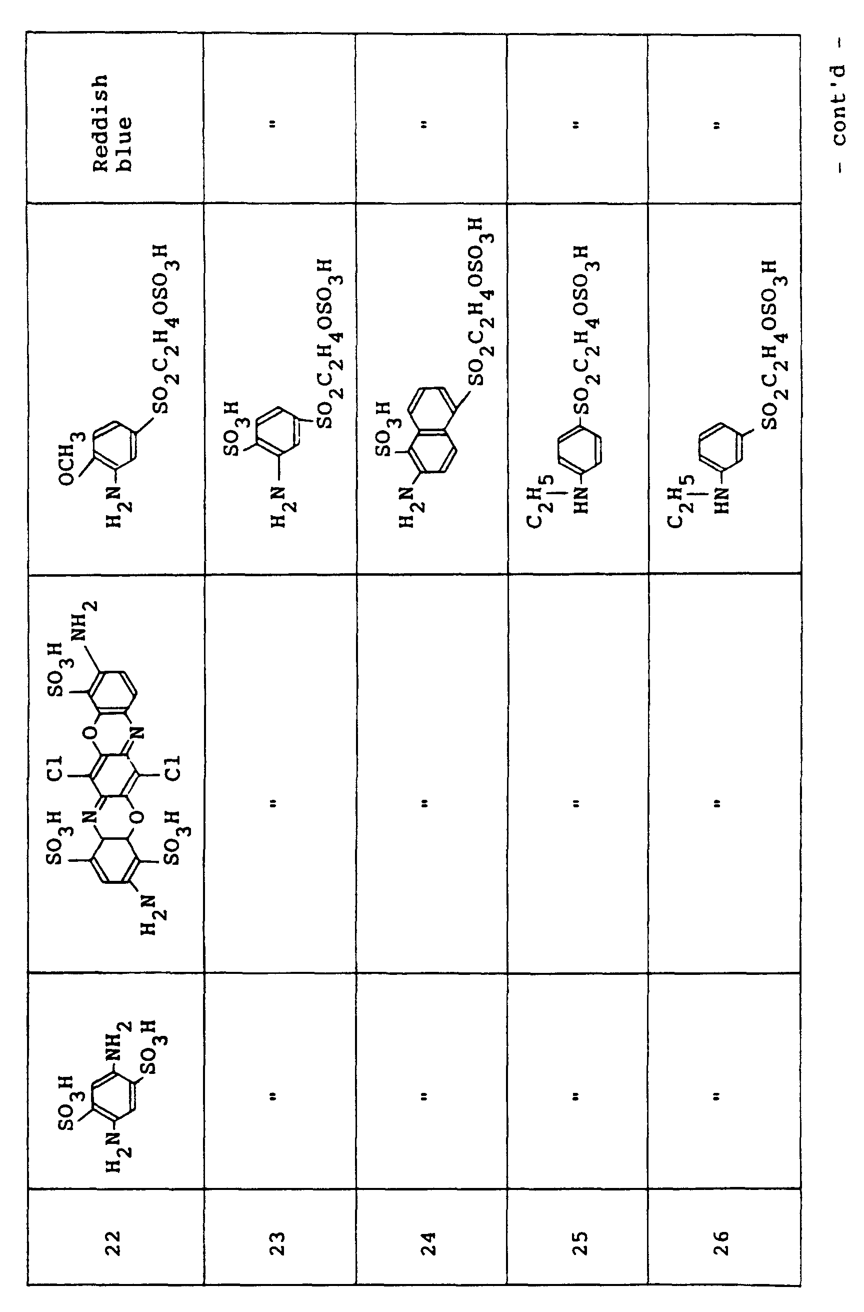

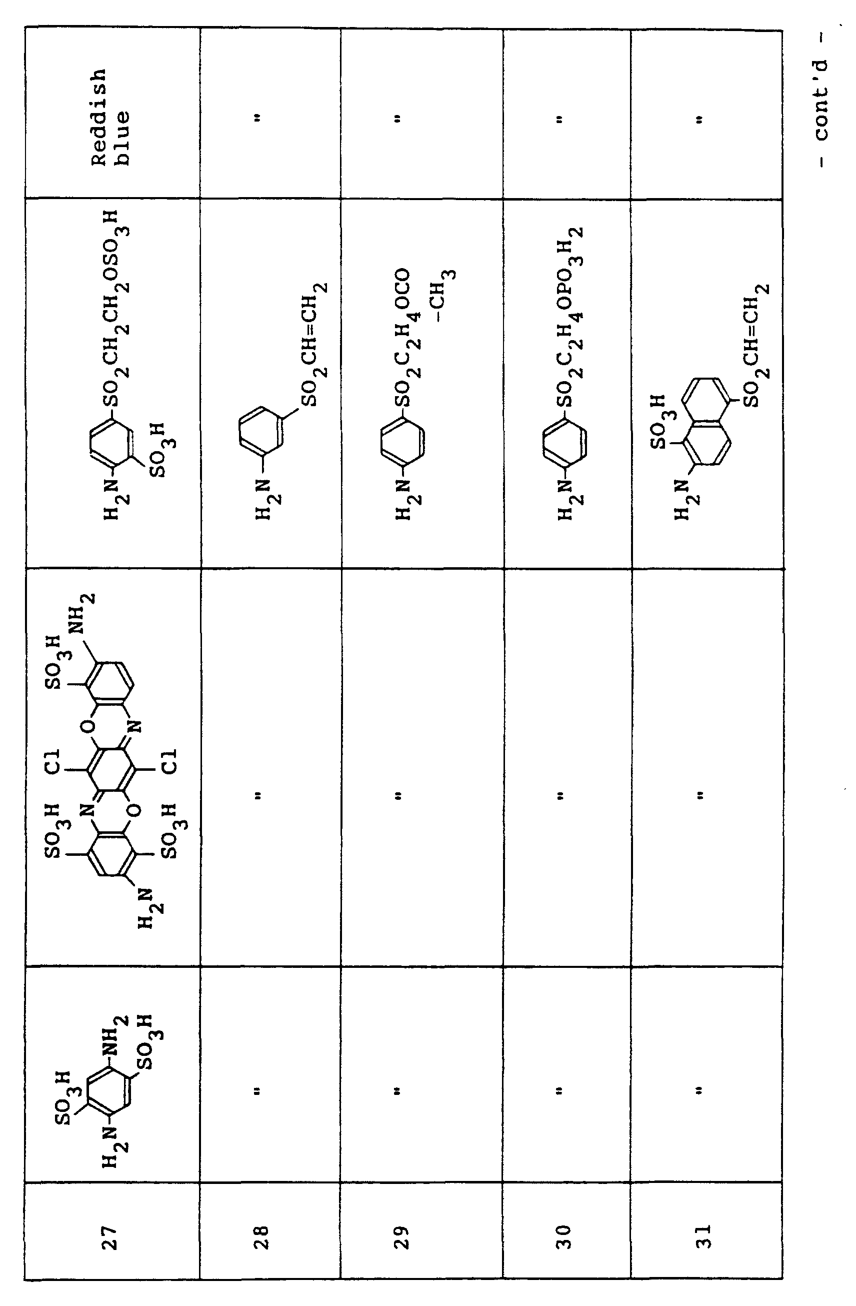

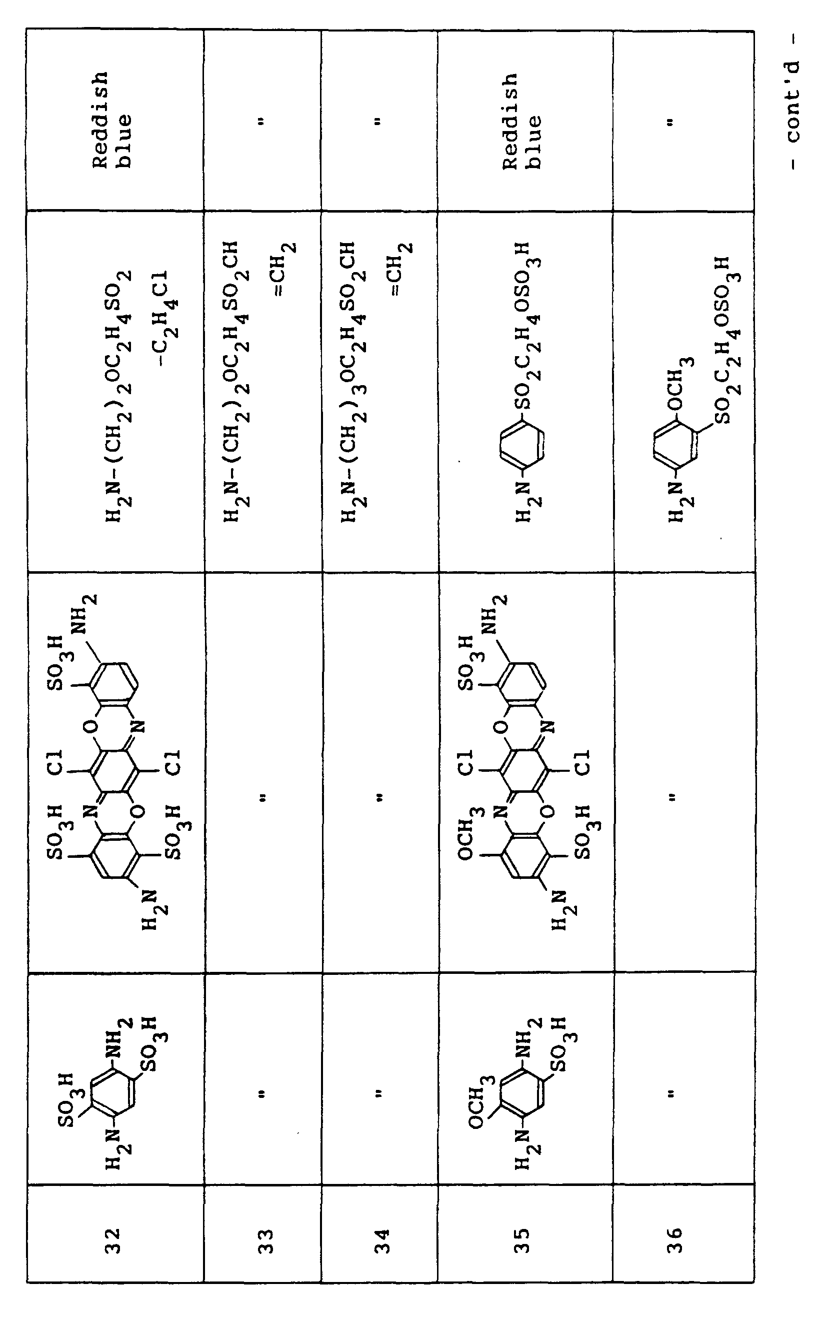

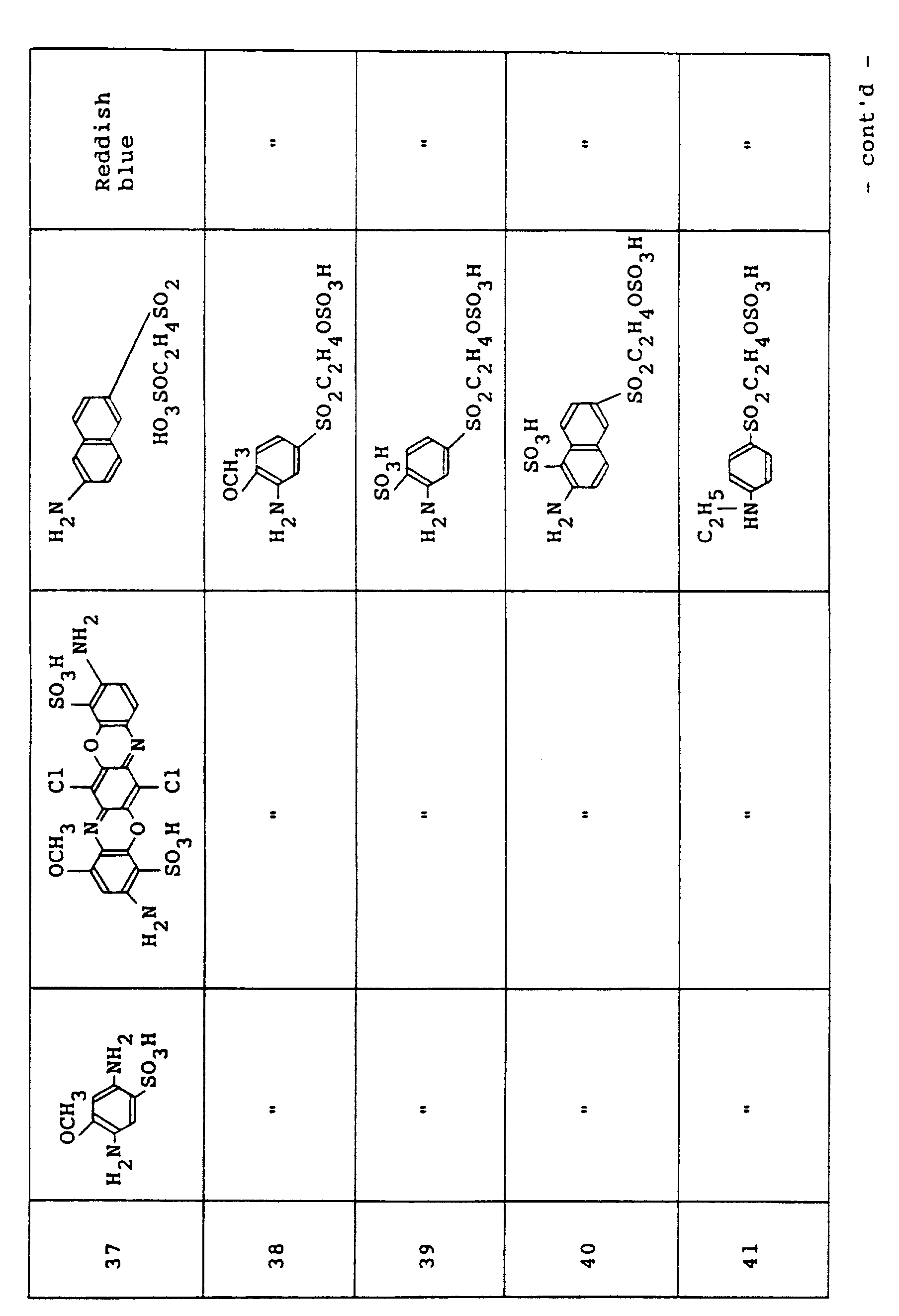

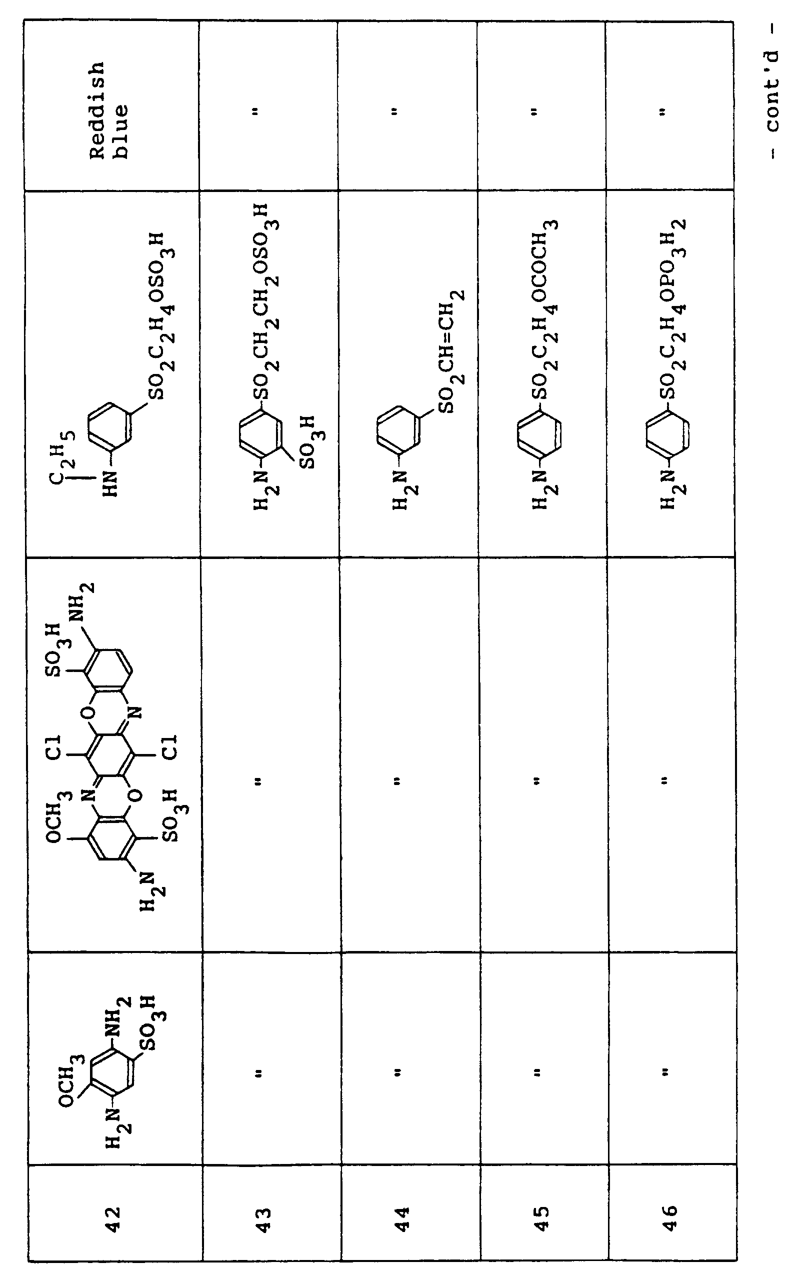

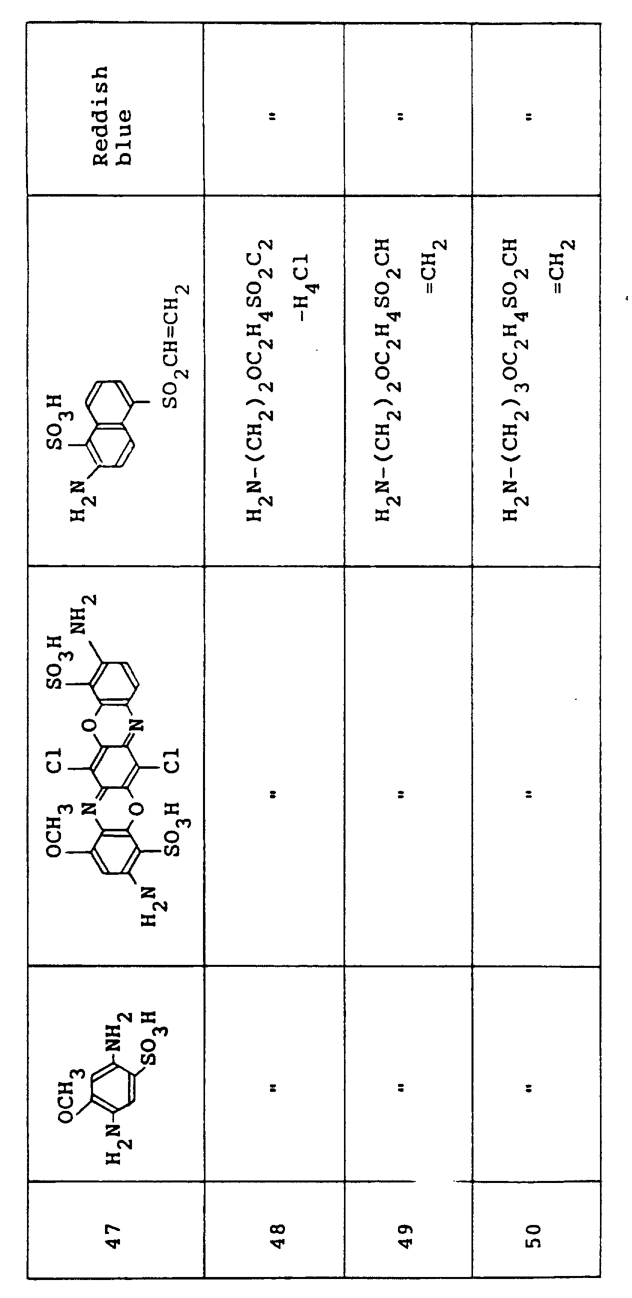

### Example 51

Example 1 was repeated, provided that sulfanilic acid used in Example 1 was replaced by those described below, thereby obtaining a corresponding asymmetric dioxazine compound.
(1) Orthanilic acid
(2) Methanilic acid
(3) 1-Aminonaphthalene-3,6-disulfonic acid
(4) 1-Aminonaphthalene-4,6,8-trisulfonic acid
(5) 2-Aminonaphthalene-4,8-disulfonic acid
(6) 2-Aminonaphthalene-3,6,8-trisulfonic acid
(7) Aniline-2,5-disulfonic acid
(8) Aniline
(9) m-Toluidine
(10) o-Anisidine
(11) Ammonia
(12) Ethylamine
(13) Ethanolamine
(14) β-Alanine
(15) Taurine
(16) N-Methyltaurine

### Example 52

Each of Examples 3 to 50 was repeated, provided that the sulfanilic acid was replaced by respective amine compounds (1) to (16) in Example 51, thereby obtaining a corresponding asymmetric dioxazine compound.

### Dyeing Example 2

Asymmetric dioxazine compound obtained in Examples 3 to 52 (each of 0.1, 0.3 and 0.6 parts) was dissolved respectively in water (200 parts) to prepare each dye bath. Sodium sulfate (10 parts) and cotton (10 parts) were added thereto. The bath was heated to 60°C, and then sodium carbonate (4 parts) was added thereto. Dyeing was continued for 1 hour at that temperature. Thereafter, the cotton taken out was washed with water, soaped, again washed with water and then dried to obtain each dyed product of a blue color superior in fastness properties, particularly those such as chlorine fastness. The build-up property was found to be superior.

### Example 53

Example 1 was repeated, provided that the sulfanilic acid and 1-aminobenzene-3-β-sulfatoethylsulfone to be subjected to condensation reaction were exchanged in the reaction order, thereby obtaining the same asymmetric dioxazine compound as in Example 1.

### Example 54

Aniline-2,5-disulfonic acid (25.3 parts) was dissolved in water (250 parts), while sodium carbonate being added to perform neutralization. To this solution was added cyanuric chloride (18.5 parts) at 5° to 30 °C, and the mixture was stirred at that temperature to complete the reaction. The first intermediate dioxazine compound (62.5 parts) which had been prepared in the same manner as in Example 1, was added to the above reaction mixture. The resulting mixture was allowed to react, while sodium carbonate being added to neutralize the hydrochloric acid produced, thereby obtaining the second intermediate dioxazine compound corresponding to that in Example 51 (7).

A mixture of the intermediate dioxazine compound obtained above and 1-aminobenzene-3-β-sulfatoethylsulfone (23.1 parts) was heated to 50° to 70°C, while controlling the pH within a range of 2 to 5, and stirred to complete the reaction. Salting out using potassium chloride and isolation of the crystals produced gave a desired asymmetric dioxazine compound represented by the following formula in the free acid form.

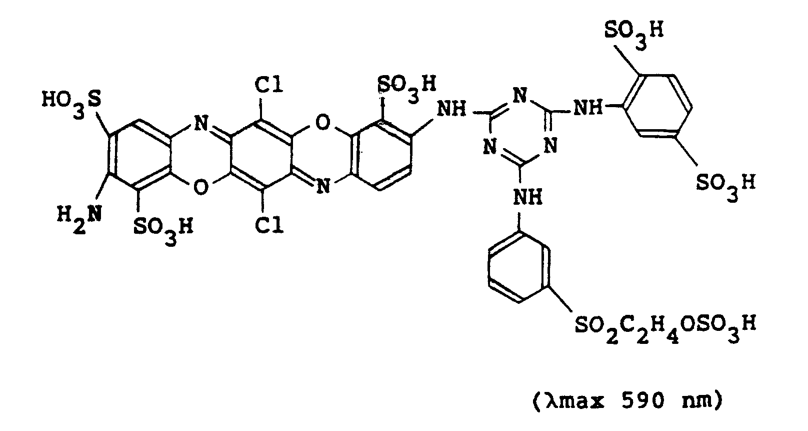

The dioxazine compound was found to be the same as that obtained in Example 51 (7).

### Examples 55 to 69

Example 1 was repeated to obtain an intermediate dioxazine compound which is as shown in the following table and which corresponds to the first intermediate dioxazine compound in Example 1, provided that 1,4-phenylenediamine-2,6-disulfonic acid used in Example 1 was replaced by a phenylenediamine as shown in the table. Using the intermediate dioxazine compound, any procedure described in Examples 1, 53 and 54 was carried out to obtain a corresponding asymmetric dioxazine compound, provided that sulfanilic acid used in Examples 1 and 53 and aniline-2,5-disulfonic acid used in Example 54 were replaced by a compound (IV) and a phenylenediamine as shown in the table, respectively and 1-aminobenzene-3-β-sulfatoethylsulfone was replaced by an amine compound as shown in the following table.

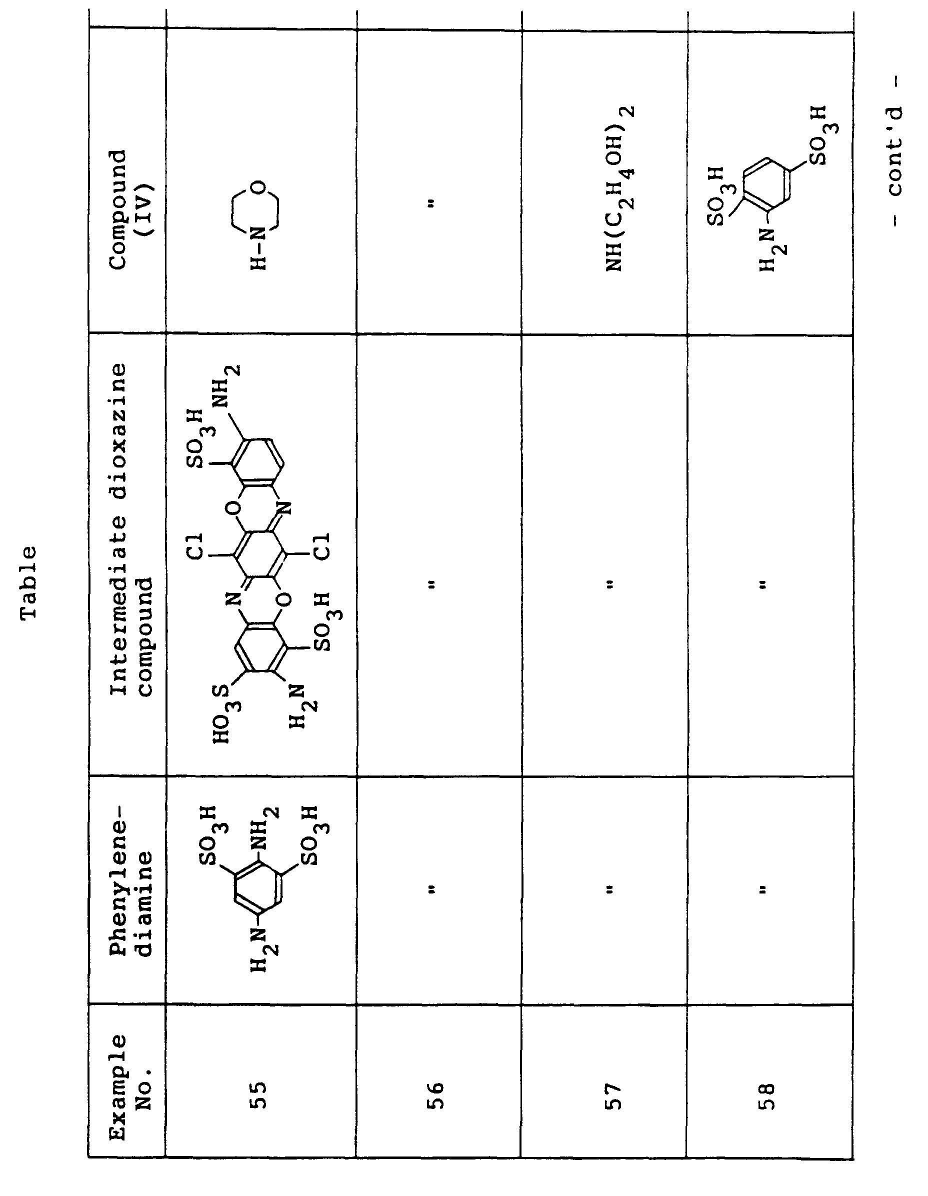

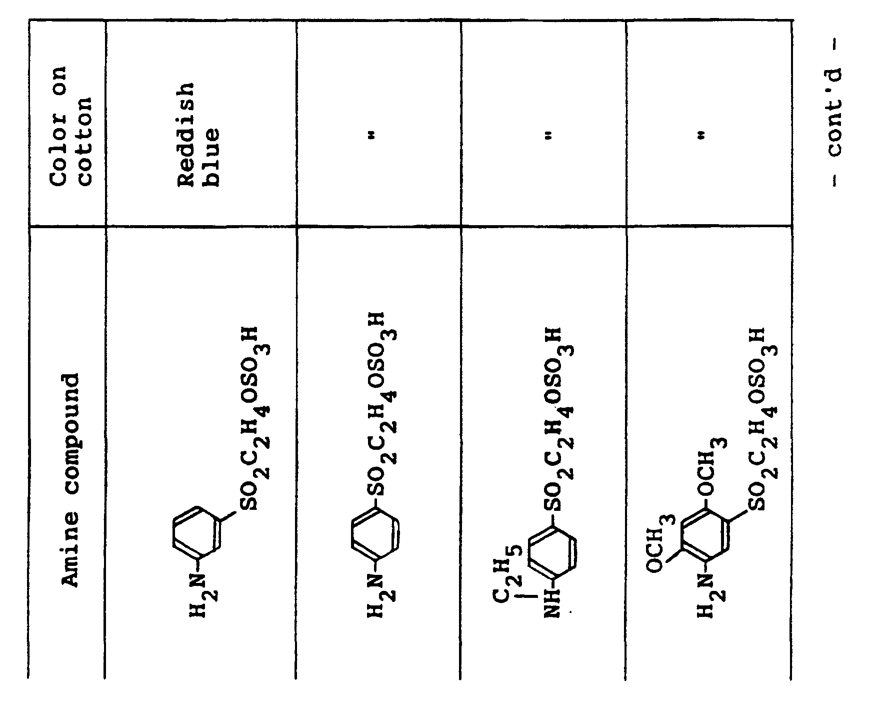

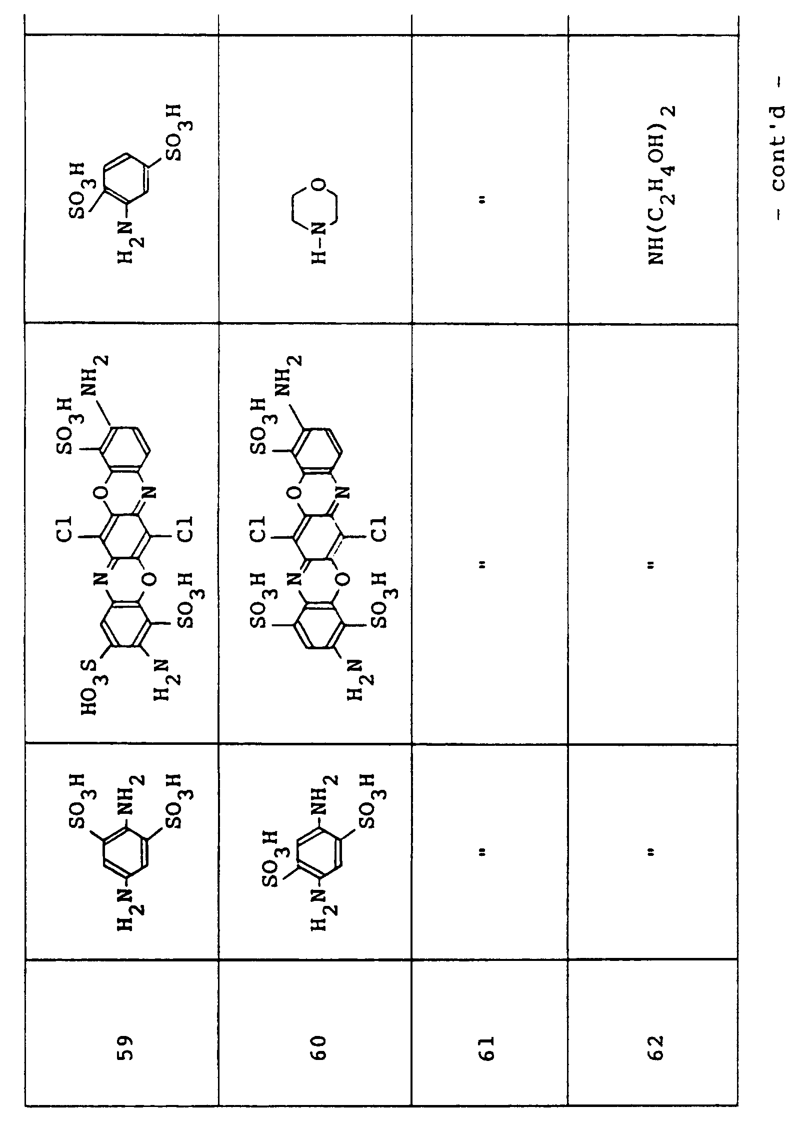

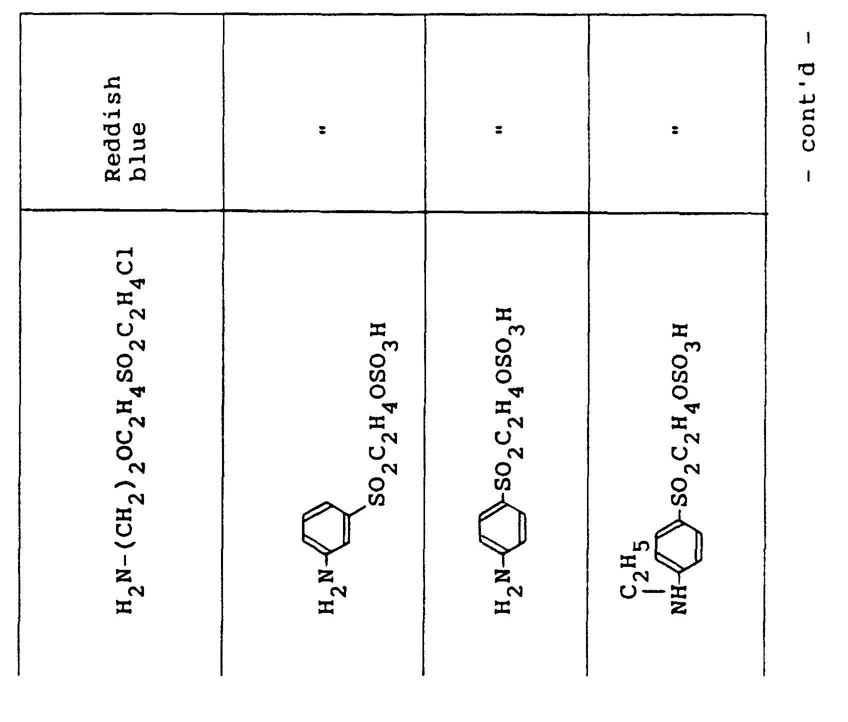

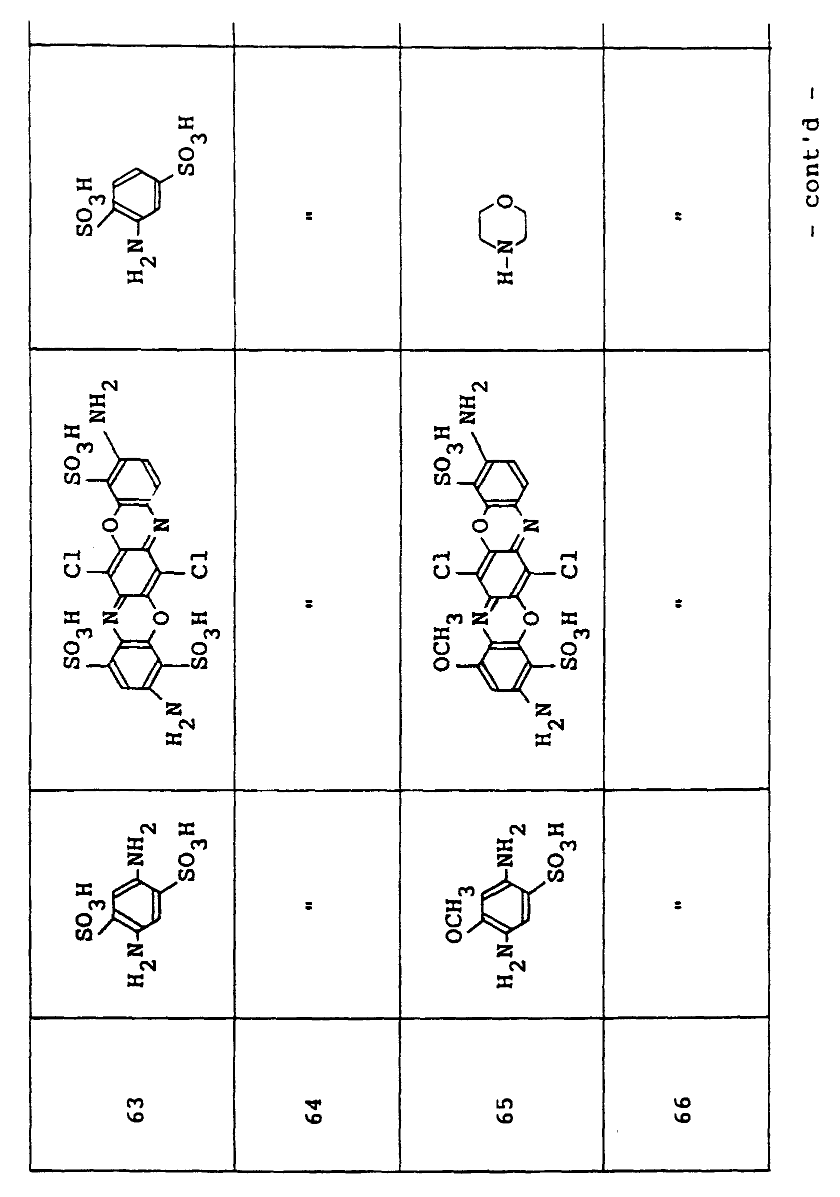

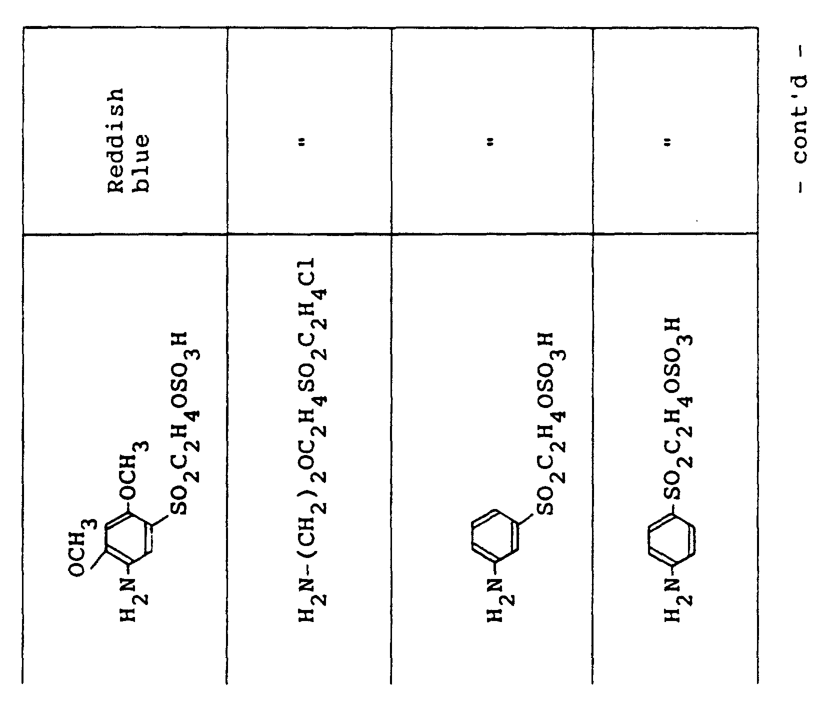

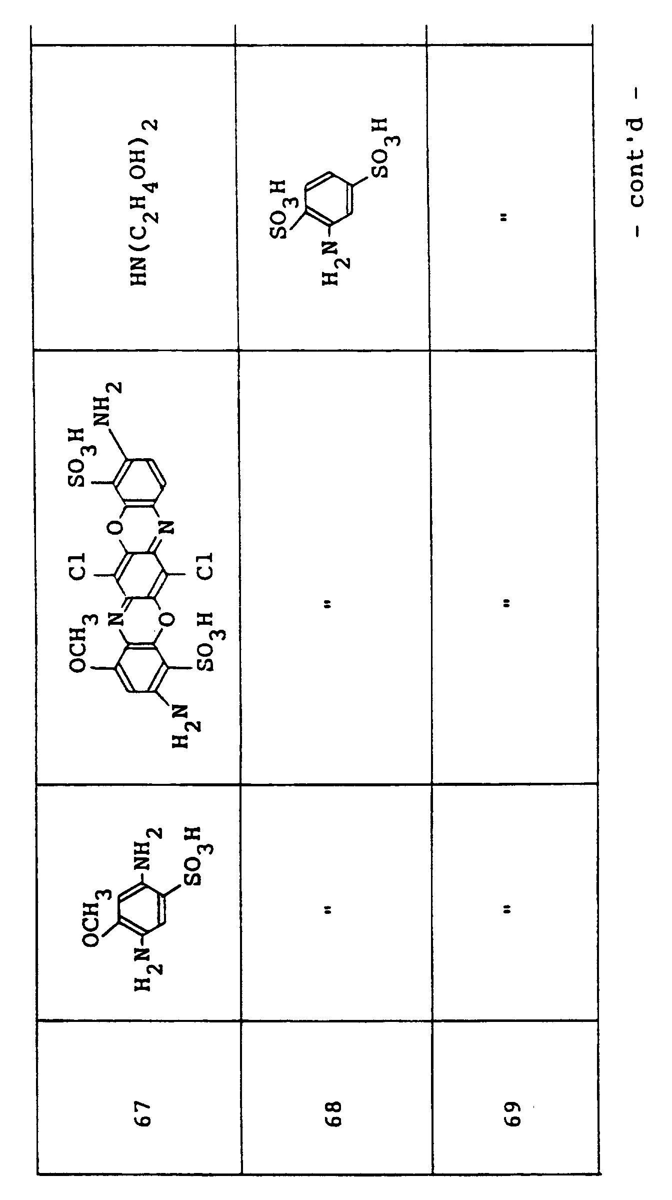

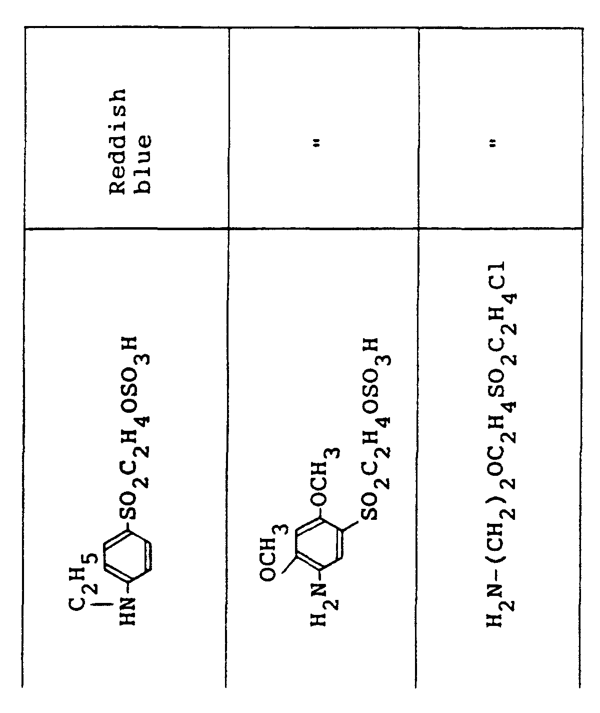

### Dyeing Example 3

Each asymmetric dioxazine compound obtained in Examples 54 to 69 (each of 0.1, 0.3 and 0.6 parts) was dissolved in water (200 parts), and sodium sulfate (10 parts) and cotton (10 parts) were added thereto. The bath was heated to 60 °C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 70

2-Methoxy-4,6-dichloro-s-triazine (18 parts) and the same intermediate dioxazine compound (62.5 parts) as that in Example 1 were subjected to condensation reaction with each other at 30 ° to 50 °C within a pH of 2 to 7, followed by condensation reaction with 1-aminobenzene-3-β-sulfatoethylsulfone (28.1 parts), and thereafter salting-out gave a desired asymmetric dioxazine compound represented by the following formula in the free acid form.

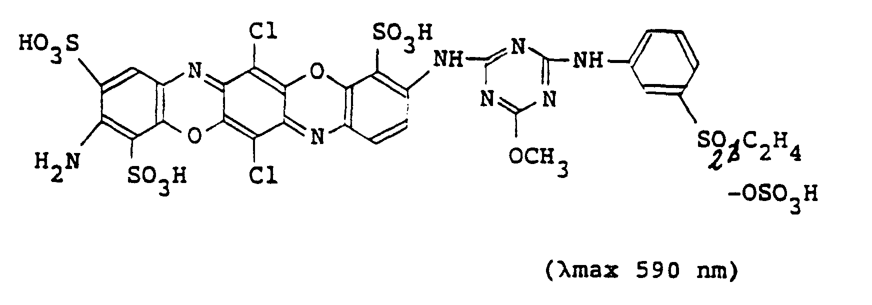

### Examples 71 - 97

Example 70 was repeated to obtain a desired asymmetric dioxazine compound, provided that the intermediate dioxazine compound, 2-methoxy-4,6-dichloro-s-triazine and 1-aminobenzene-3-β-sulfatoethylsulfone used in Example 70 were replaced by an intermediate dioxazine compound, a dichlorotriazine and an amine compound as shown in the following table, respectively.

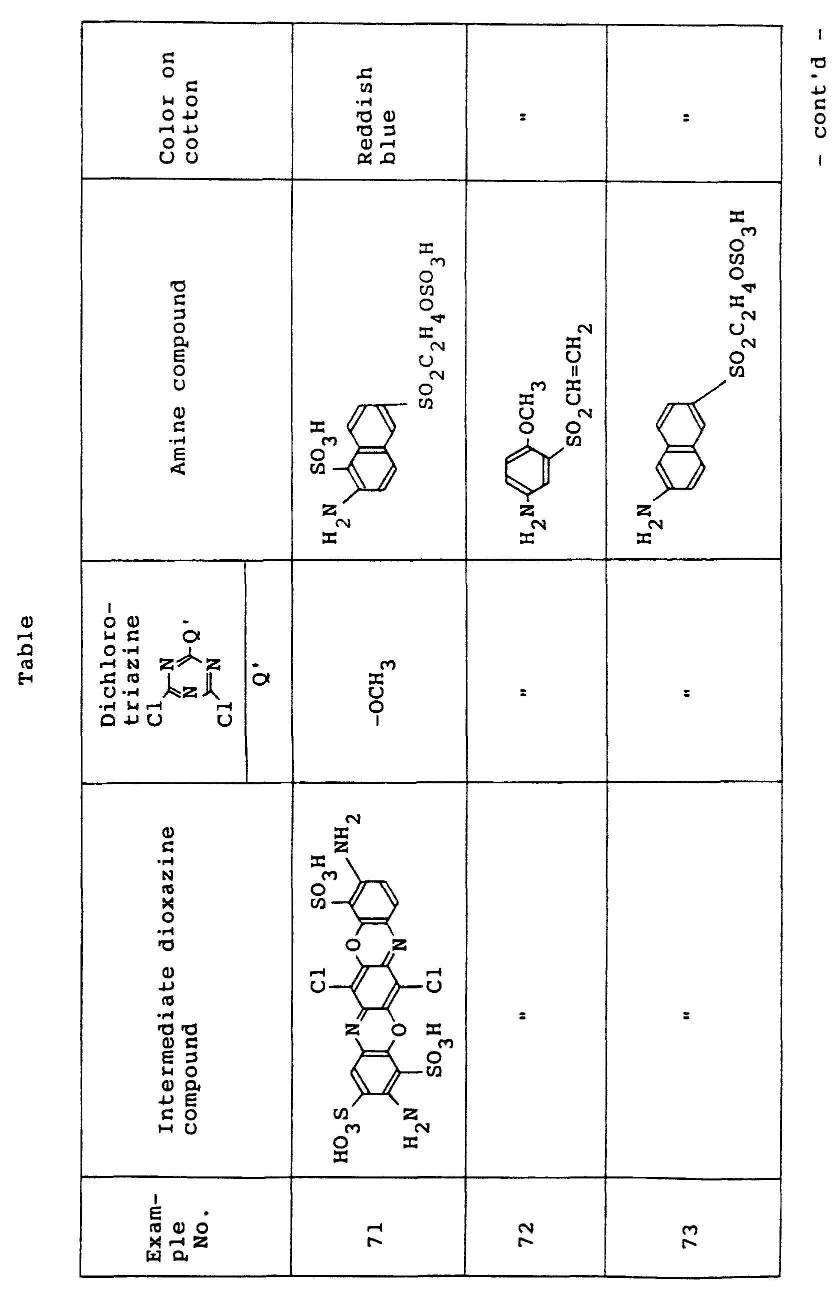

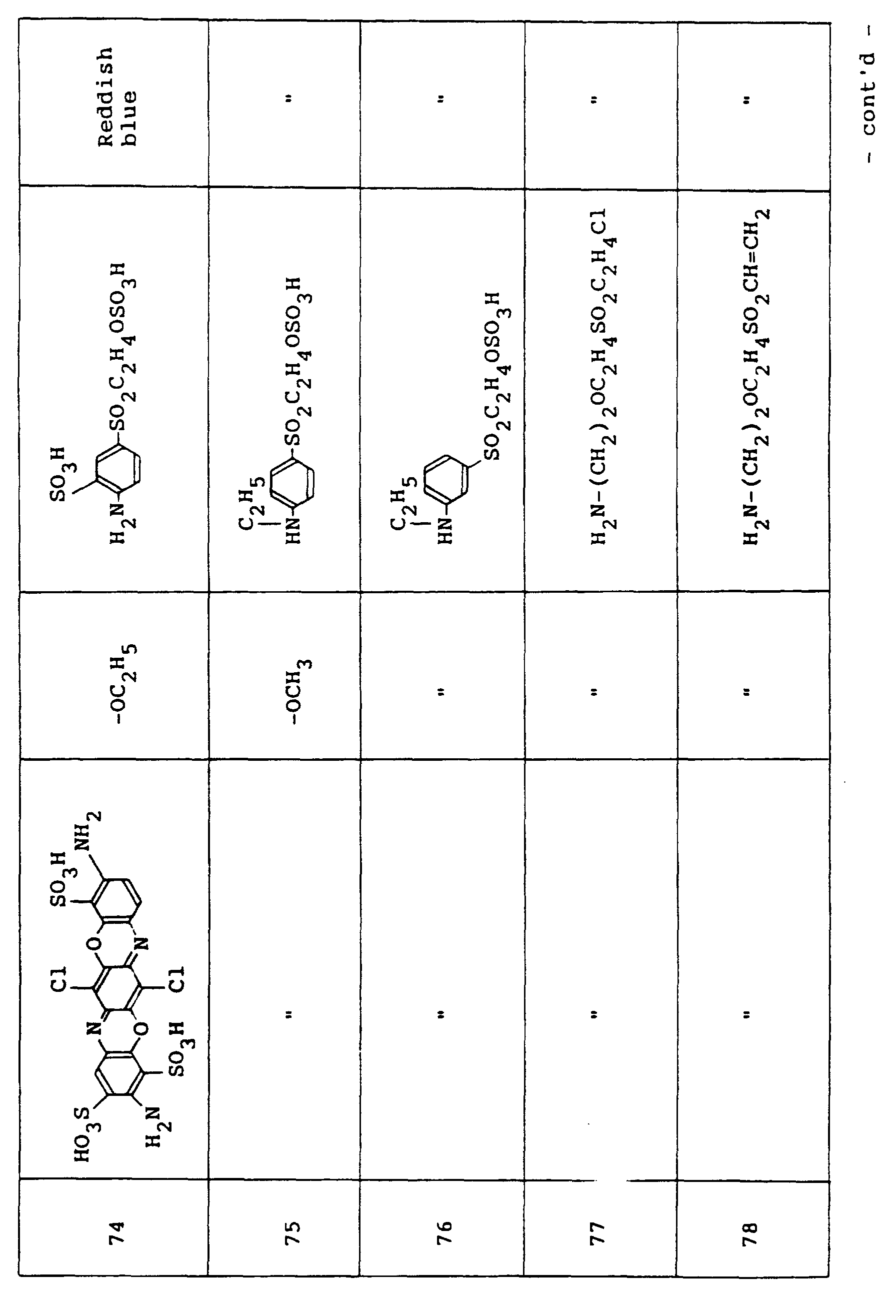

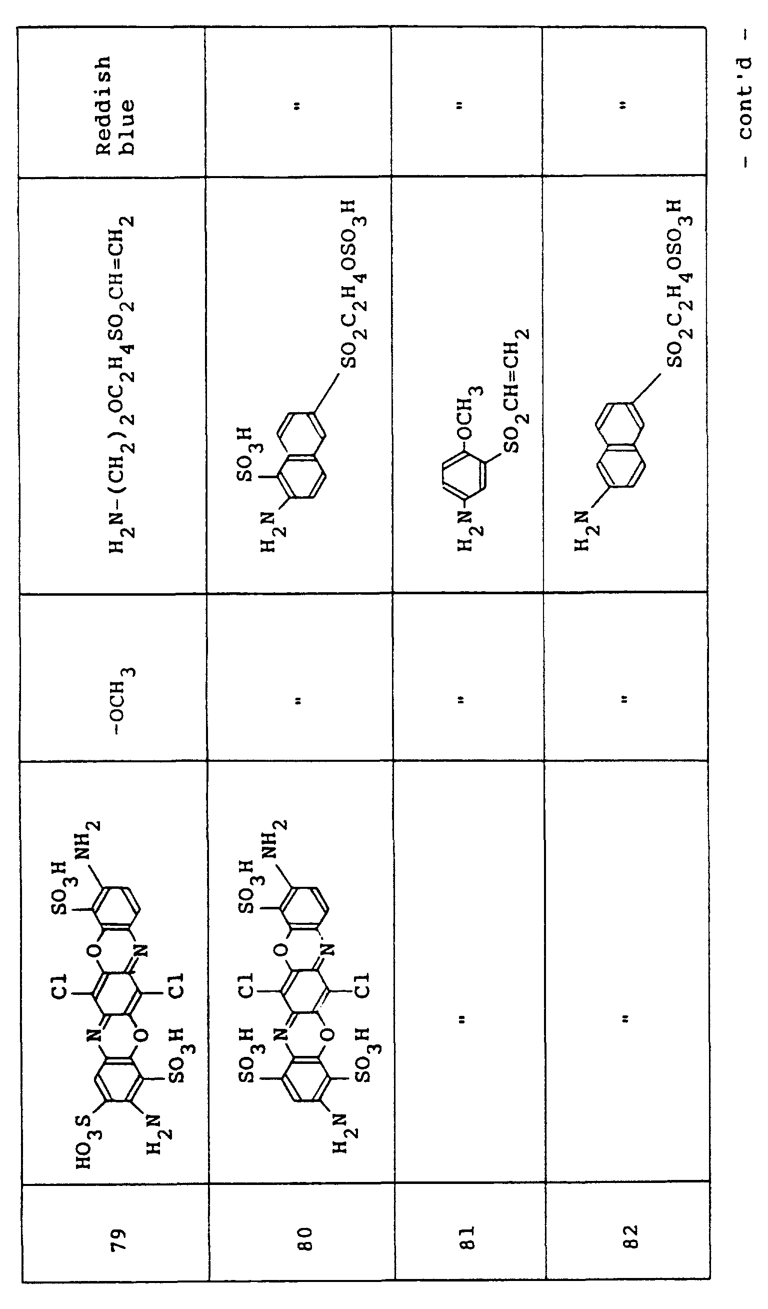

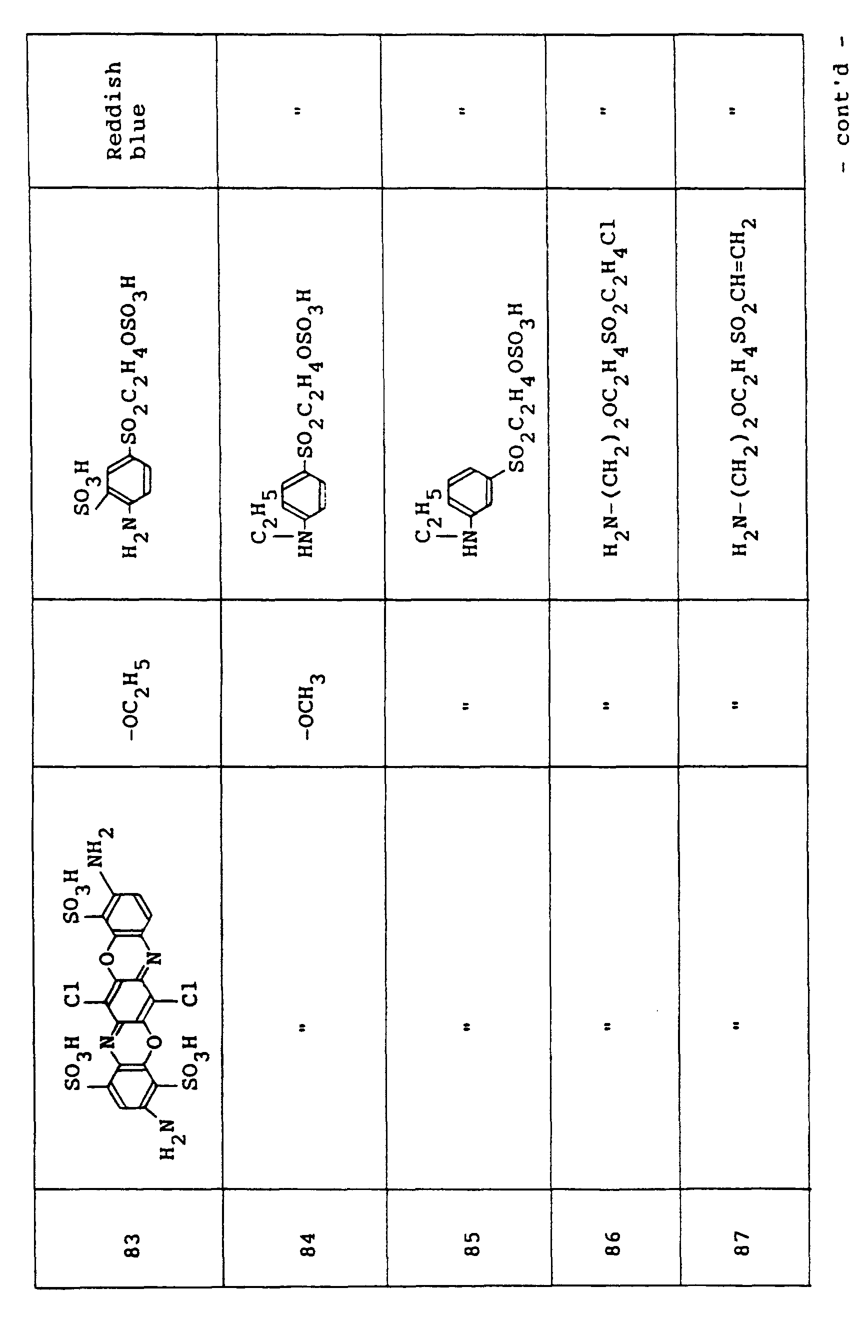

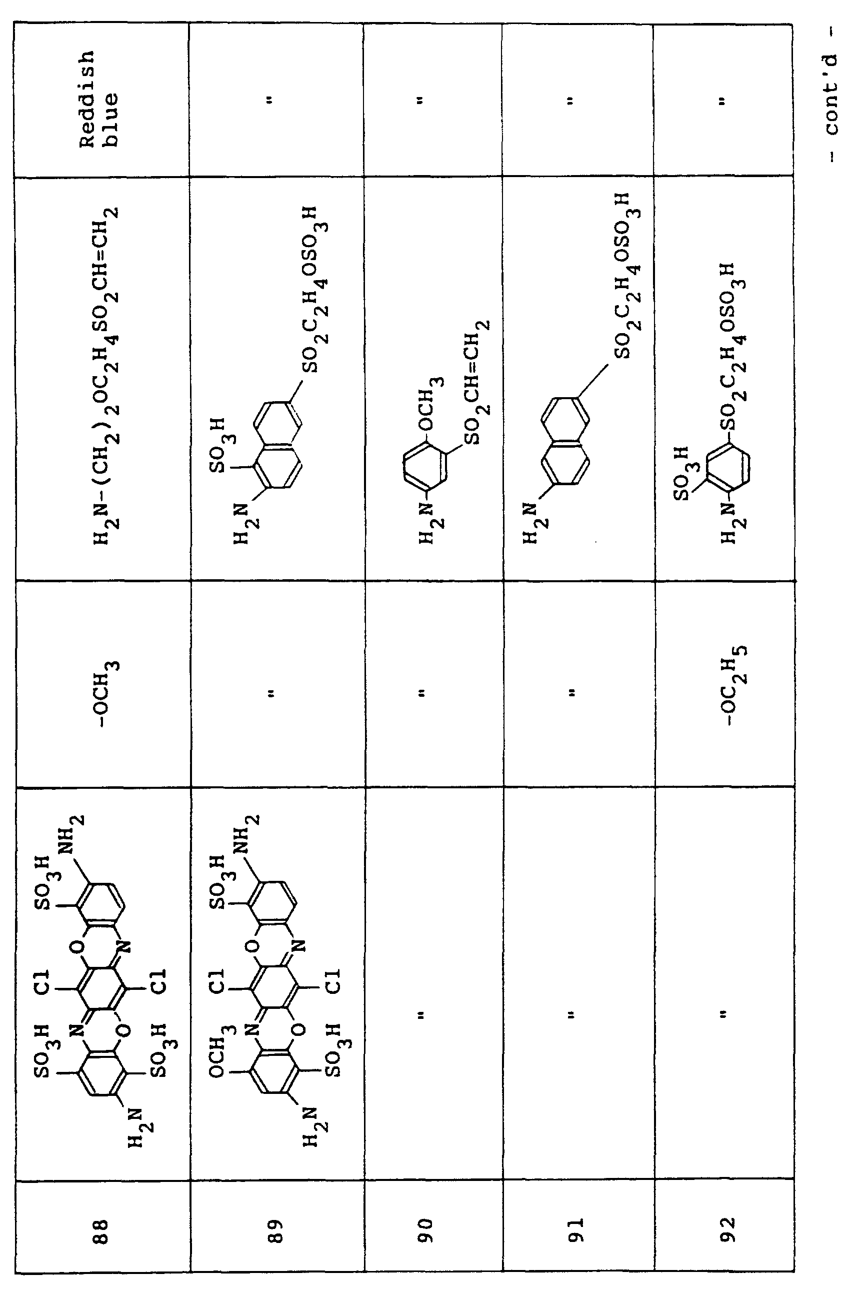

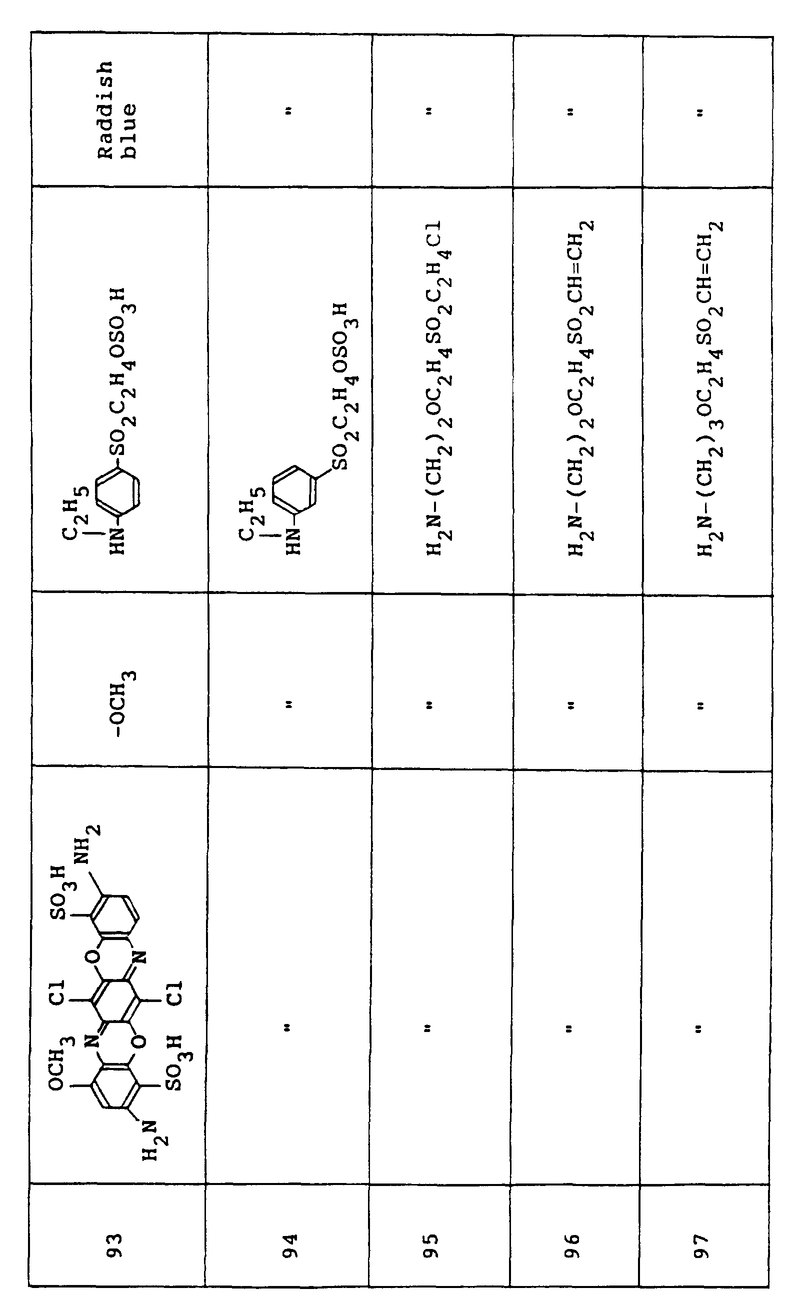

### Dyeing Example 4

Each asymmetric dioxazine compound obtained in Examples 70 to 97 (each of 0.1, 0.3 and 0.6 parts) was dissolved in water (200 parts), and sodium sulfate (10 parts) and cotton (10 parts) were added thereto. The bath was heated to 60°C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 98

To an aqueous solution containing the same second intermediate dioxazine compound as in Example 1 was added diethylsulfuric acid, and the mixture was stirred at 50° to 90°C within a pH range of 6 to 9, thereby obtaining an intermediate dioxazine compound represented by the following formula in the free acid form.

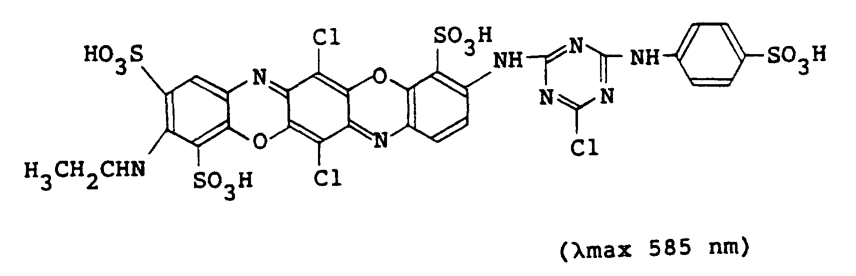

A mixture of the above intermediate dioxazine compound and 1-aminobenzene-3-β-sulfatoethylsulfone in water was stirred at 50 ° to 70 °C within a pH range of 2 to 5 to complete the reaction. Thereafter, salting-out using sodium chloride and isolation of the crystals produced gave a desired asymmetric dioxazine compound represented by the following formula in the free acid form.

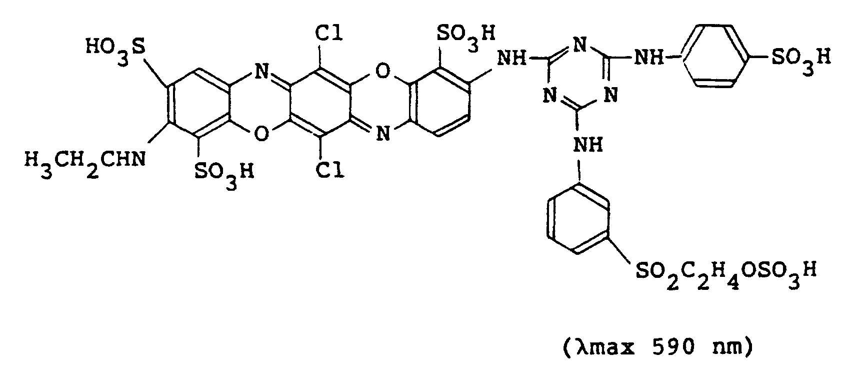

### Example 99

In a manner similar to that of Example 98, each intermediate dioxazine compound which had been obtained in the manner described in Example 51 was used to obtain a corresponding desired asymmetric dioxazine compound.

### Dyeing Example 5

Each asymmetric dioxazine compound obtained in Examples 98 and 99 (each of 0.1, 0.3 and 0.6 parts) was dissolved in water (200 parts), and sodium sulfate (10 parts) and cotton (10 parts) were added thereto. The bath was heated to 60°C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 100

The second intermediate dioxazine compound obtained in Example 1 was dissolved in water, and an excess amount of acetic anhydride was added thereto. The mixture was allowed to react with each other at 30 ° to 70 °C, thereby obtaining an intermediate dioxazine represented by the following formula in the free acid form.

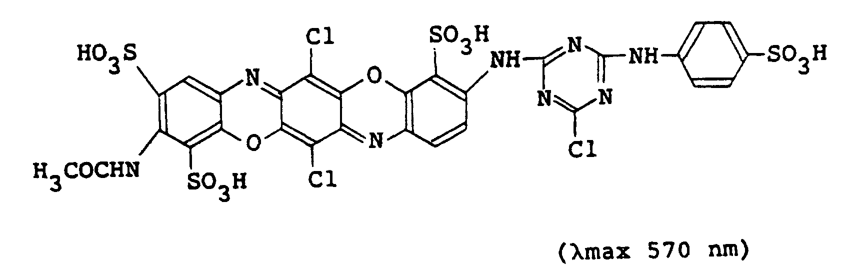

The intermediate dioxazine and 1-aminobenzene-3-β-sulfatoethylsulfone in an amount equimolar to the intermediate dioxazine were added to water, and allowed to react with each other at 50 ° to 70 °C and pH 2 to 5, while being stirred. Thereafter, salting out of the reaction mixture with sodium chloride and isolation of the crystals produced gave a desired asymmetric dioxazine compound represented by the following formula in the free acid form.

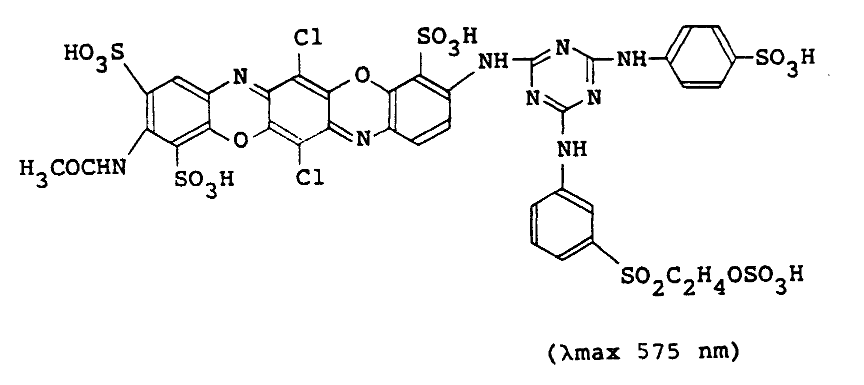

### Example 101

Using each intermediate dioxazine compound obtained in Example 51, Example 100 was repeated to obtain a corresponding asymmetric dioxazine compound.

### Dyeing Example 6

Each asymmetric dioxazine compound obtained in Examples 100 and 101 (each of 0.1, 0.3 and 0.6 parts) was dissolved in water (200 parts), and sodium sulfate (10 parts) and cotton (10 parts) were added thereto. The bath was heated to 60°C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 102

The first intermediate dioxazine compound obtained in Example 1 (62.5 parts) was dissolved in water (1500 parts), and cyanuric chloride (13.5 parts) was added thereto at 5° to 30 °C. The mixture was stirred to complete the reaction, while keeping the pH within a range of 2 to 7 using sodium carbonate. Successively, 1-aminobenzene-3-β-sulfatoethylsulfone (28.1 parts) was added thereto. The mixture was stirred at 10° to 50°C, while keeping the pH within a range of 2 to 6, thereby obtaining a desired asymmetric dioxazine compound represented by the following formula in the free acid form.

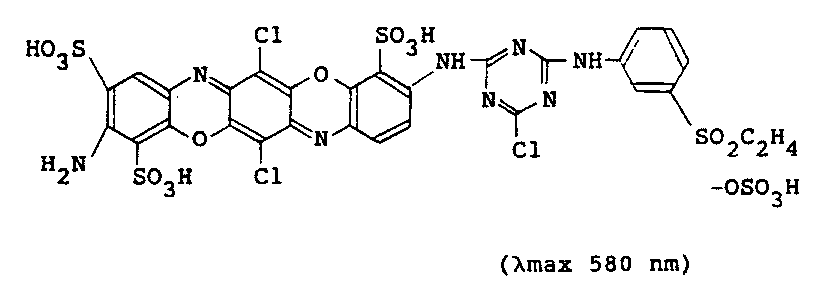

### Examples 103 to 150

Using a phenylenediamine as shown in the following table, Example 1 was repeated to obtain an intermediate dioxazine compound corresponding to the first intermediate dioxazine compound in Example 1. The intermediate dioxazine compound obtained was allowed to react with cyanuric chloride (18.5 parts). Using the resulting second intermediate dioxazine compound, Example 102 was repeated, provided that the 1-aminobenzene-3-β-sulfatoethylsulfone was replaced by an amine as shown in the following table, thereby obtaining a desired corresponding asymmetric dioxazine compound.

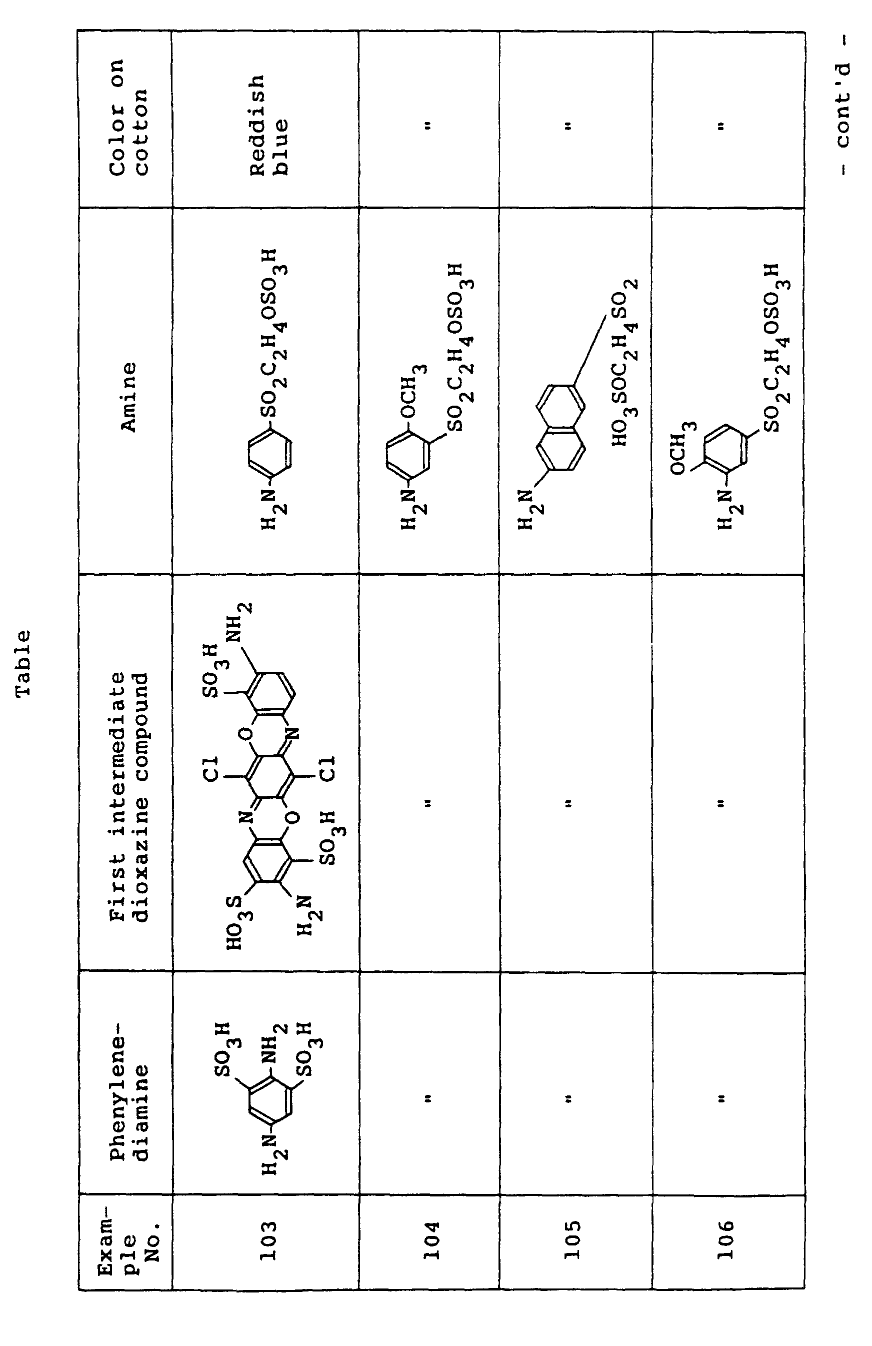

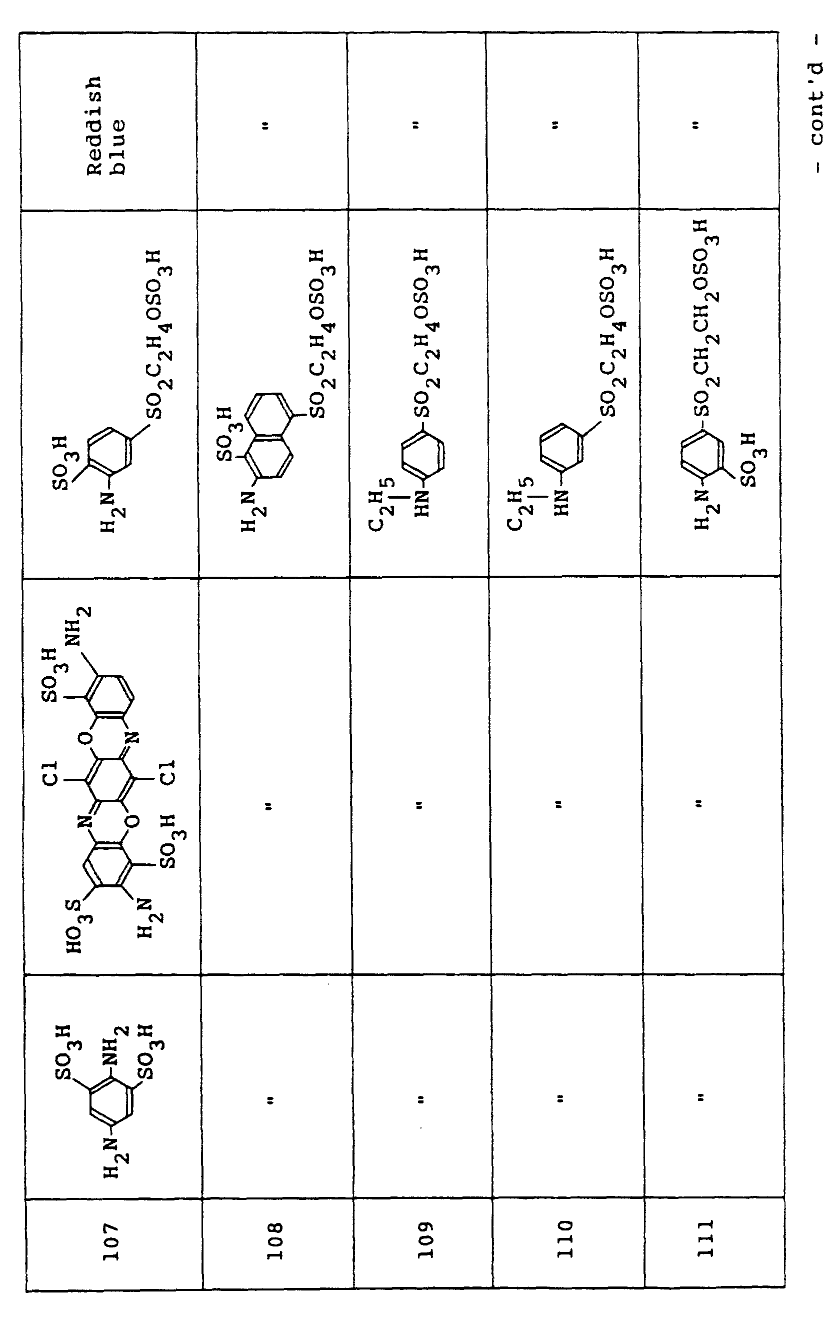

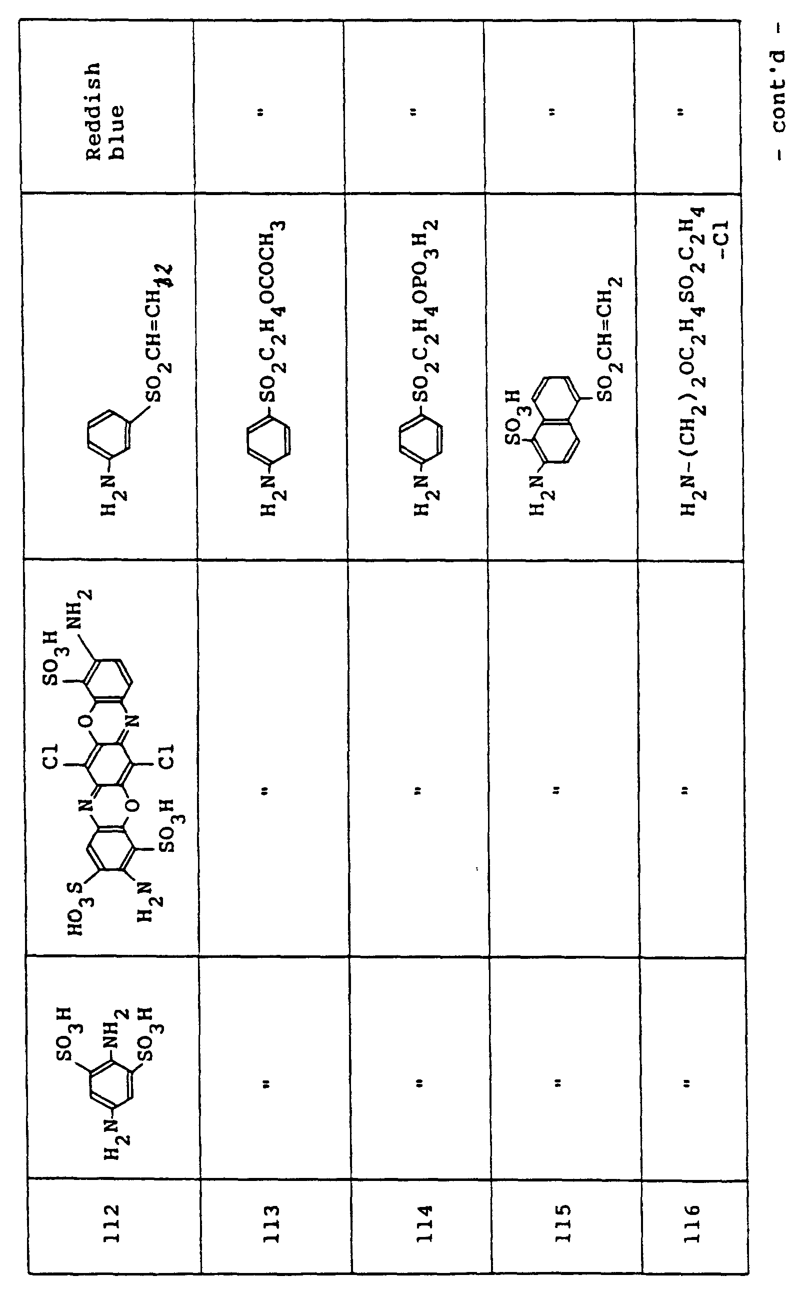

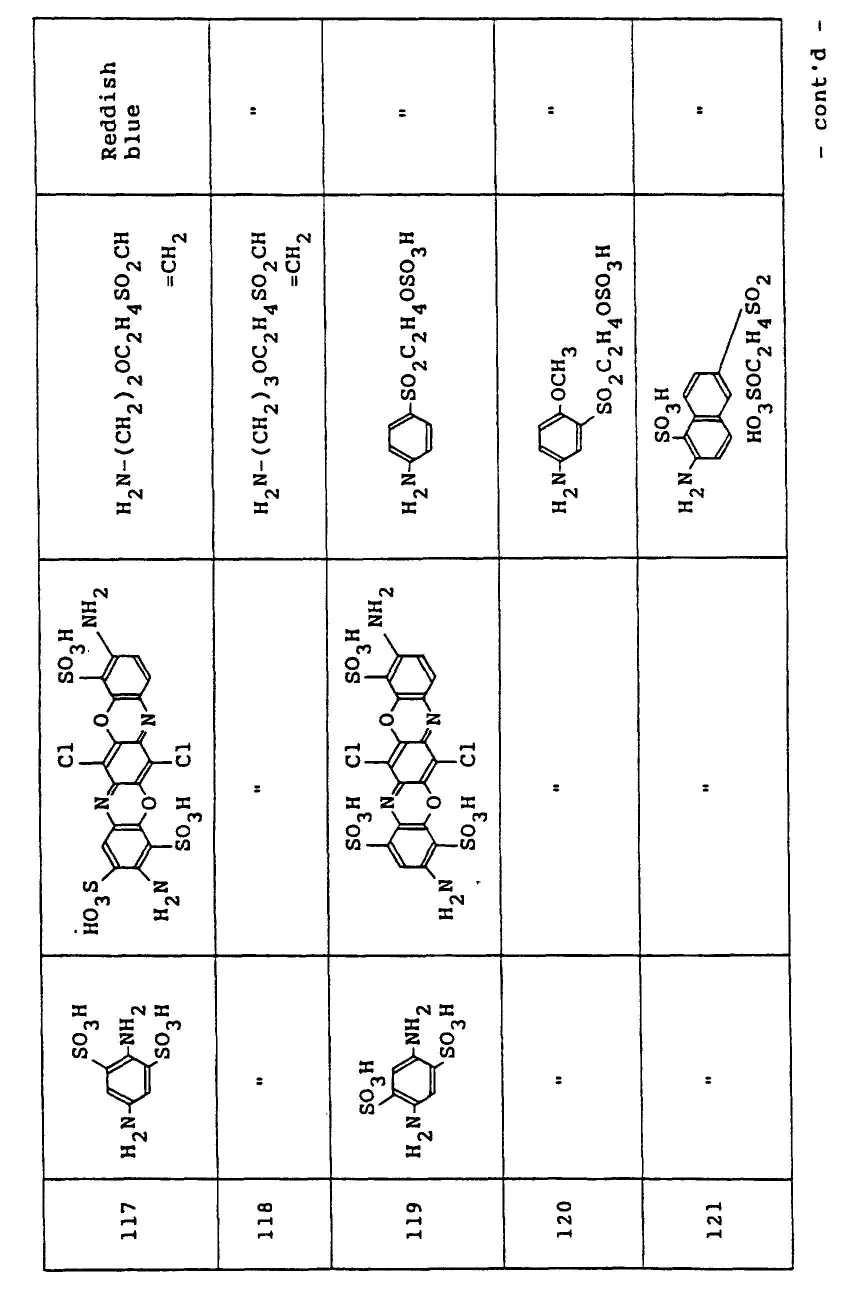

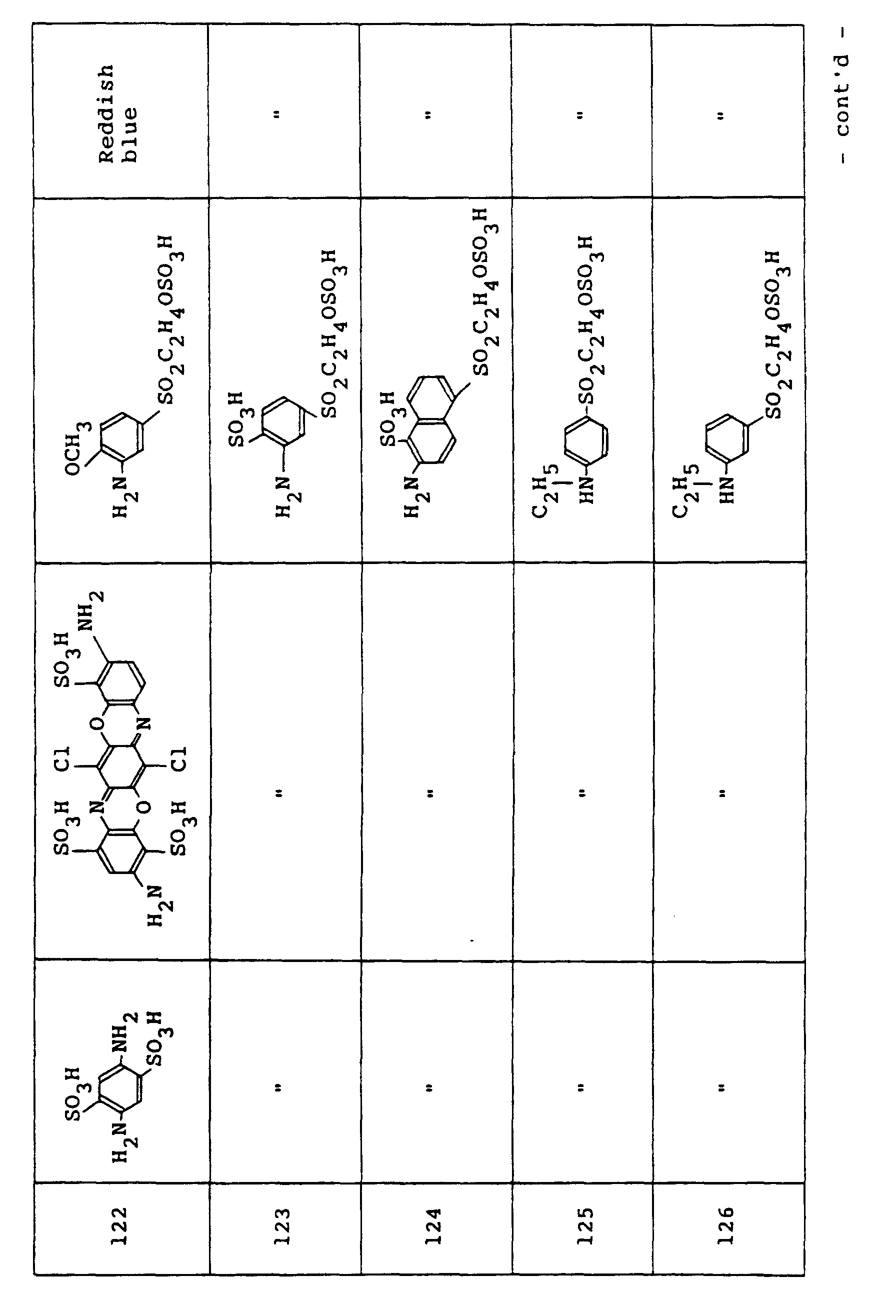

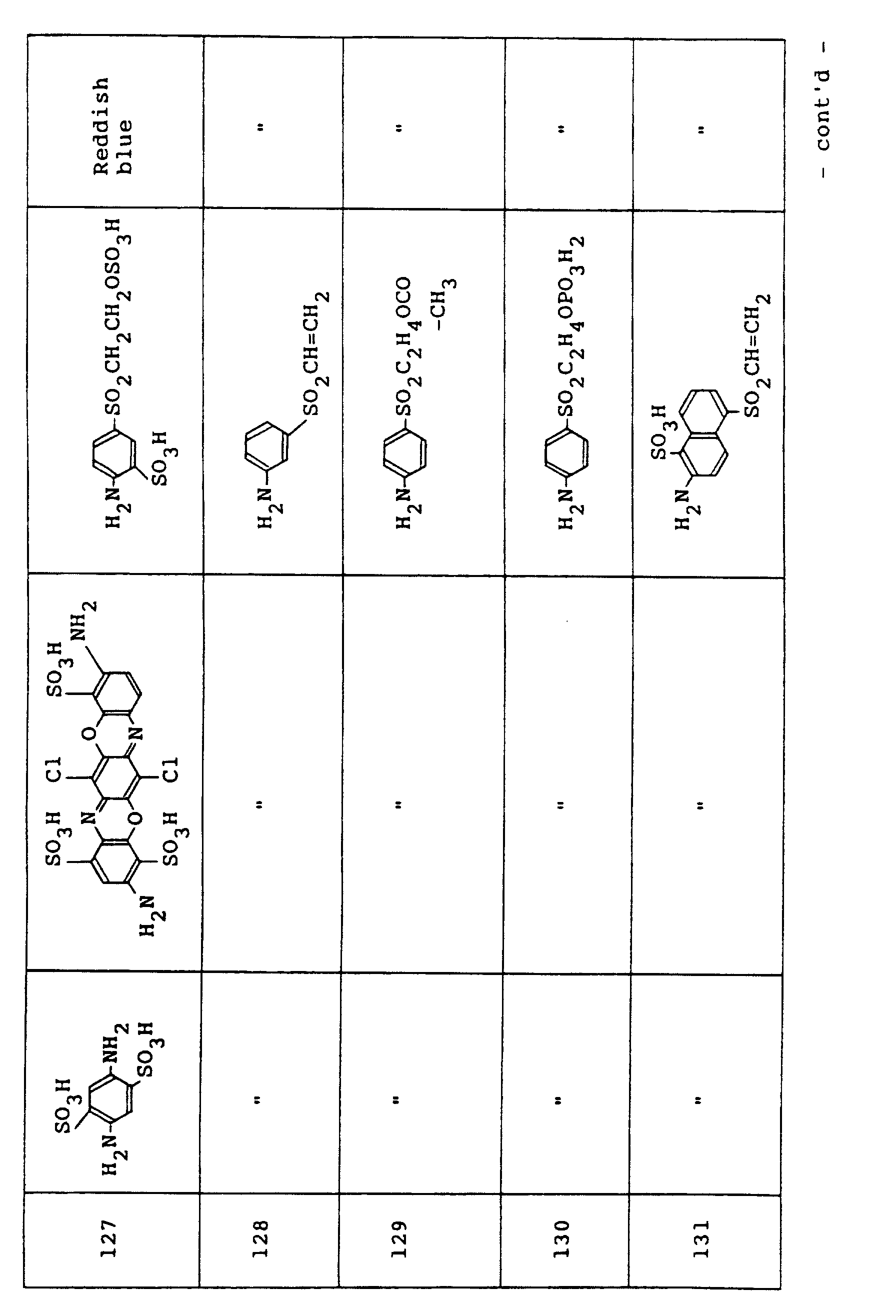

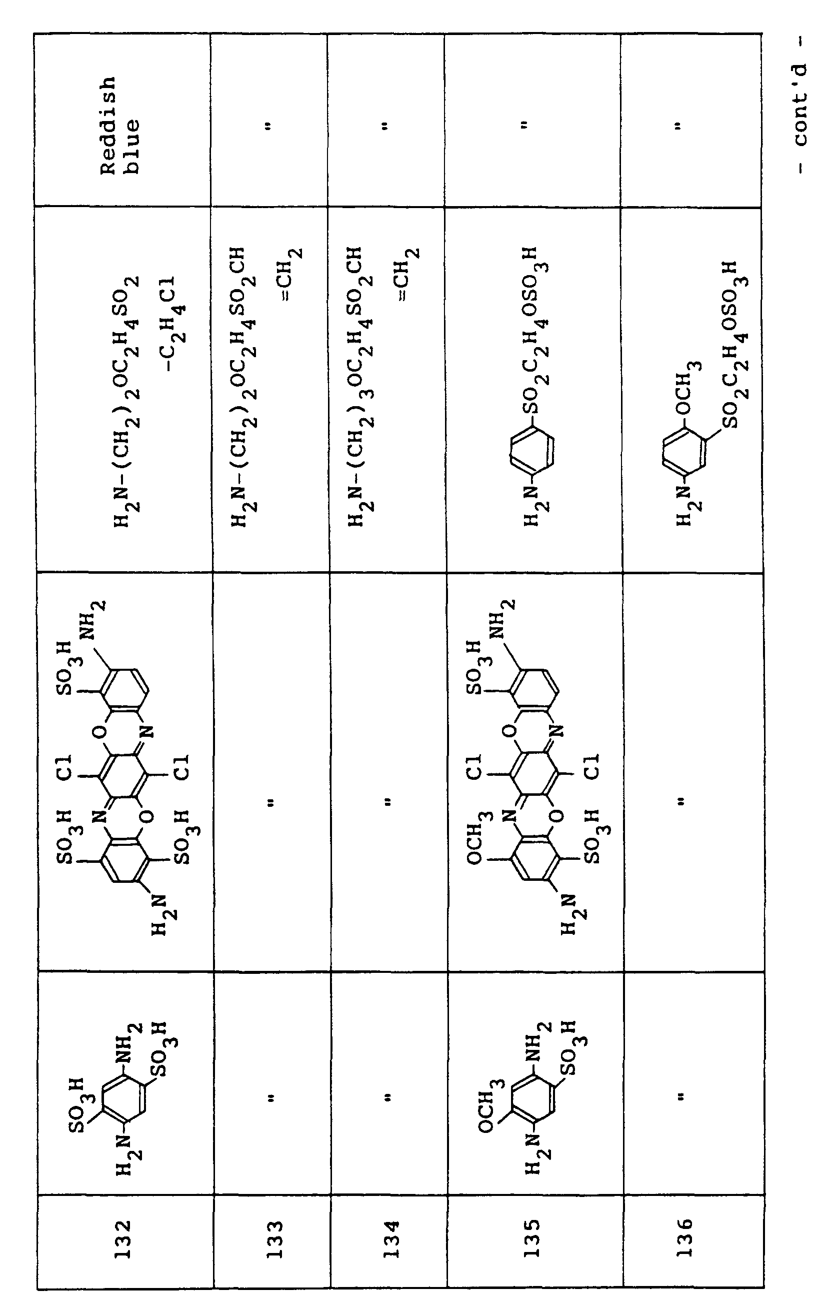

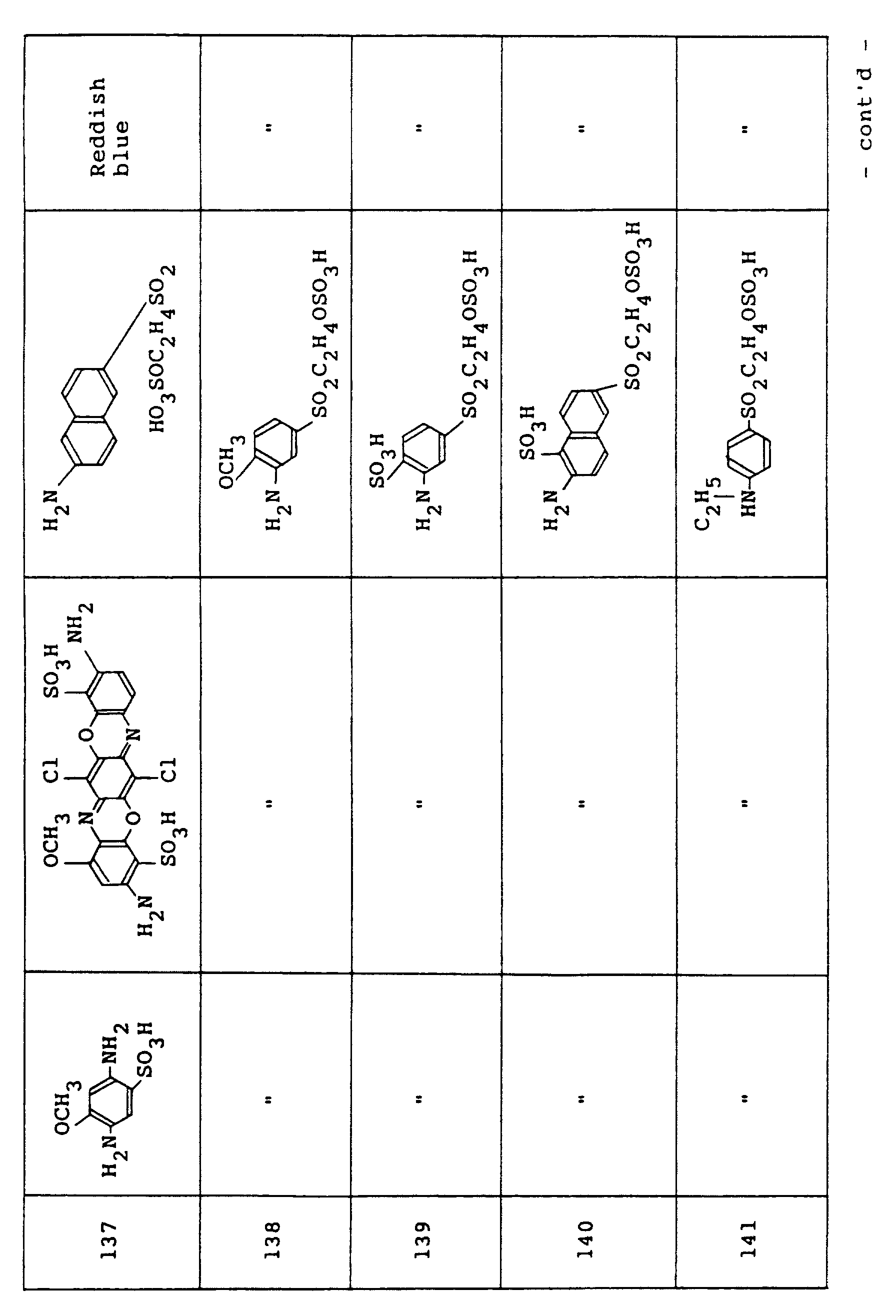

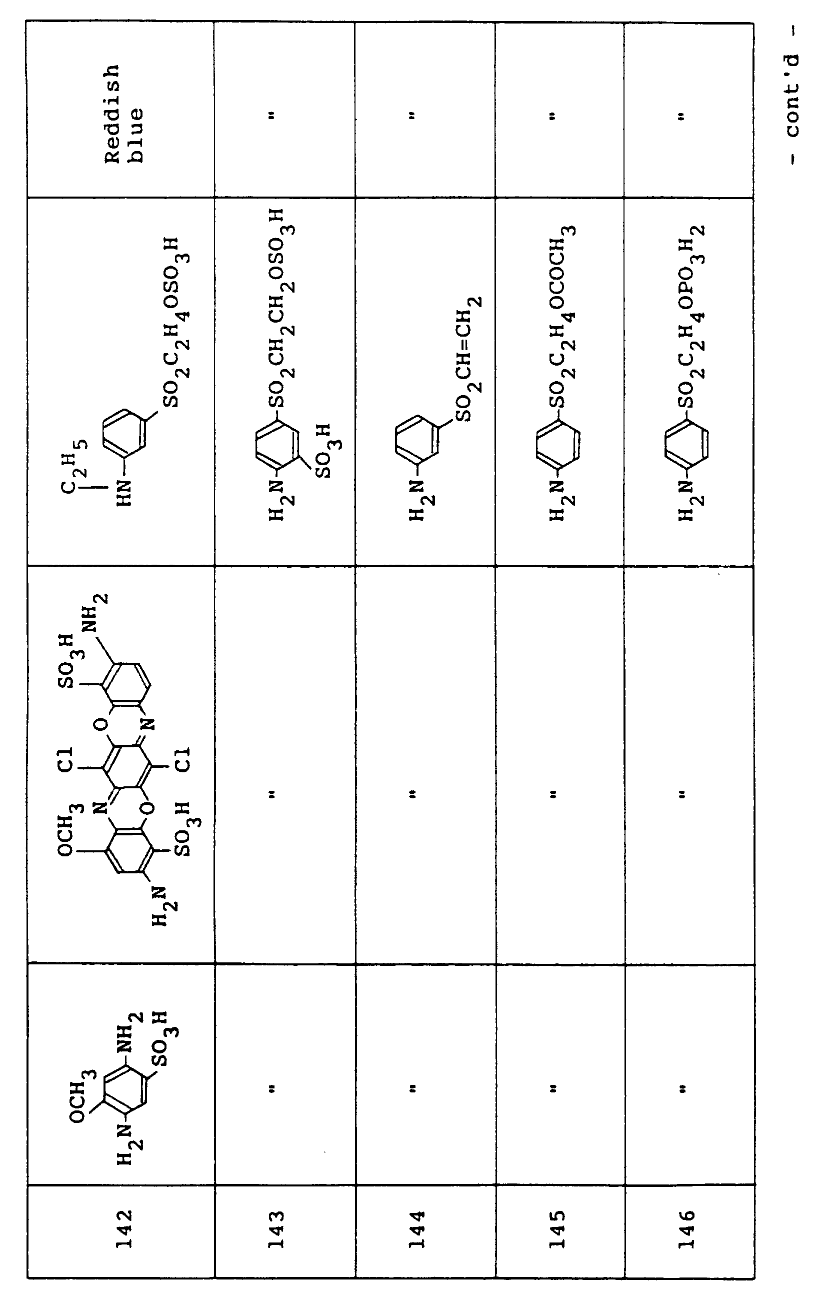

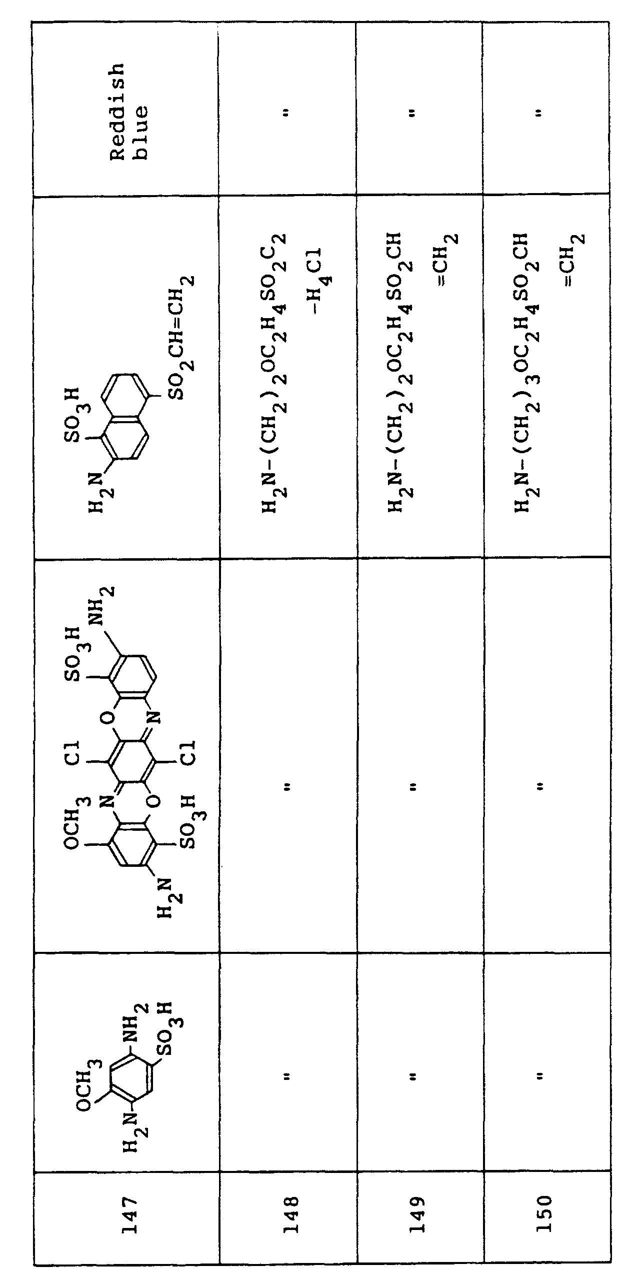

### Dyeing Example 7

Each asymmetric dioxazine compound obtained in Examples 102 to 150 (each of 0.1, 0.3 and 0.6 parts) was dissolved in water (200 parts), and sodium sulfate (10 parts) and cotton (10 parts) were added thereto. The bath was heated to 60 °C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 151

To the reaction mixture containing the asymmetric dioxazine compound, which had been obtained in the same manner as in Example 102, sulfanilic acid (17.3 parts) was added. The mixture was stirred to complete the reaction at 50 ° to 70 °C, while keeping the pH within a range of 2 to 5, thereby obtaining the same asymmetric dioxazine compound as in Example 1.

Similarly, the asymmetric dioxazine compounds obtained in Examples 103 to 150 were treated to obtain the same asymmetric dioxazine compounds as those in Examples 3 to 50, respectively.

### Example 152

The asymmetric dioxazine compound (101.8 parts) which had been obtained in the same manner as in Example 102 was dissolved in water (1500 parts), and 1-aminobenzene-3-β-sulfatoethylsulfone (28.1 parts) was added thereto. The mixture was stirred at 40° to 90°C, while keeping the pH within a range of 2 to 6 using aqueous sodium carbonate solution, thereby obtaining a desired asymmetric dioxazine compound represented by the following formula in the free acid form.

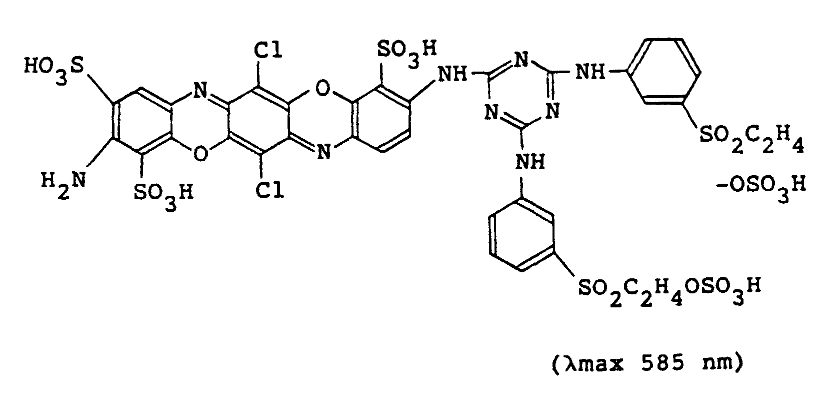

### Example 153

Using the asymmetric dioxazine compounds obtained in Examples 103 to 150, Example 152 was repeated, provided that amines described below were used in place of the 1-aminobenzene-3-β-sulfatoethylsulfone used in Example 152 in an amount equimolar to that, thereby obtaining corresponding asymmetric dioxazine compounds.

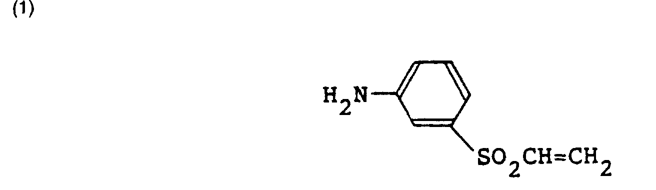

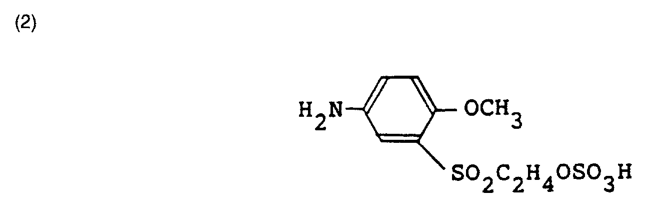

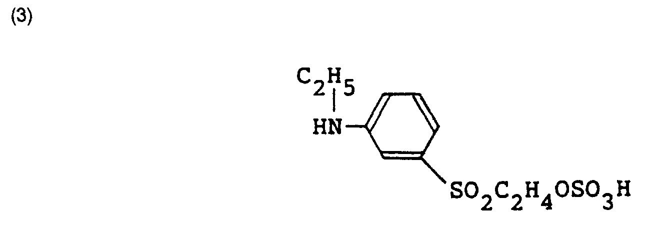

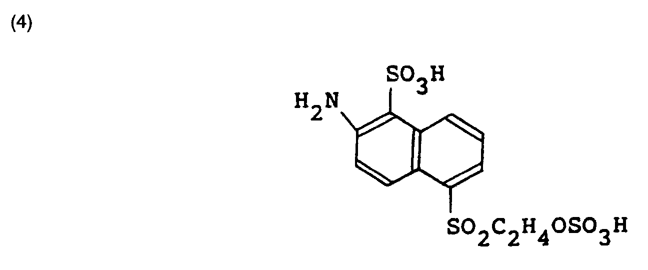

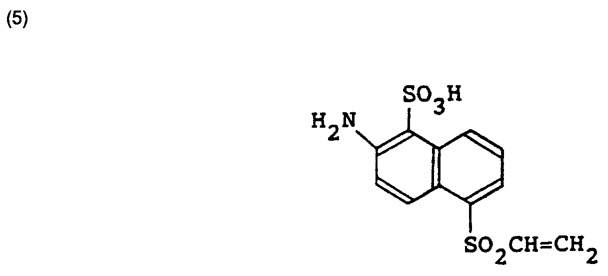

(6) H₂N-(CH₂)₂OC₂H₄SO₂C₂H₄Cl

(7) H₂N-(CH₂)₂OC₂H₄SO₂CH=CH₂

### Dyeing Example 8

Each asymmetric dioxazine compound obtained in Examples 152 and 153 (each of 0.1, 0.3 and 0.6 parts) was dissolved in water (200 parts), and sodium sulfate (10 parts) and cotton (10 parts) were added thereto. The bath was heated to 60 °C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 154

An intermediate dioxazine compound (54.6 parts) represented by the following formula, 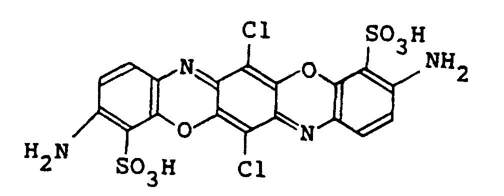 was added to 5 to 23% oleum (1000 parts), and the mixture was stirred at 80° to 100°C. The reaction mixture was poured into ice water to produce crystals, which were then separated on a filter. The cake obtained was mixed with water and adjusted to pH 2 to 7 using aqueous sodium hydroxide solution. Cyanuric chloride (18.5 parts) was added thereto at 5° to 30°C, and the mixture was stirred to complete the reaction, while keeping the pH within a range of 2 to 7 using aqueous sodium carbonate solution. Successively, sulfanilic acid (17.3 parts) was added thereto, and the mixture was stirred to complete the reaction at 30° to 50°C and that pH value. To this reaction mixture was added 1-aminobenzene-4-β-sulfatoethylsulfone (28.1 parts), and the mixture was heated to 50° to 70°C, while keeping the pH within a range of 2 to 5, and stirred to complete the reaction under those conditions. The reaction mixture was allowed to cool to ambient temperature and then mixed with potassium chloride. Isolation of the crystals produced gave a desired product, which was found to be a mixture of both asymmetric dioxazine compounds obtained in Examples 3 and 19.

### Dyeing Example 9

Using the same asymmetric dioxazine compounds as used in Dyeing Examples 1 to 8, each color paste having the following composition was prepared.

| | |
|---|---|
| Asymmetric dioxazine compound | 5 parts |
| Urea | 5 parts |
| Sodium alginate (5%) stock paste | 50 parts |
| Hot water | 25 parts |
| Sodium hydrogencarbonate | 2 parts |
| Balance (water) | 13 parts |

Mercerized cotton broad cloth was printed with the color paste having the above composition, predried and steamed at 100°C for 5 minutes. The treated cloth was washed with hot water, soaped, again washed with hot water and then dried. Thus, there was obtained each printed product of a blue color excellent in fastness properties, particularly those such as chlorine fastness.

### Example 155

A dioxazine compound (55 parts) having the following formula in the free acid form, 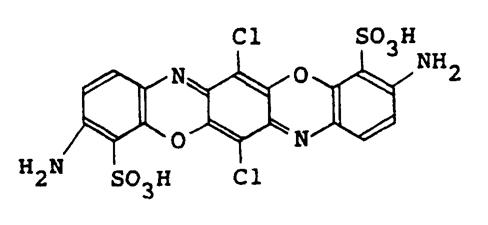 and cyanuric chloride (18 parts) were added to water (1500 parts), and the mixture was stirred to complete the reaction at 0 ° to 30 °C, while keeping the pH within a range of 5 to 8 using sodium carbonate. To the reaction mixture was added taurine (13 parts), and the mixture was stirred to complete the reaction at 10° to 50°C, while keeping the pH within a range of 4 to 7. Successively, additional taurine (13 parts) was added thereto, and the mixture was stirred to complete the reaction at 30 ° to 80°C and pH 4 to 7, thereby obtaining an intermediate dioxazine compound represented by the following formula in the free acid form.

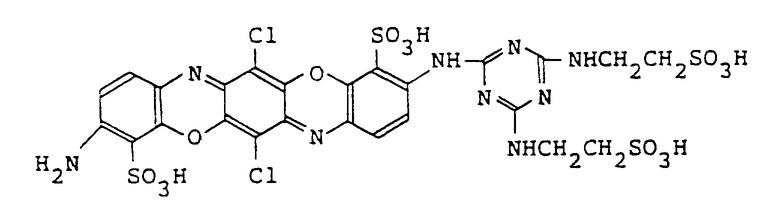

A mixture of the intermediate dioxazine compound (87 parts) and cyanuric chloride (18 parts) in water (1500 parts) was stirred to complete the reaction at 0°C to 30°C, while keeping the pH within a range of 5 to 8 using sodium carbonate. To the reaction mixture was added taurine (13 parts), and the mixture was stirred to complete the reaction at 10° to 50°C and at pH 4 to 7. Successively, 1-aminobenzene-3-β-sulfatoethylsulfone (28 parts) was added thereto, and the mixture was stirred to complete the reaction at 30° to 80°C and at pH 4 to 7, thereby obtaining a desired asymmetric dioxazine compound of the following formula in the free acid form.

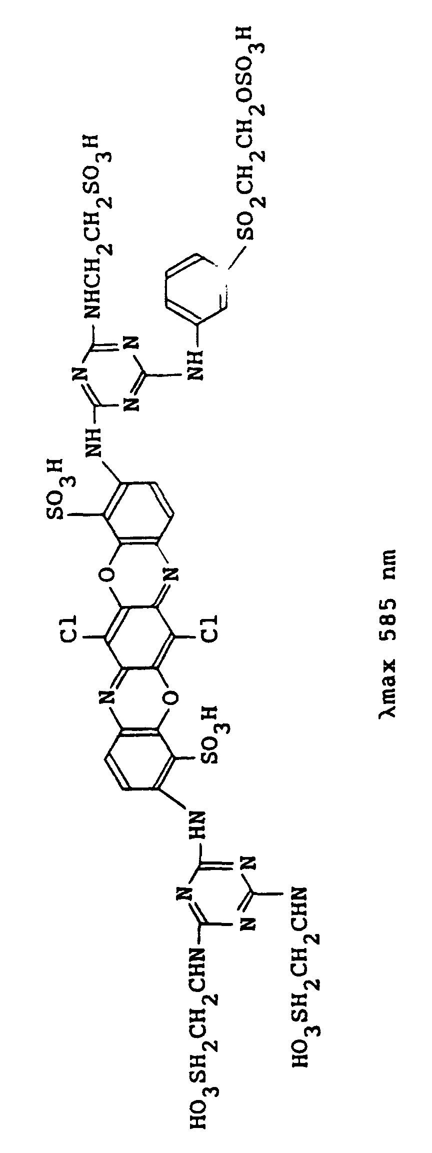

### Example 156

Example 155 was repeated, provided that a dioxazine compound of the following formula in the free acid form, 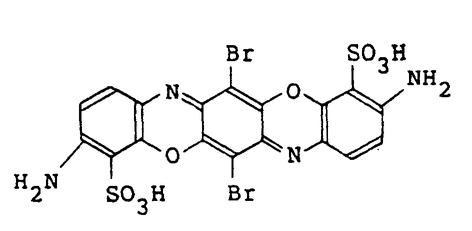 was used in place of the starting dioxazine compound used in Example 155 in an amount equimolar thereto, thereby obtaining a desired asymmetric dioxazine compound of the following formula in the free acid form.

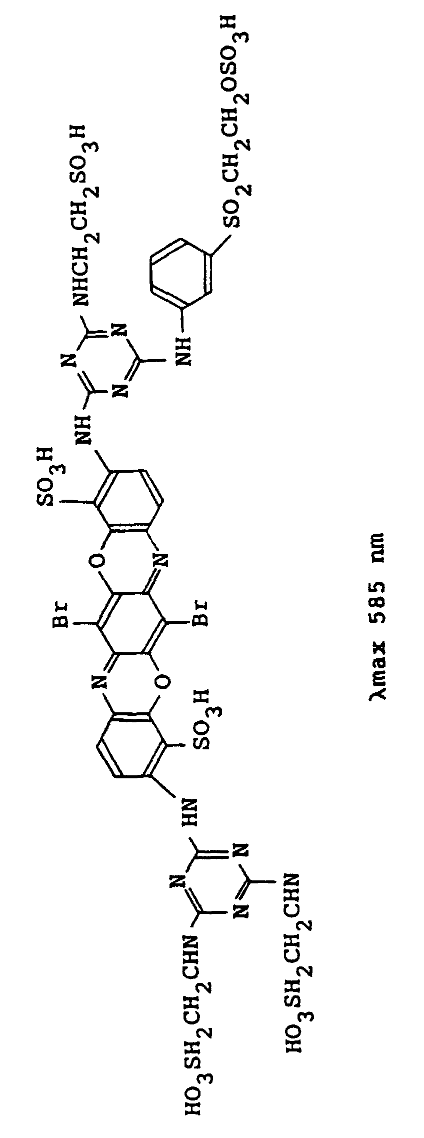

### Example 157

A mixture of a dioxazine compound (55 parts) of the following formula in the free acid form, 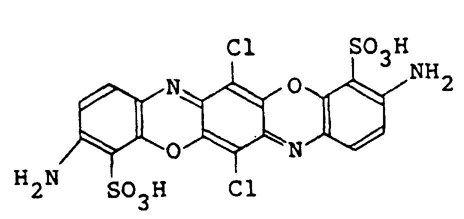 and cyanuric chloride (18 parts) in water (1500 parts) was stirred to complete the reaction at 0° to 30 °C, while controlling the pH within a range of 5 to 8. To the reaction mixture was added sulfanilic acid (17 parts), and the mixture was stirred to complete the reaction at 10° to 50°C and at pH 4 to 7. Thereafter, methanilic acid (17 parts) was added thereto, and the mixture was stirred to complete the reaction at 30° to 80 °C and at pH 4 to 7, thereby obtaining an intermediate dioxazine compound.

Using the intermediate dioxazine compound, the procedure corresponding to Example 155 was repeated to obtain a desired asymmetric dioxazine compound of the following formula in the free acid form.

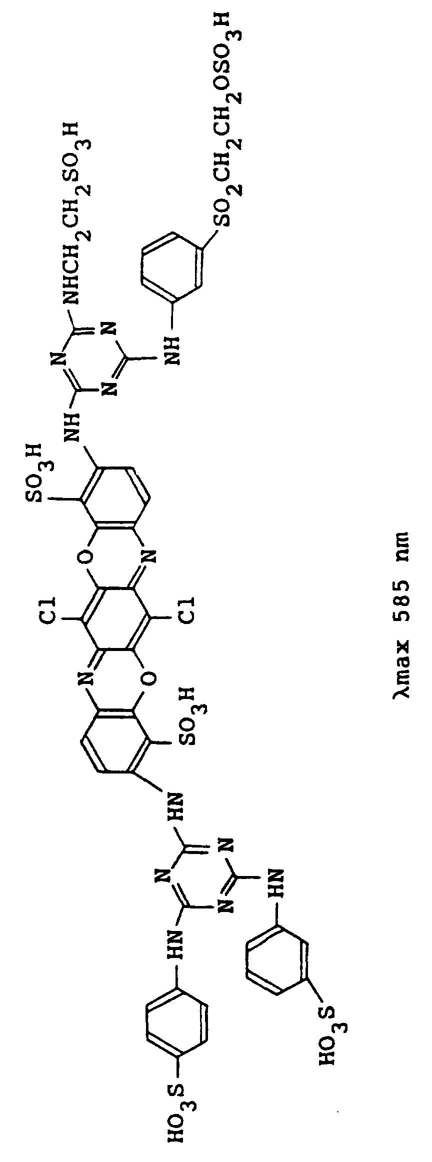

### Example 158

Each asymmetric dioxazine compound obtained in Examples 155 to 157 (each of 0.1, 0.3 and 0.6 parts) was dissolved in water (200 parts), and sodium sulfate (10 parts) and cotton (10 parts) were added thereto. The bath was heated to 60°C and then sodium carbonate (4 parts) was added thereto. Thereafter, dyeing was continued for 1 hour at that temperature. The cotton taken out was washed with water, soaped, again washed with water and then dried to obtain each dyed product of a reddish blue color superior in fastness properties, particularly those such as chlorine fastness. Each dioxazine compound was found to be superior in build-up property.

### Example 159

Example 155 was repeated, provided that amines described below were used in place of the 1-aminobenzene-3-β-sulfatoethylsulfone in an amount equimolar thereto, thereby obtaining respective corresponding asymmetric dioxazine compounds.

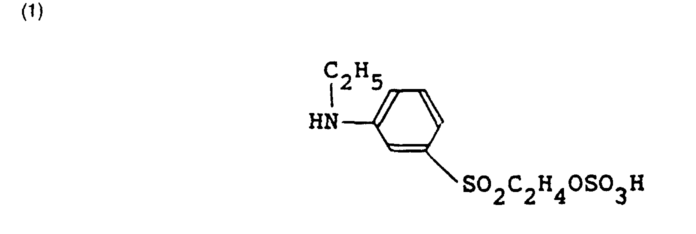

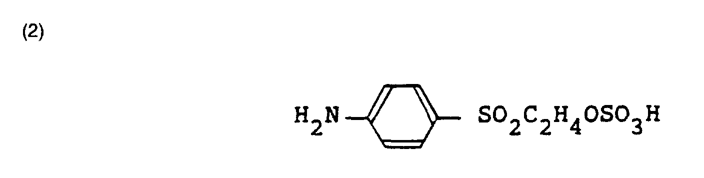

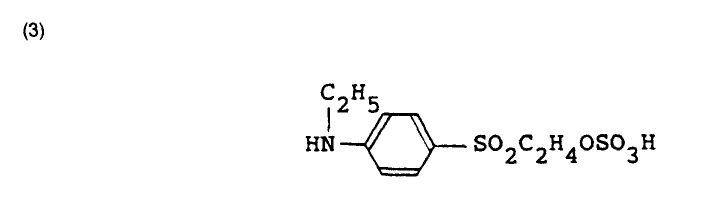

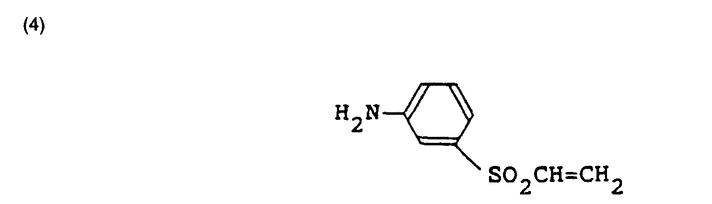

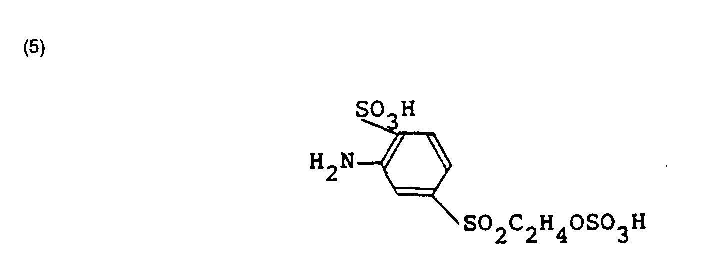

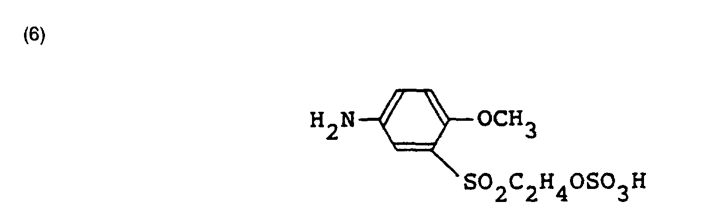

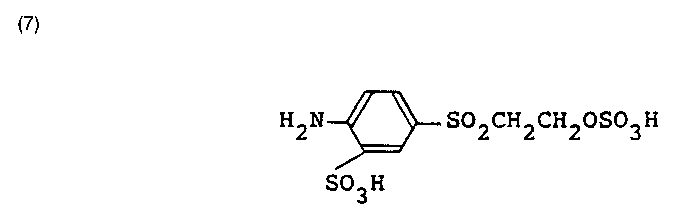

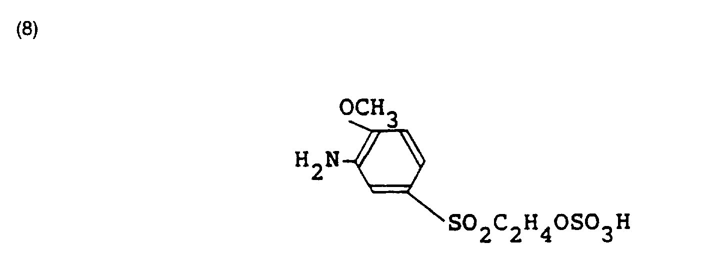

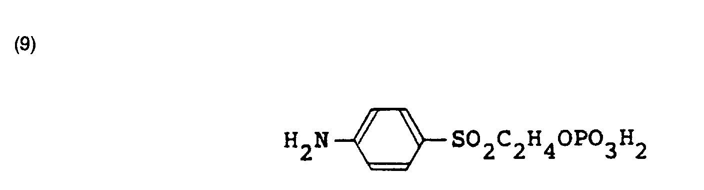

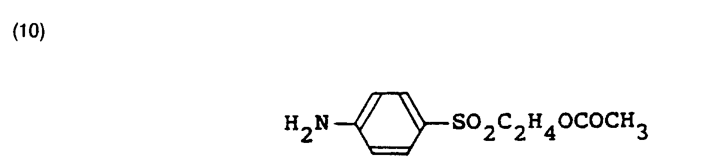

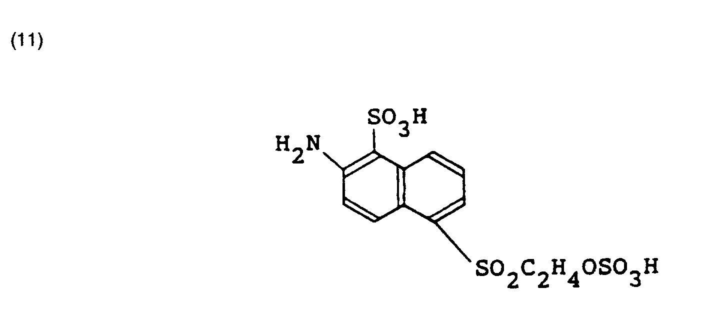

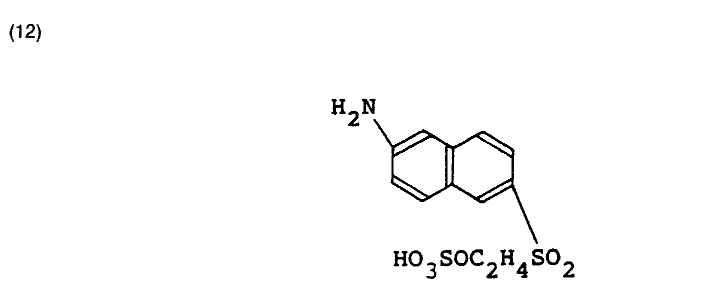

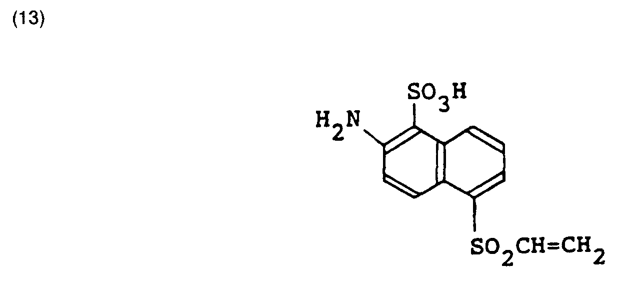

(14) H₂N-(CH₂)₂OC₂H₄SO₂C₂H₄Cl

(15) H₂N-(CH₂)₂OC₂H₄SO₂CH=CH₂

(16) H₂N-(CH₂)₃OC₂H₄SO₂CH=CH₂

### Example 160

Example 155 was repeated, provided that amine compounds described below were used in place of the taurine used in Example 155 in an amount equimolar thereto, thereby obtaining respective corresponding asymmetric dioxazine compounds.
(1) N-Methyltaurine
(2) β-Alanine
(3) Ethanolamine
(4) Diethanolamine
(5) Ethylamine
(6) Ammonia
(7) Sulfanilic acid
(8) Methanilic acid
(9) Orthanilic acid
(10) Aniline
(11) Aniline-2,5-disulfonic acid
(12) 2-Aminonaphthalene-3,6,8-trisulfonic acid
(13) 1-Aminonaphthalene-3,6-disulfonic acid

### Example 161

Example 160 was repeated, provided that respective amines (1) to (16) described in Example 159 were used in place of the 1-aminobenzene-3-β-sulfatoethylsulfone used in Example 160, thereby obtaining corresponding asymmetric dioxazine compounds.

### Example 162

Each asymmetric dioxazine compounds obtained in Examples 159 to 161 (each of 0.1, 0.3 and 0.6 parts) was dissolved in water (200 parts), and sodium sulfate (10 parts) and cotton (10 parts) were added thereto. The bath was heated to 60°C and then sodium carbonate (4 parts) was added thereto. Thereafter, dyeing was continued for 1 hour at that temperature. The cotton taken out was washed with water, soaped, again washed with water and then dried to obtain each dyed product of a reddish blue color superior in fastness properties, particularly those such as chlorine fastness. Each dioxazine compound was found to be superior in build-up property.

### Example 163

Example 155 was repeated, provided that reaction order of the 1-aminobenzene-3-β-sulfatoethylsulfone and taurine was exchanged, thereby obtaining the same asymmetric dioxazine compound as in Example 155.

### Example 164

A mixture of a dioxazine compound (55 parts) having the following formula in the free acid form, 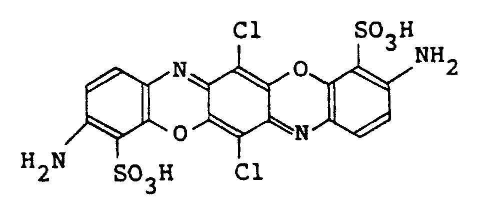 and cyanuric chloride (18 parts) in water (1500 parts) was stirred to complete the reaction at 0° to 30 °C, while keeping the pH within a range of 5 to 8 using sodium carbonate. To the reaction mixture was added taurine (13 parts), and the mixture was stirred to complete the reaction at 10° to 50°C and a pH ranging from 4 to 7. Successively, 1-aminobenzene-3-β-sulfatoethylsulfone (28 parts) was added to the reaction mixture, and the resulting mixture was stirred to complete the reaction at 30° to 80°C and a pH ranging from 4 to 7, thereby obtaining a desired intermediate dioxazine compound of the following formula in the free acid form.

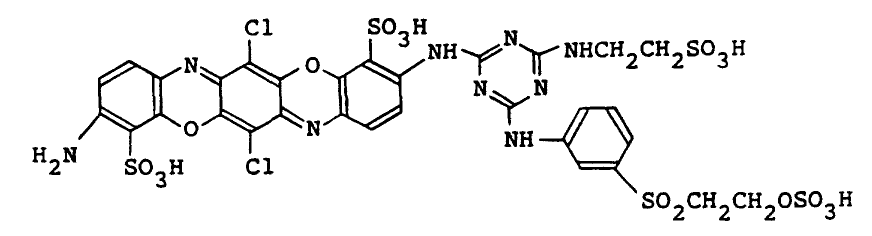

In the above procedure, the reaction order of the 1-aminobenzene-3-β-sulfatoethylsulfone and taurine was exchanged also to obtain the same intermediate dioxazine compound as above.

A mixture of the intermediate obtained above (103 parts) and cyanuric chloride (18 parts) in water (1500 parts) was stirred to complete the reaction at 0° to 30 °C, while keeping the pH within a range of 5 to 8. To the reaction mixture was added taurine (13 parts), and the mixture was stirred to complete the reaction at 10° to 50°C and a pH ranging from 4 to 7. Successively, taurine (13 parts) was additionally added thereto, and the mixture was stirred to complete the reaction at 30 ° to 80 °C and a pH ranging from 4 to 7, thereby obtaining the same asymmetric dioxazine compound as in Example 155.

### Example 165

A mixture of a dioxazine compound (55 parts) having the following formula in the free acid form, 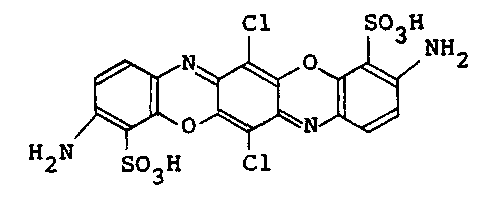 and cyanuric chloride (18 parts) in water (1500 parts) was stirred to complete the reaction at 0° to 30 °C, while keeping the pH within a range of 5 to 8. To the reaction mixture was added taurine (13 parts) and the mixture was stirred to complete the reaction at 10° to 50 °C and a pH ranging from 4 to 7. Thereafter, cyanuric chloride (18 parts) was added thereto, and the mixture was stirred to complete the reaction at 0° to 30°C and a pH ranging from 5 to 8. Further, 1-aminobenzene-3-β-sulfatoethylsulfone (28 parts) was added thereto, and the mixture was stirred to complete the reaction at 10° to 50°C and a pH ranging from 4 to 7, thereby obtaining an intermediate dioxazine compound of the following formula in the free acid form.

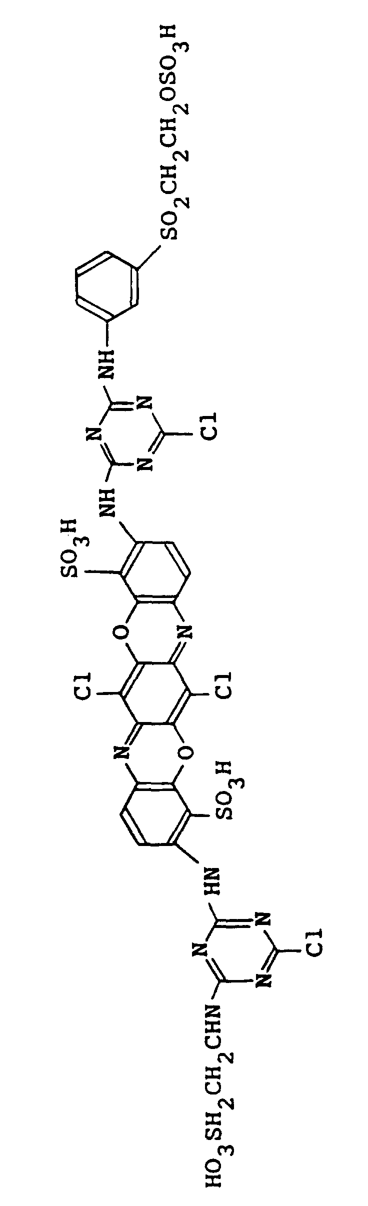

The above procedure was repeated, provided that the reaction order of the 1-aminobenzene-3-β-sulfatoethylsulfone and taurine was exchanged, thereby also obtaining the same intermediate dioxazine compound as above.

A mixture of the intermediate (118 parts) obtained above and taurine (26 parts) in water (1500 parts) was stirred to complete the reaction at 30° to 80°C and pH ranging from 4 to 7, thereby obtaining a compound, which was found to be the same as the asymmetric dioxazine compound obtained in Example 155.

### Example 166

Example 155 was repeated, provided that 1-N-ethylaminobenzene-3-β-sulfatoethylsulfone was used in place of the taurine used in Example 155 in an amount equimolar thereto, thereby obtaining a desired asymmetric dioxazine compound of the following formula in the free acid form.

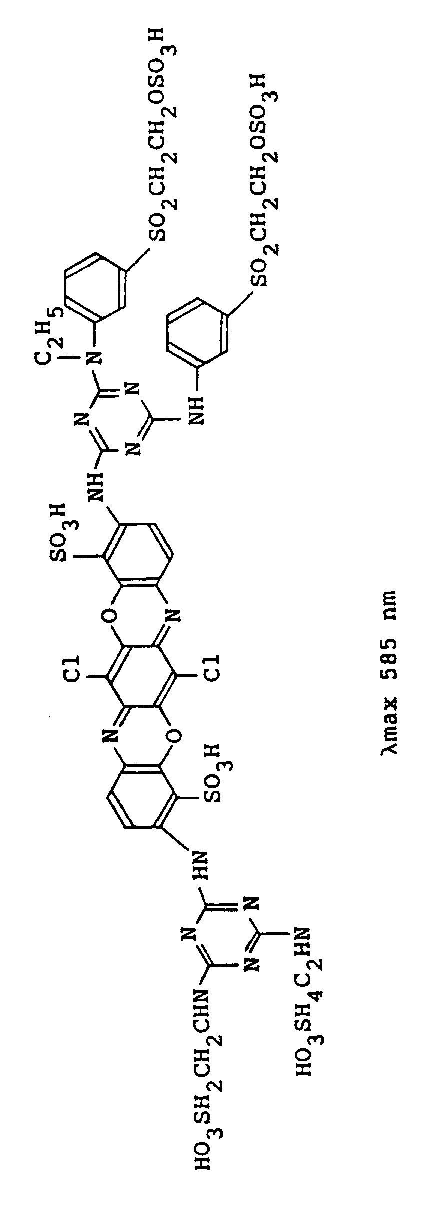

### Example 167

Example 155 was repeated, provided that amines described below were used in place of taurine used in Example 155 in each amount equimolar thereto, obtaining corresponding asymmetric dioxazine compounds.

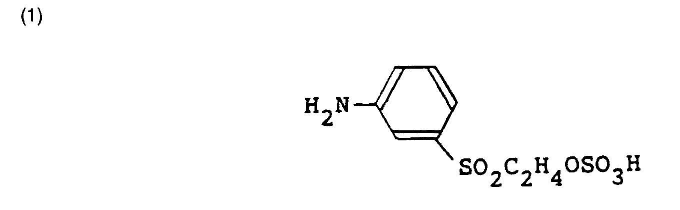

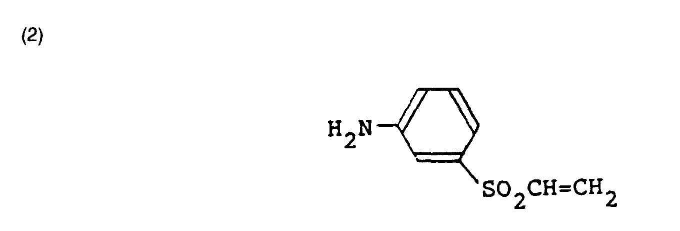

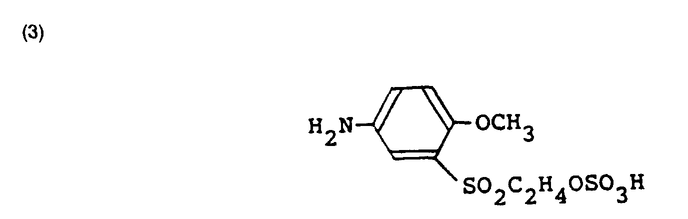

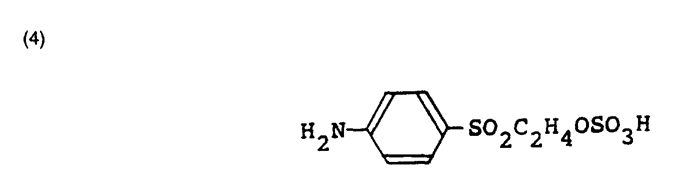

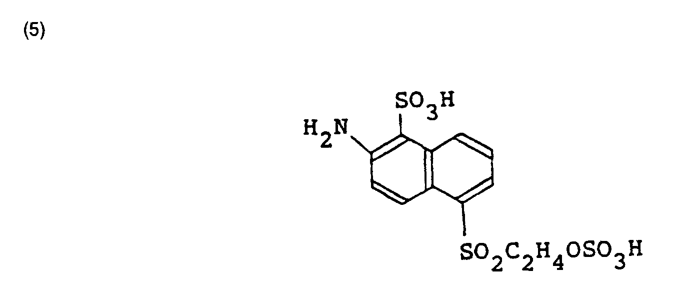

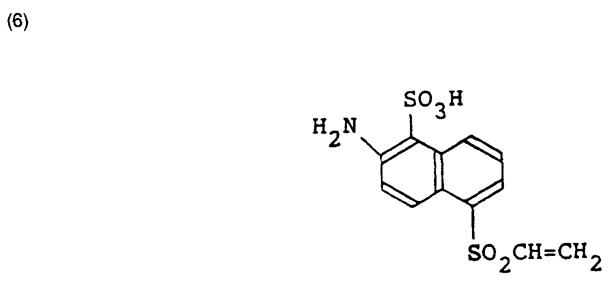

(7) H₂N-(CH₂)₂OC₂H₄SO₂C₂H₄Cl

(8) H₂N-(CH₂)₂OC₂H₄SO₂CH=CH₂

### Example 168

Example 159 was repeated, provided that the amines (1) to (8) described in Example 167 were used in place of the taurine used in Example 159 in each amount equimolar thereto, thereby obtaining corresponding asymmetric dioxazine compounds.

### Example 169

Each asymmetric dioxazine compound obtained in Examples 166 to 168 (each of 0.1, 0.3 and 0.6 parts) were dissolved in water (200 parts), and sodium sulfate (10 parts) and cotton (10 parts) were added thereto. The bath was heated to 60 °C and then sodium carbonate (4 parts) was added thereto. Thereafter, dyeing was continued for 1 hour at that temperature. The cotton taken out was washed with water, soaped, again washed with water and then dried to obtain each dyed product of a reddish blue color superior in fastness properties, particularly those such as chlorine fastness. Each dioxazine compound was found to be superior in build-up property.

### Example 170

Using the asymmetric dioxazine compounds used in Examples 158, 162 and 169, each color paste having the following composition was prepared.

| | |
|---|---|
| Asymmetric dioxazine compound | 5 parts |
| Urea | 5 parts |
| Sodium alginate (5%) stock paste | 50 parts |
| Hot water | 25 parts |
| Sodium hydrogencarbonate | 2 parts |
| Balance (water) | 13 parts |

Mercerized cotton broad cloth was printed with the color paste having the above composition, pre-dried and steamed at 100°C for 5 minutes. The treated cloth was washed with hot water, soaped, again washed with hot water and then dried. Thus, there was obtained each printed product of a blue color excellent in fastness properties, particularly those such as chlorine fastness.

### Example 171

A mixture of an intermediate dioxazine compound (59 parts) having the following formula in the free acid form, 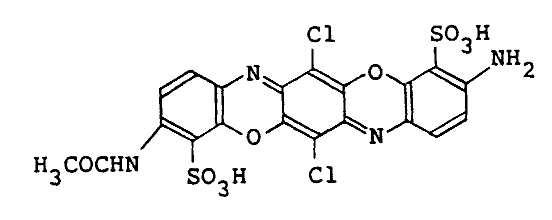 and cyanuric chloride (18 parts) in water (1500 parts) was stirred to complete the reaction at 0° to 30 °C, while keeping the pH within a range of 5 to 8. Sulfanilic acid (17 parts) was added thereto, and the mixture was stirred to complete the reaction at 10° to 50°C and a pH ranging from 5 to 8. Further, 1-aminobenzene-3-β-sulfatoethylsulfone (28 parts) was added thereto, and the mixture was stirred to complete the reaction at 30 ° to 80 °C and a pH ranging from 3 to 6, thereby obtaining a desired asymmetric dioxazine compound of the following formula in the free acid form.

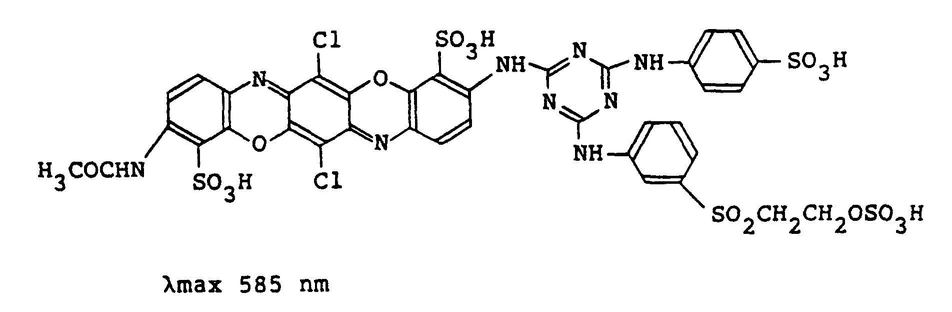

The above intermediate dioxazine compound had been prepared by stirring a mixture of a dioxazine compound (55 parts) of the following formula in the free acid form, 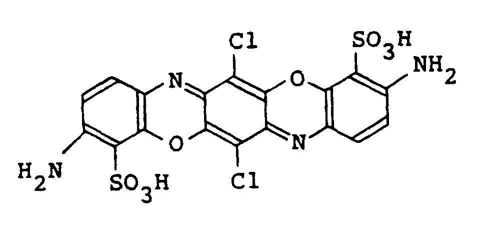 and acetic anhydride (10 parts) in water (500 parts) at 10° to 50°C and a pH ranging from 2 to 7.

### Example 172

Example 171 was repeated, provided that an intermediate dioxazine compound of the following formula in the free acid form, 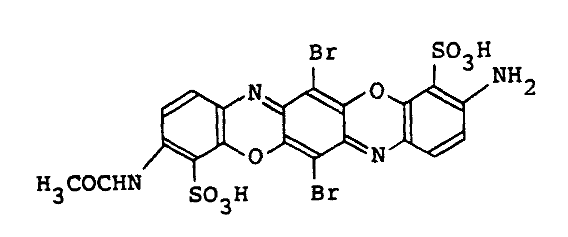 was used in place of that used in Example 171 in an amount equimolar thereto, thereby obtaining a desired asymmetric dioxazine compound of the following formula in the free acid form,

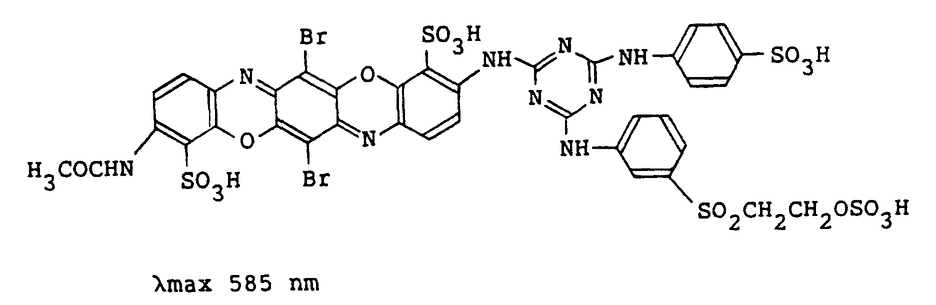

The above intermediate dioxazine compound had been prepared in the same manner as in Example 171 excepting using a dioxazine compound of the following formula in the free acid form, 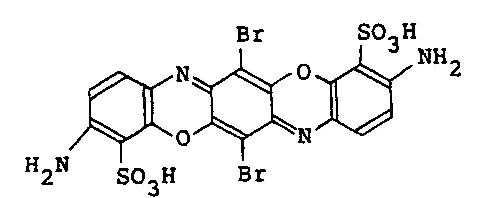 in place of that used in Example 171 in an amount equimolar thereto.

### Example 173

Each asymmetric dioxazine compound obtained in Examples 171 and 172 (each of 0.1, 0.3 and 0.6 parts) was dissolved in water (200 parts), and sodium sulfate (10 parts) and cotton (10 parts) were added thereto. The bath was heated to 60 °C and then sodium carbonate (4 parts) was added thereto. Thereafter, dyeing was continued for 1 hour at that temperature. The cotton taken out was washed with water, soaped, again washed with water and then dried to obtain each dyed product of a reddish blue color superior in fastness properties, particularly those such as chlorine fastness. Each dioxazine compound was found to be superior in build-up property.

### Examples 174 to 285

Example 171 was repeated, provided that intermediate dioxazine compounds and amines as described in the following table were used in place of the intermediate dioxazine compound and 1-aminobenzene-3-β-sulfatoethylsulfone used in Example 171, respectively, in respective amounts equimolar thereto, thereby obtaining corresponding asymmetric dioxazine compounds.

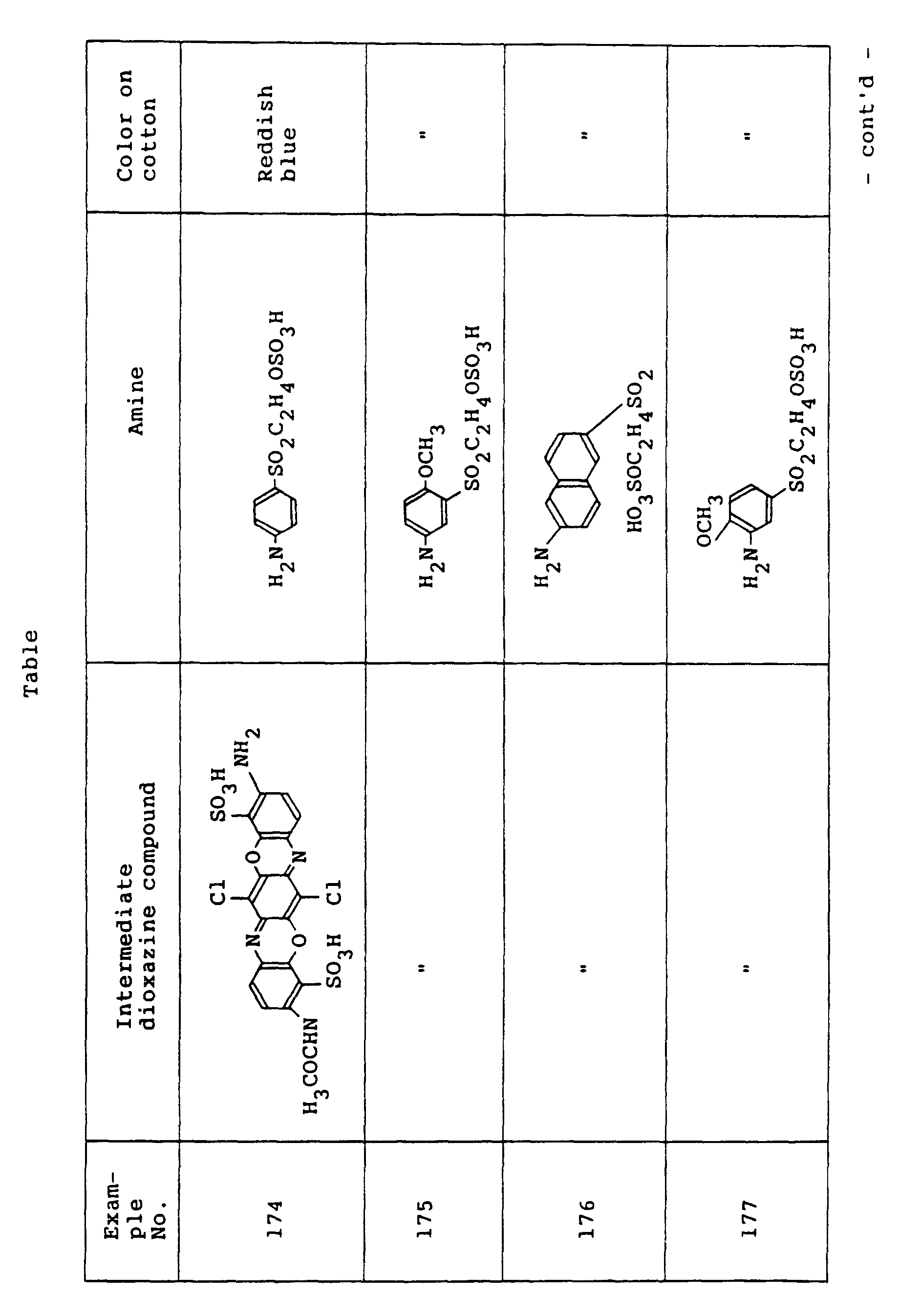

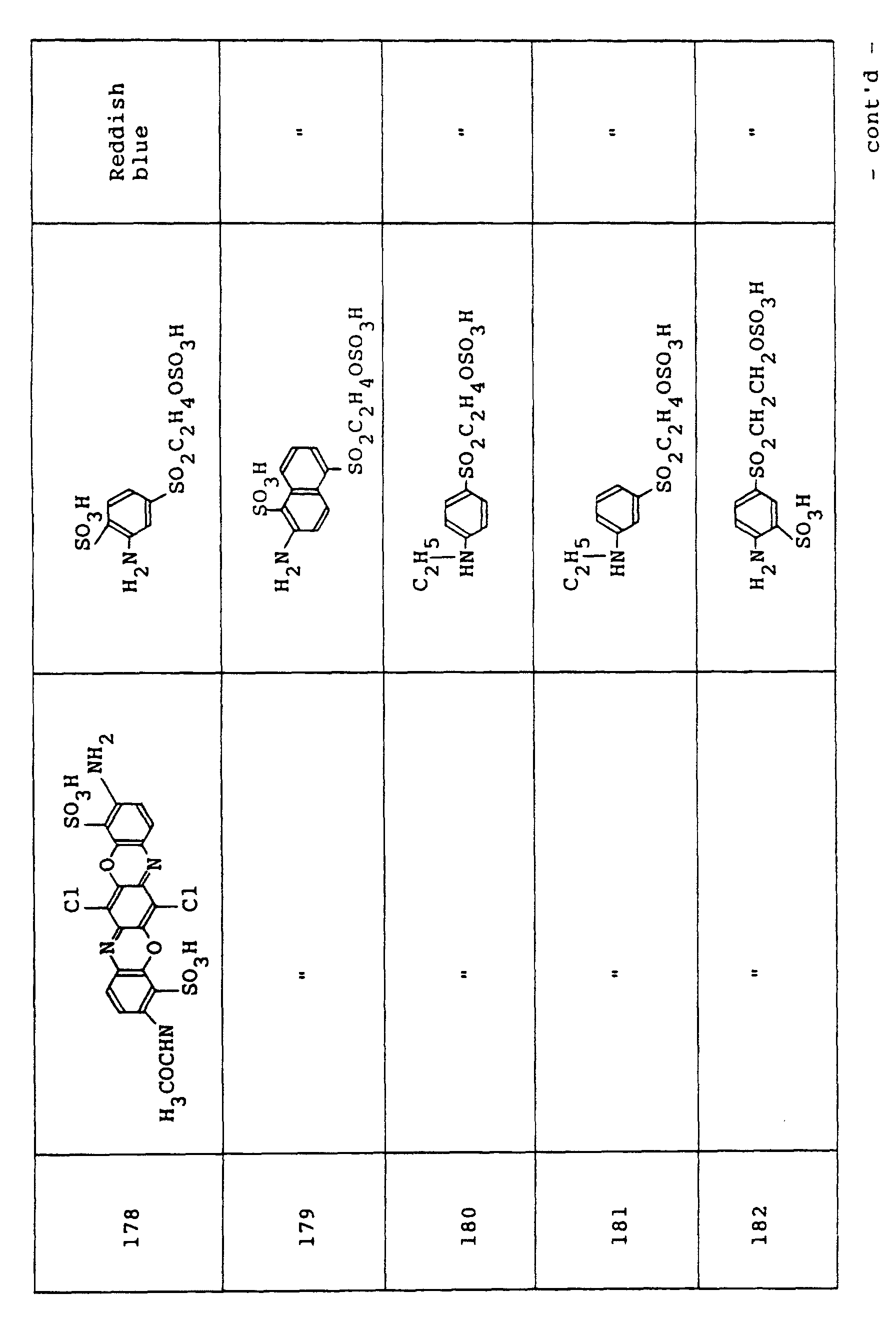

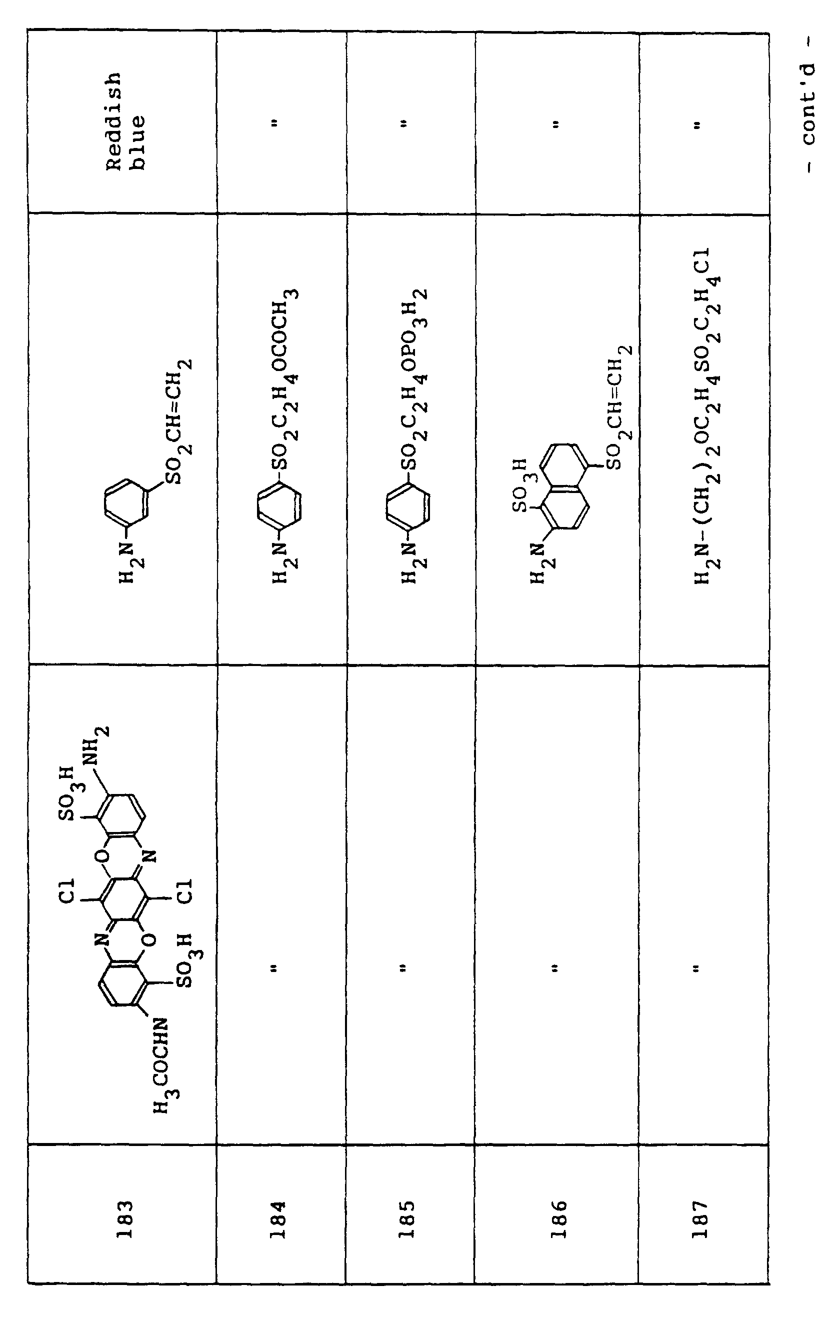

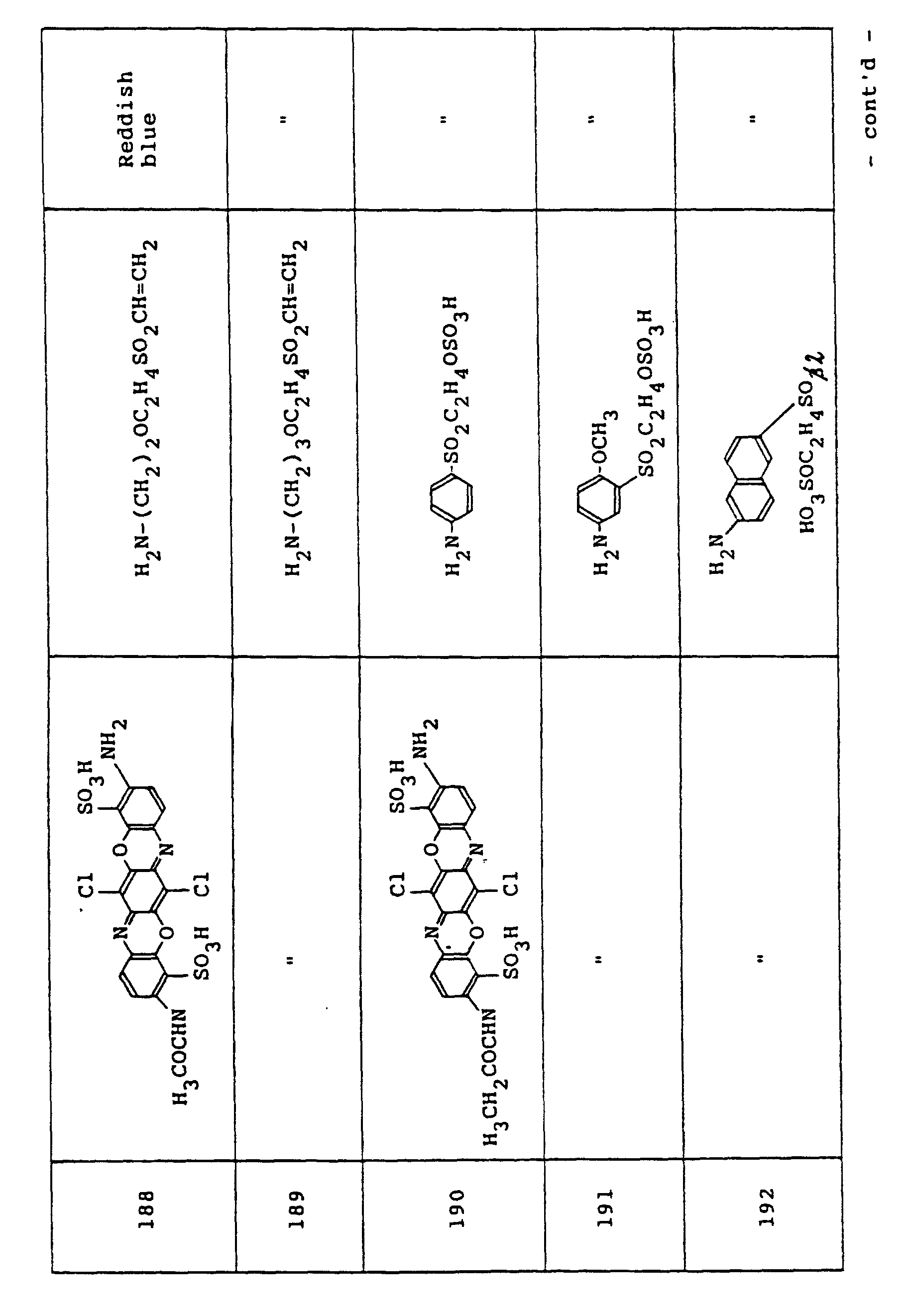

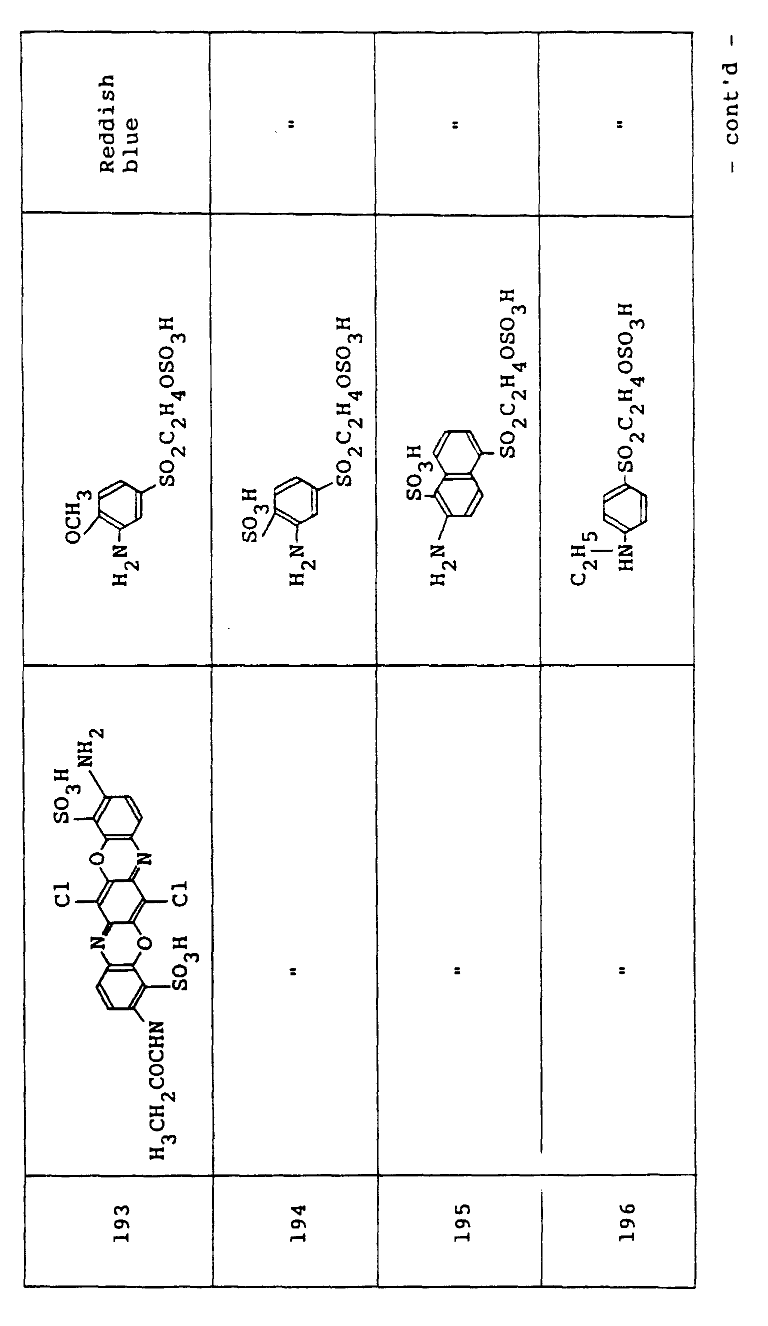

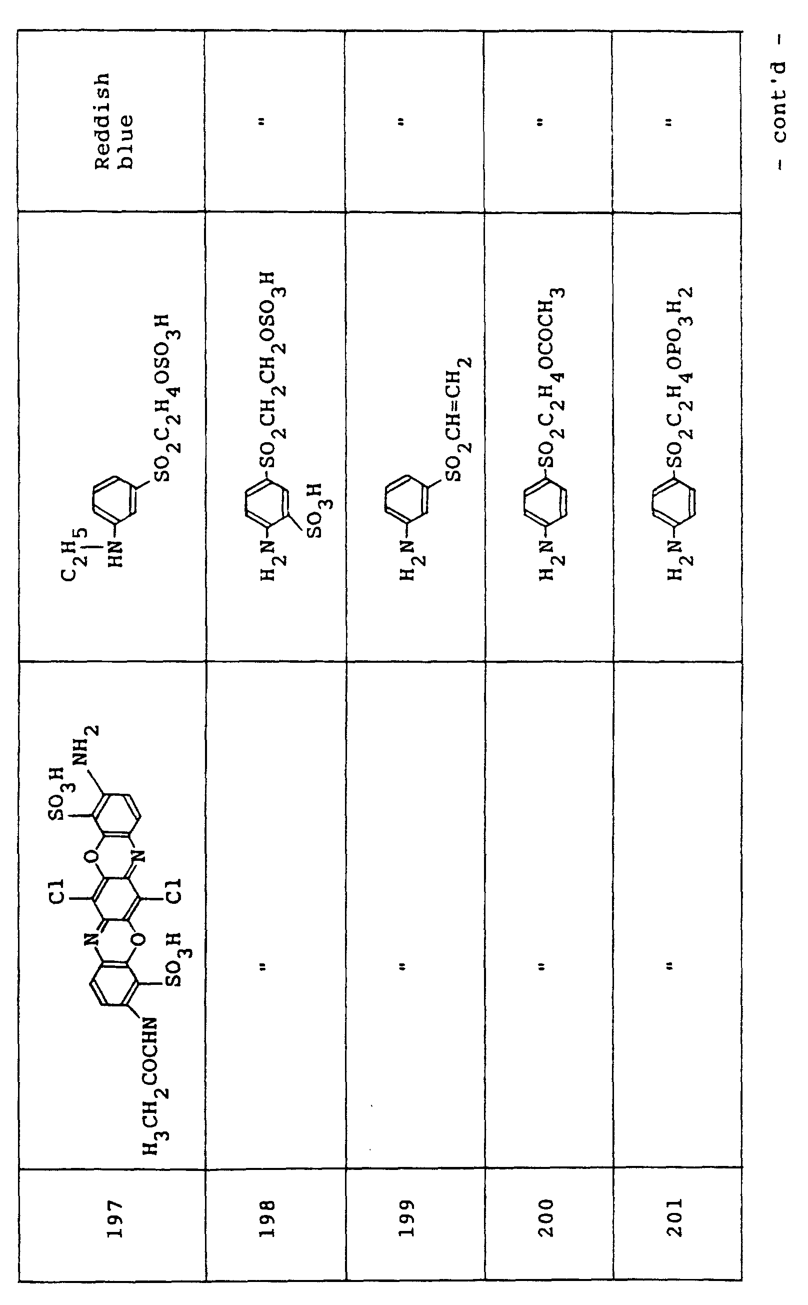

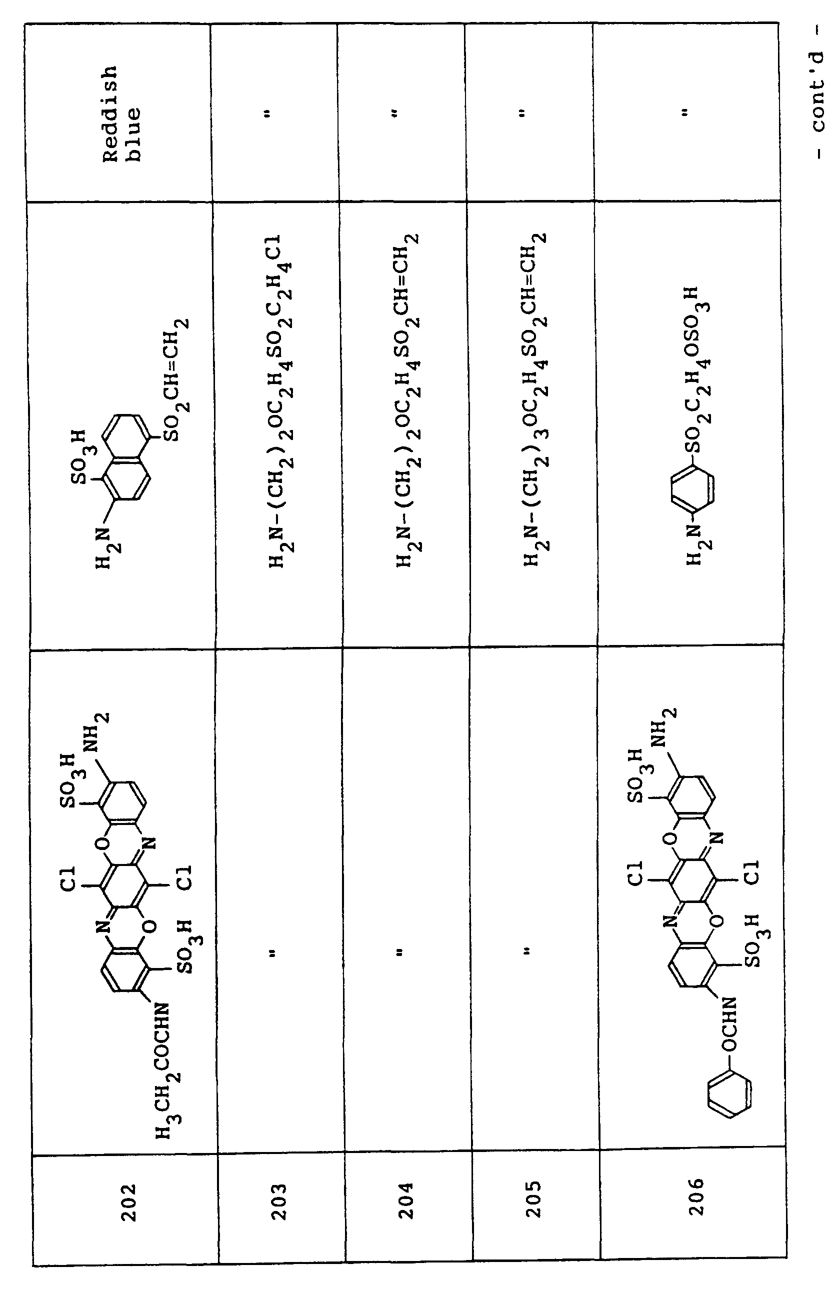

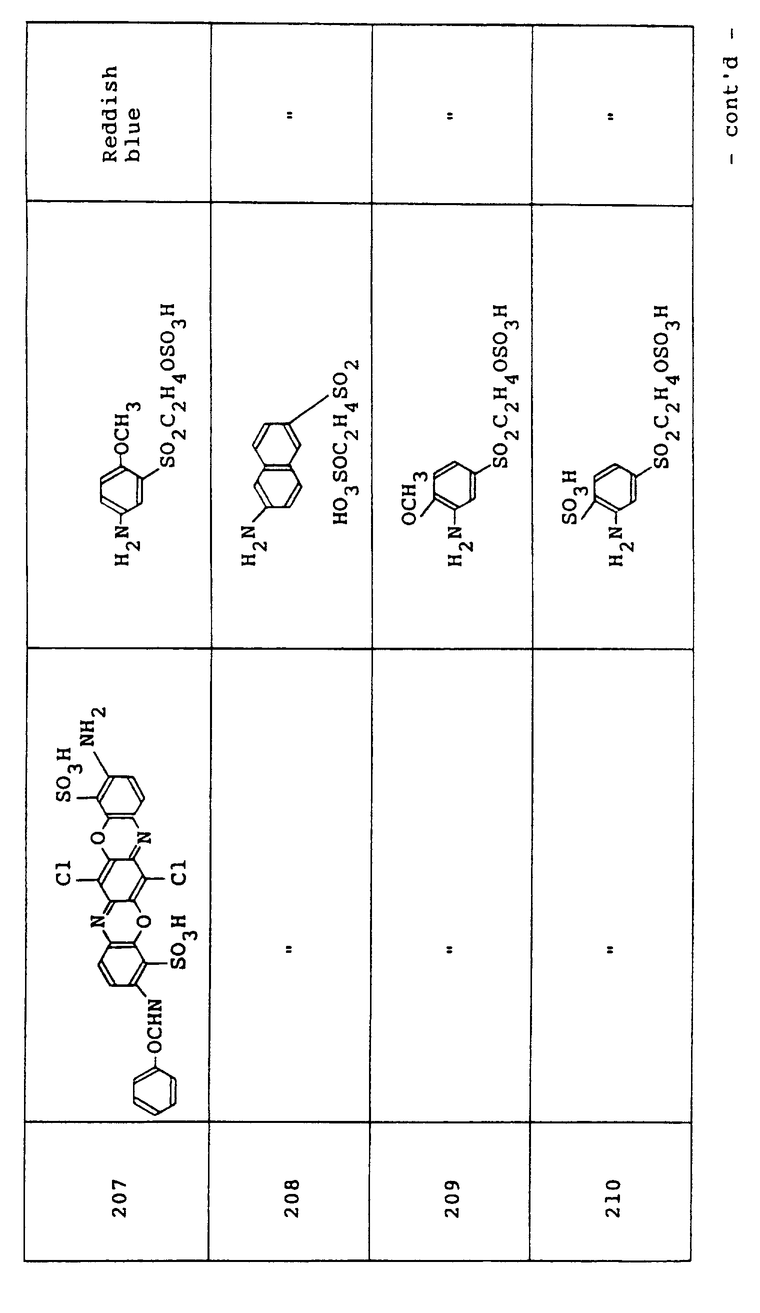

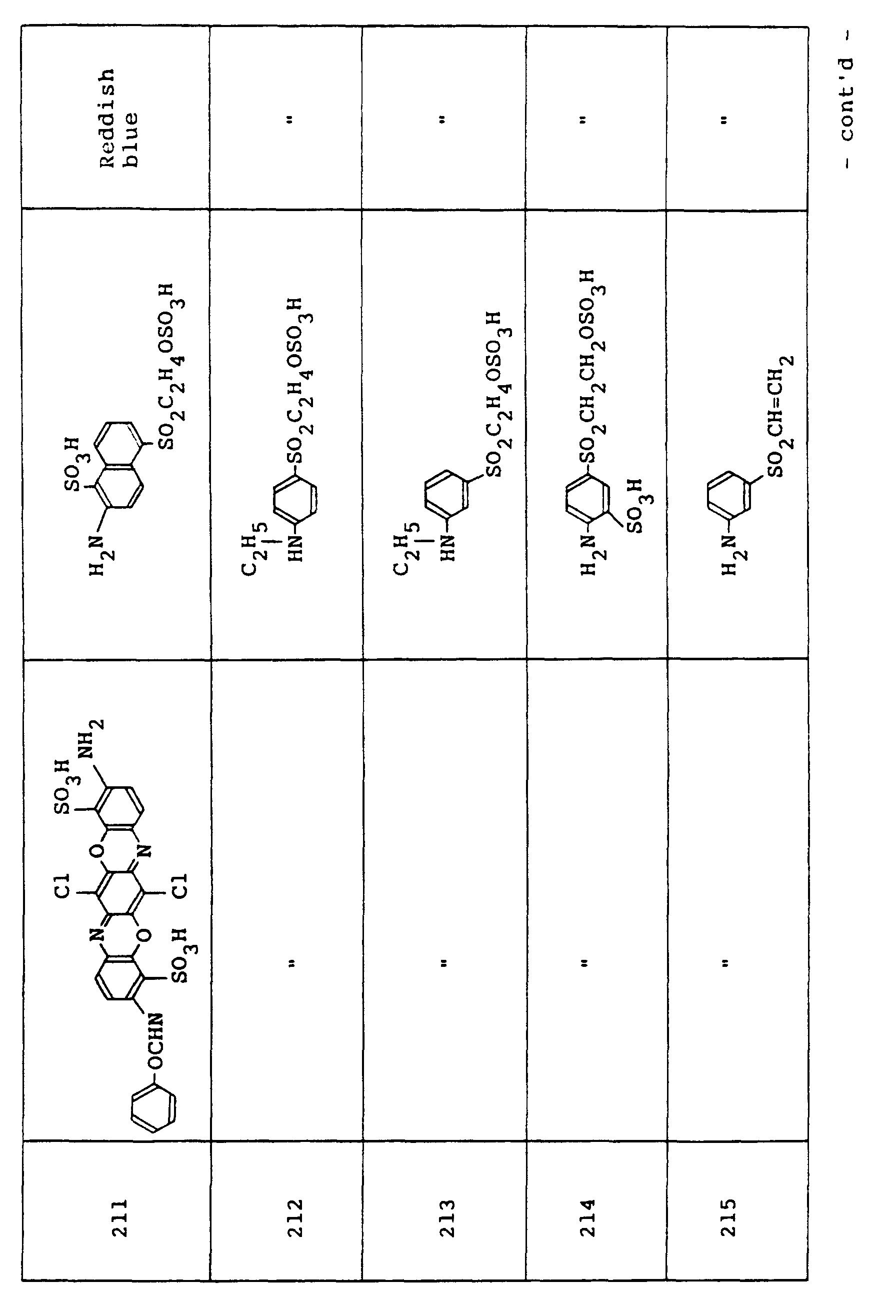

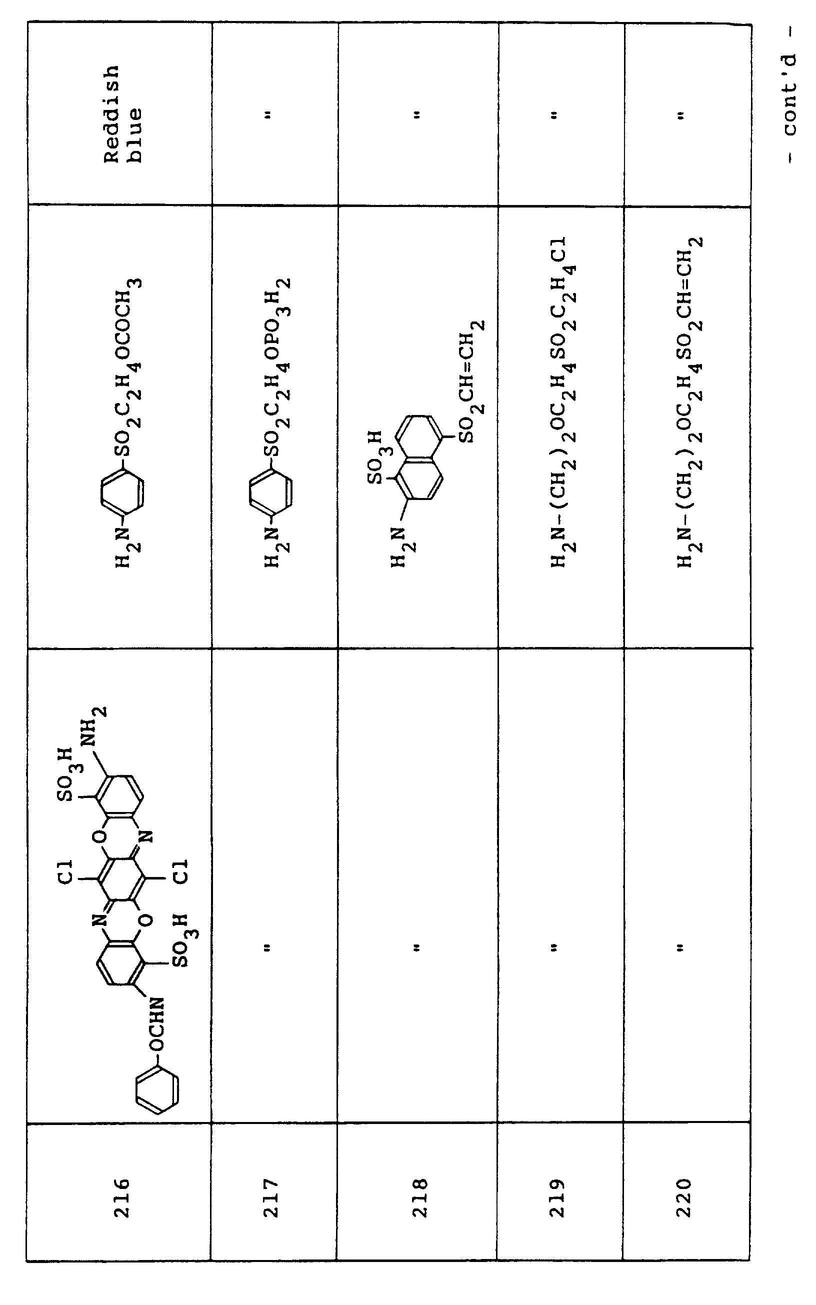

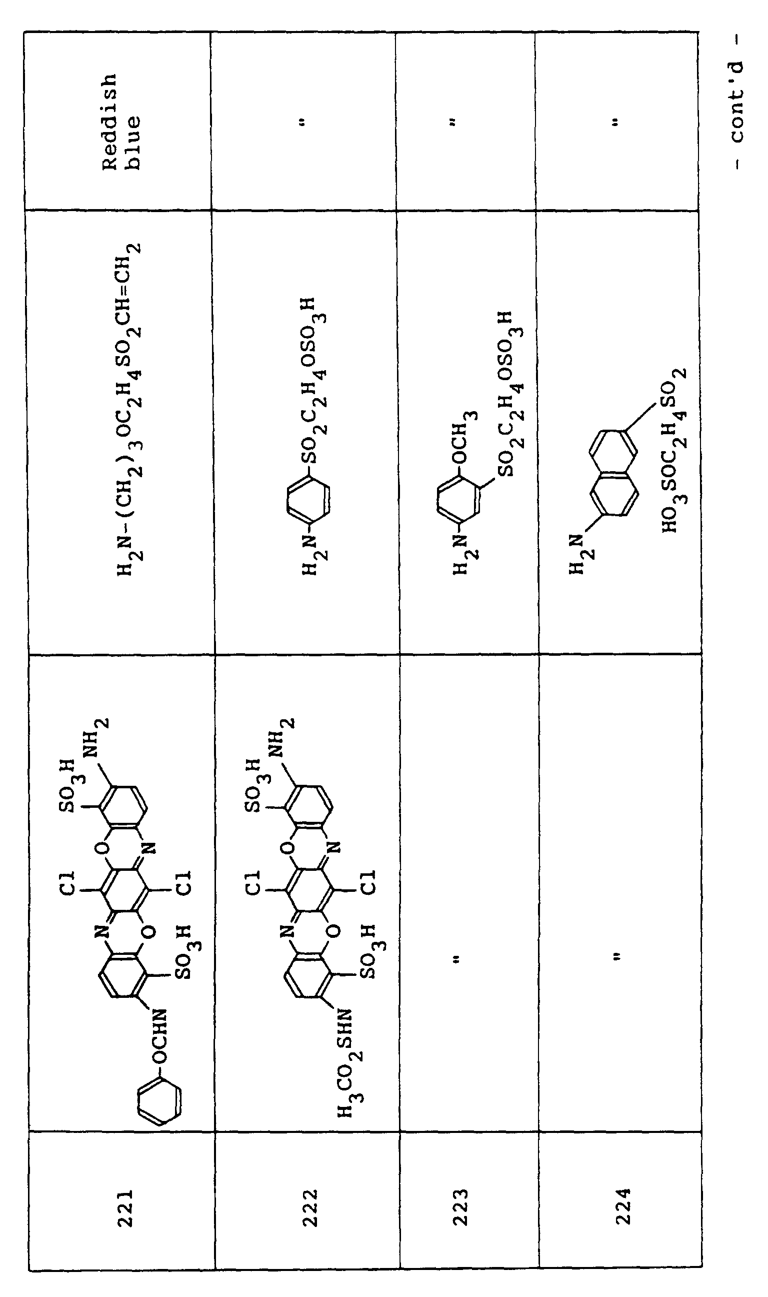

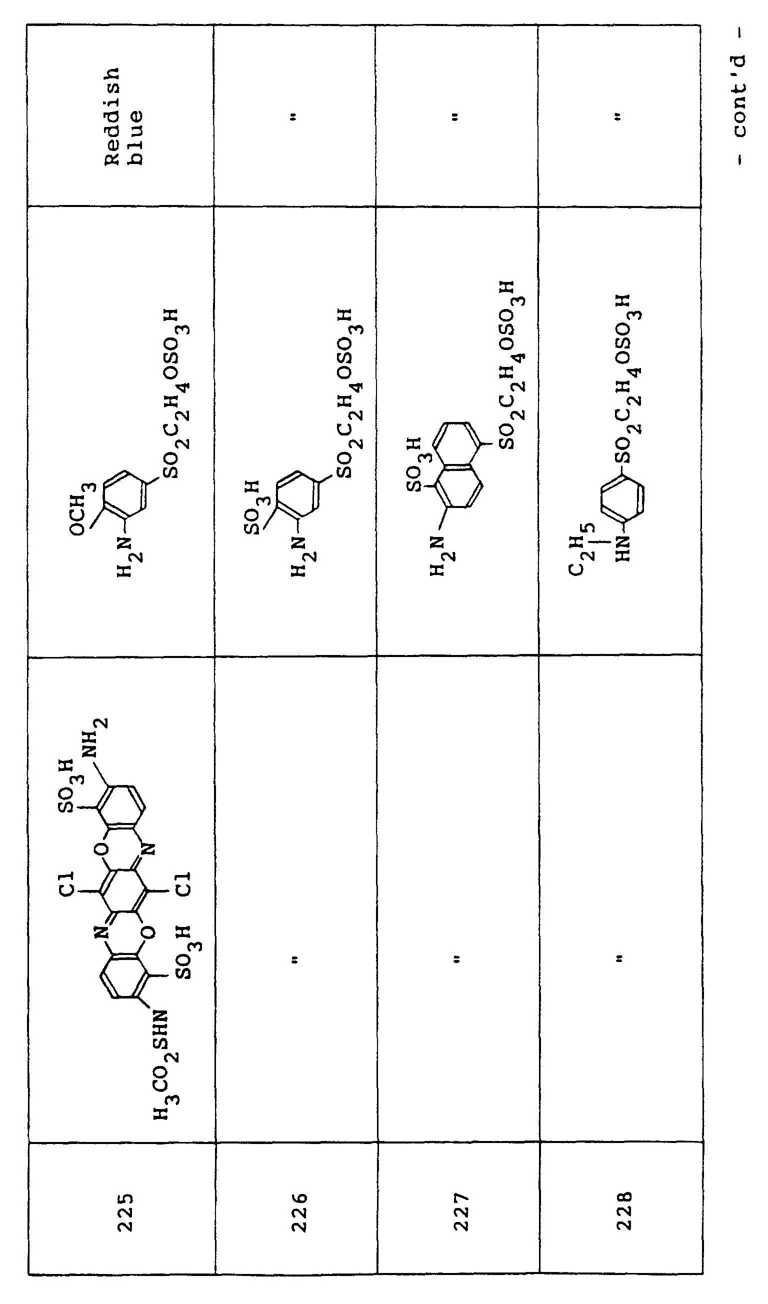

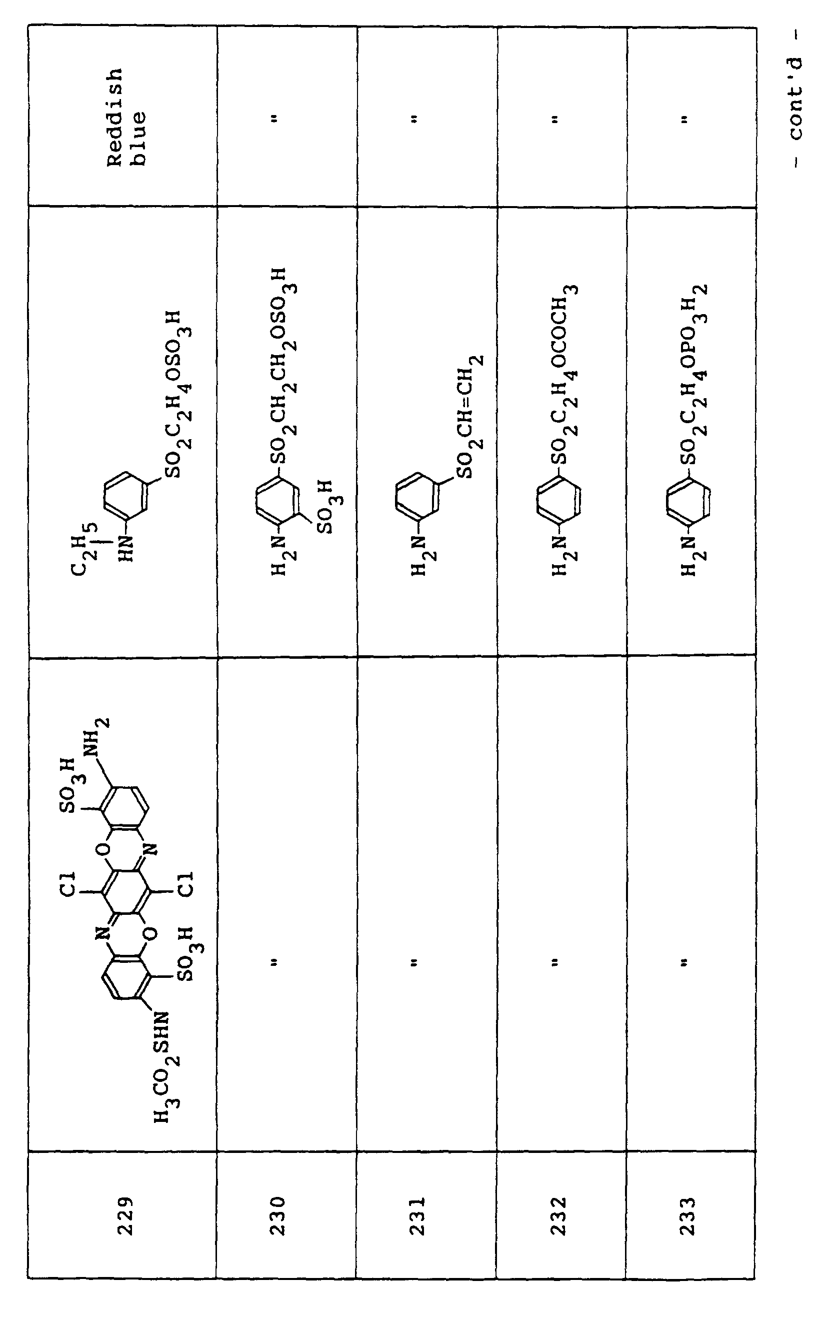

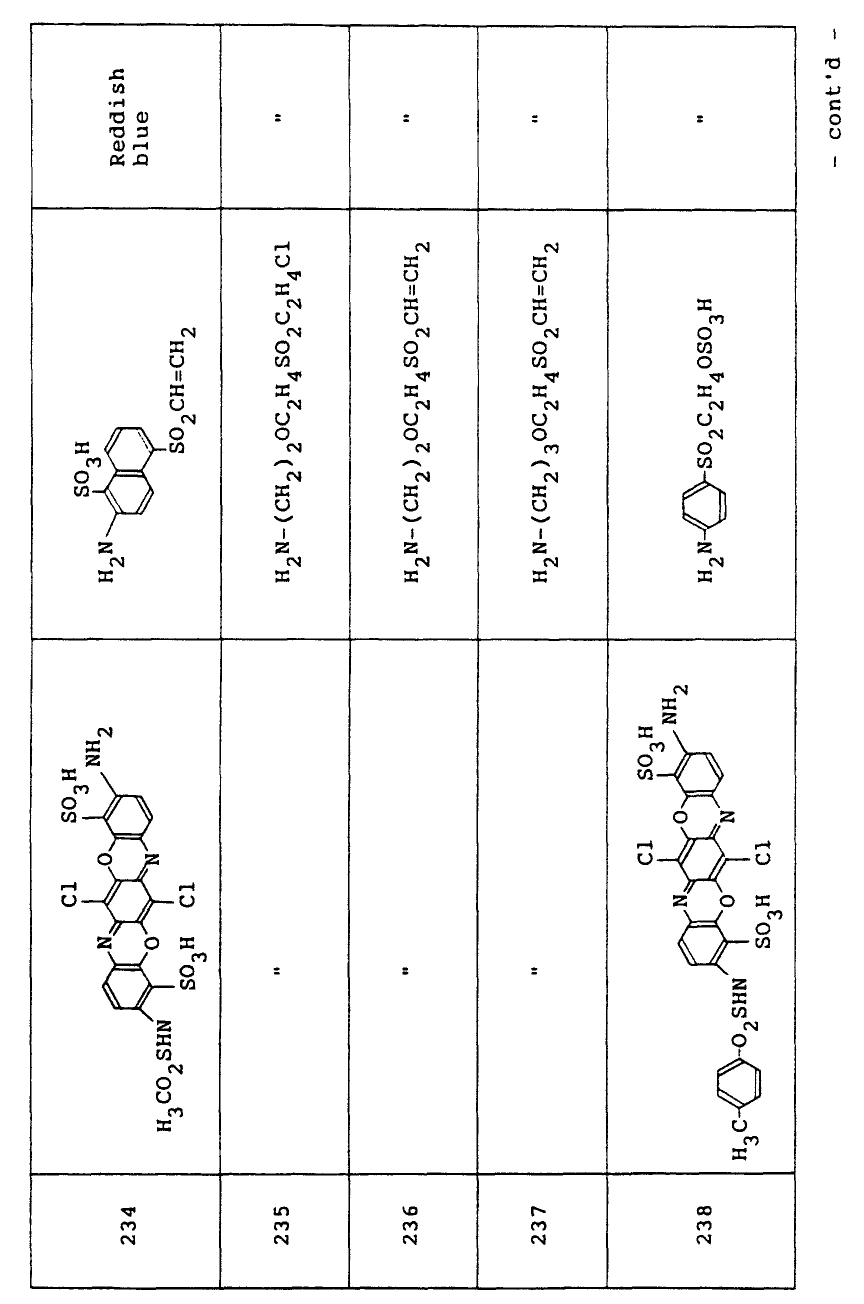

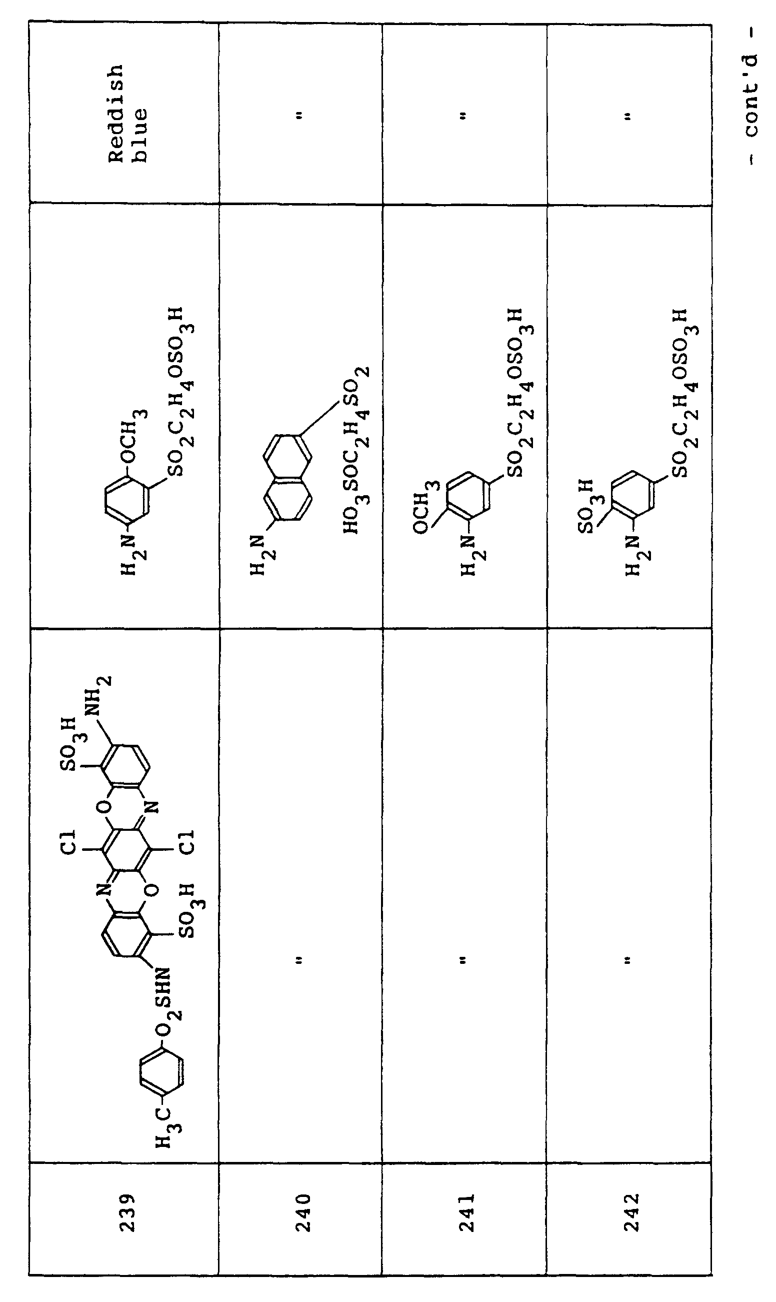

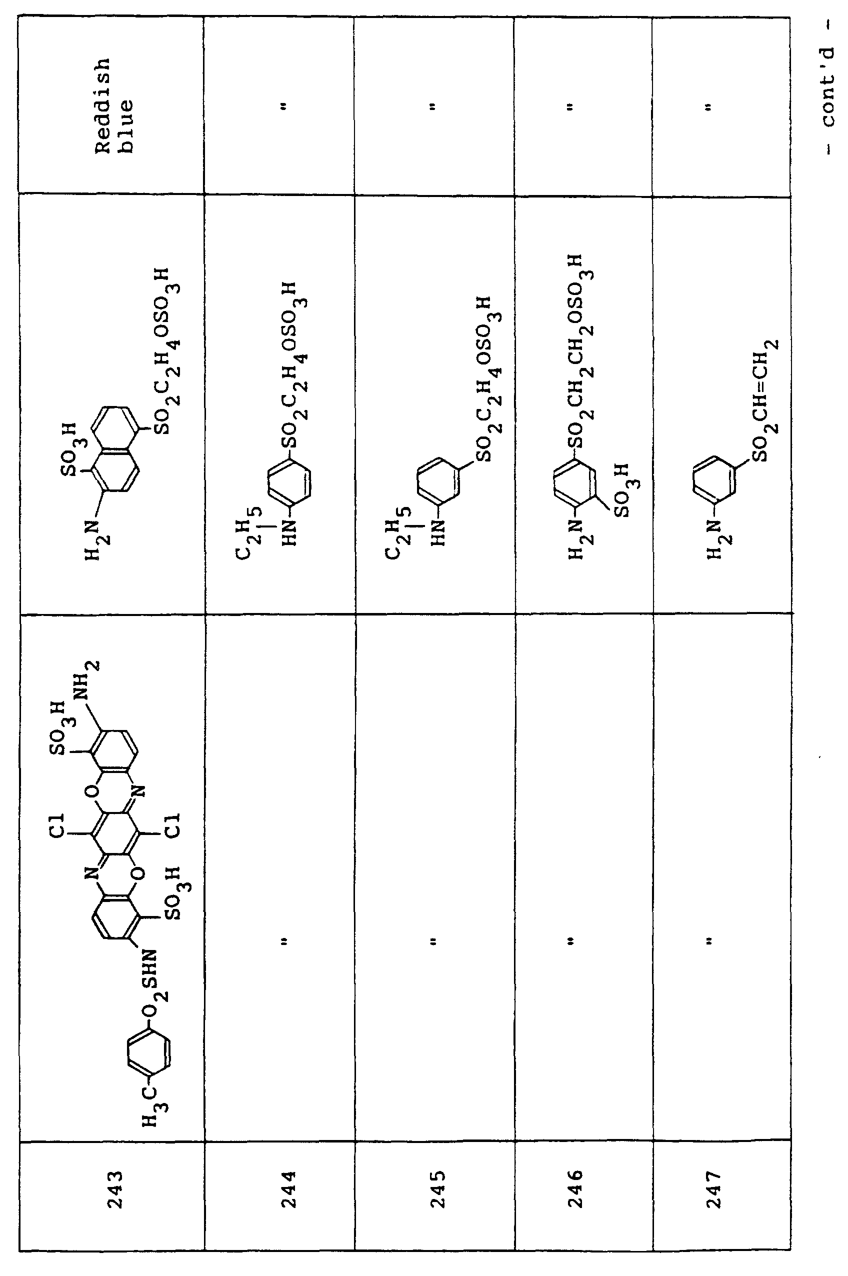

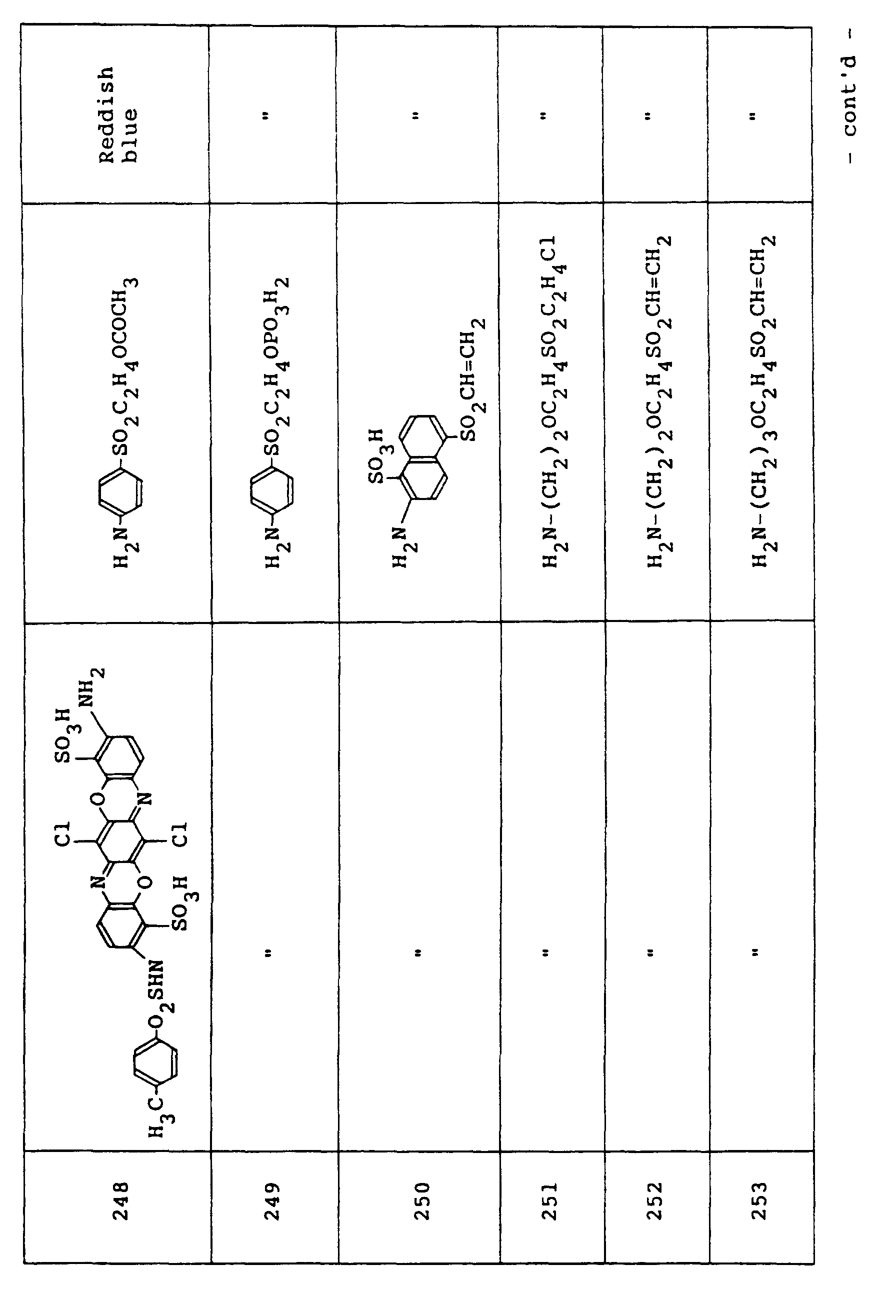

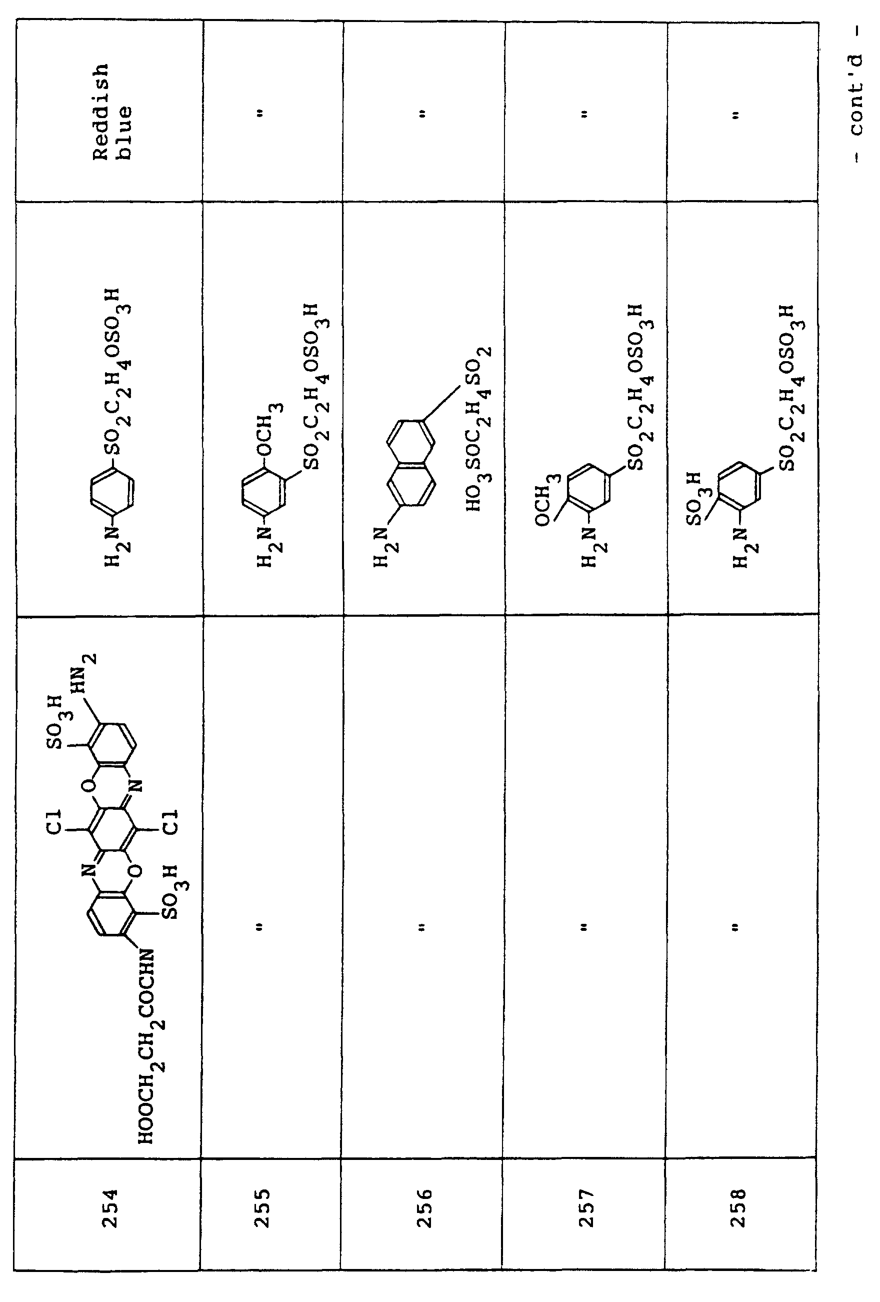

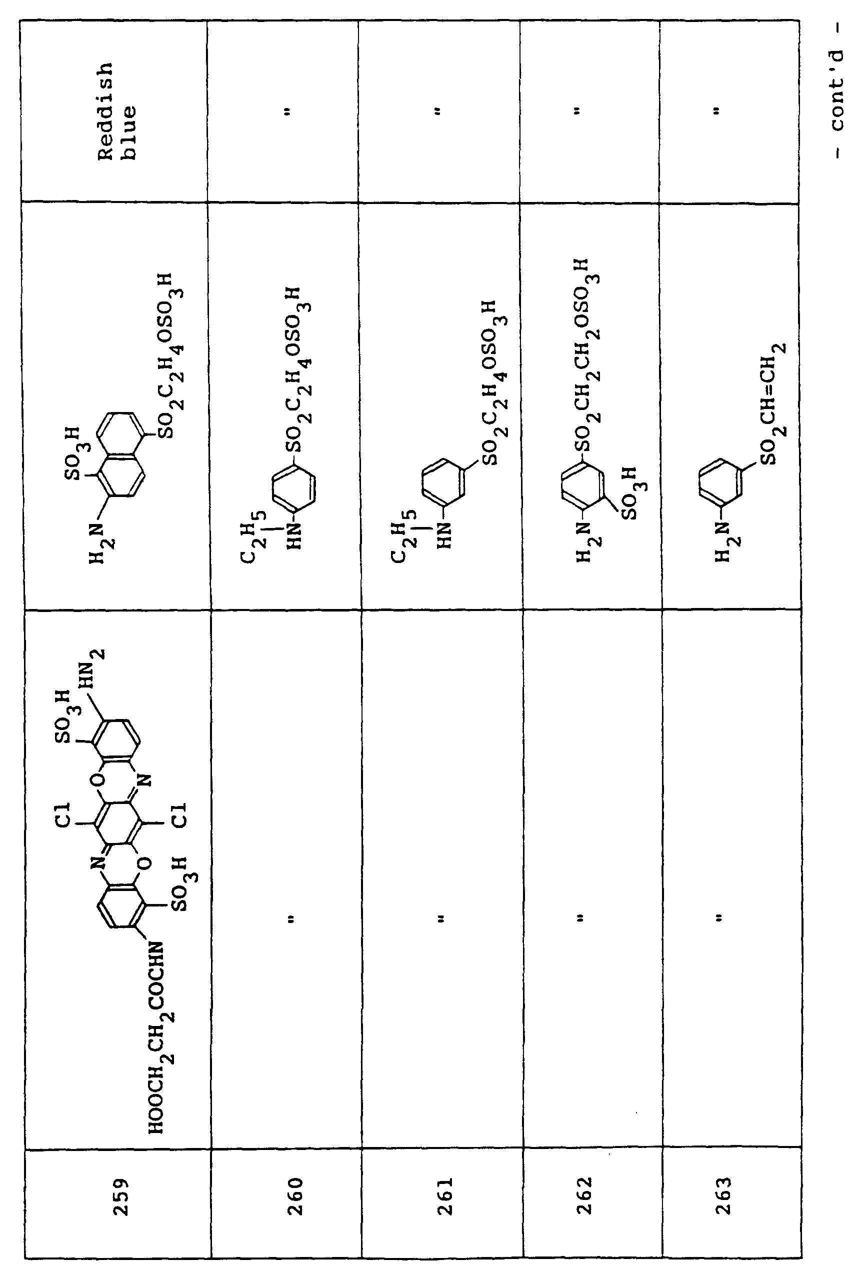

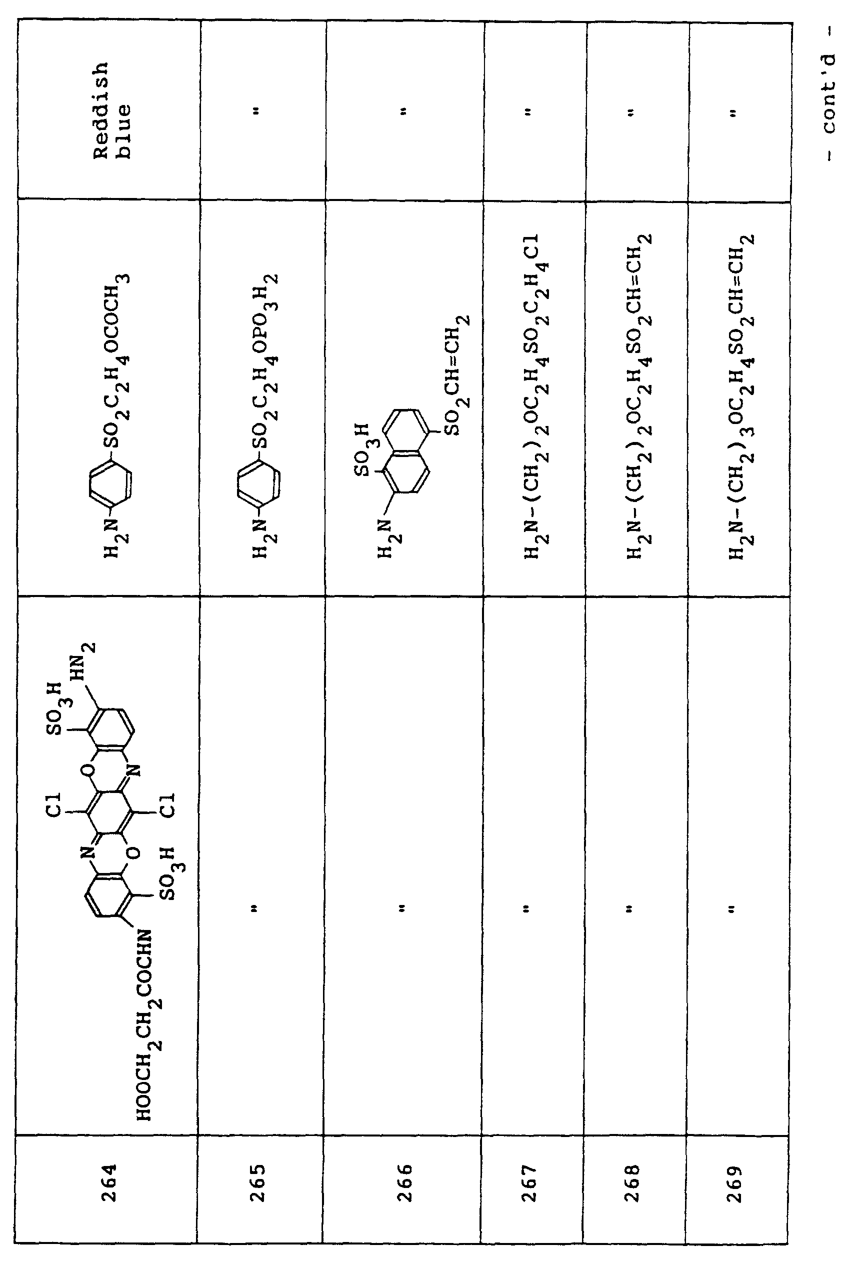

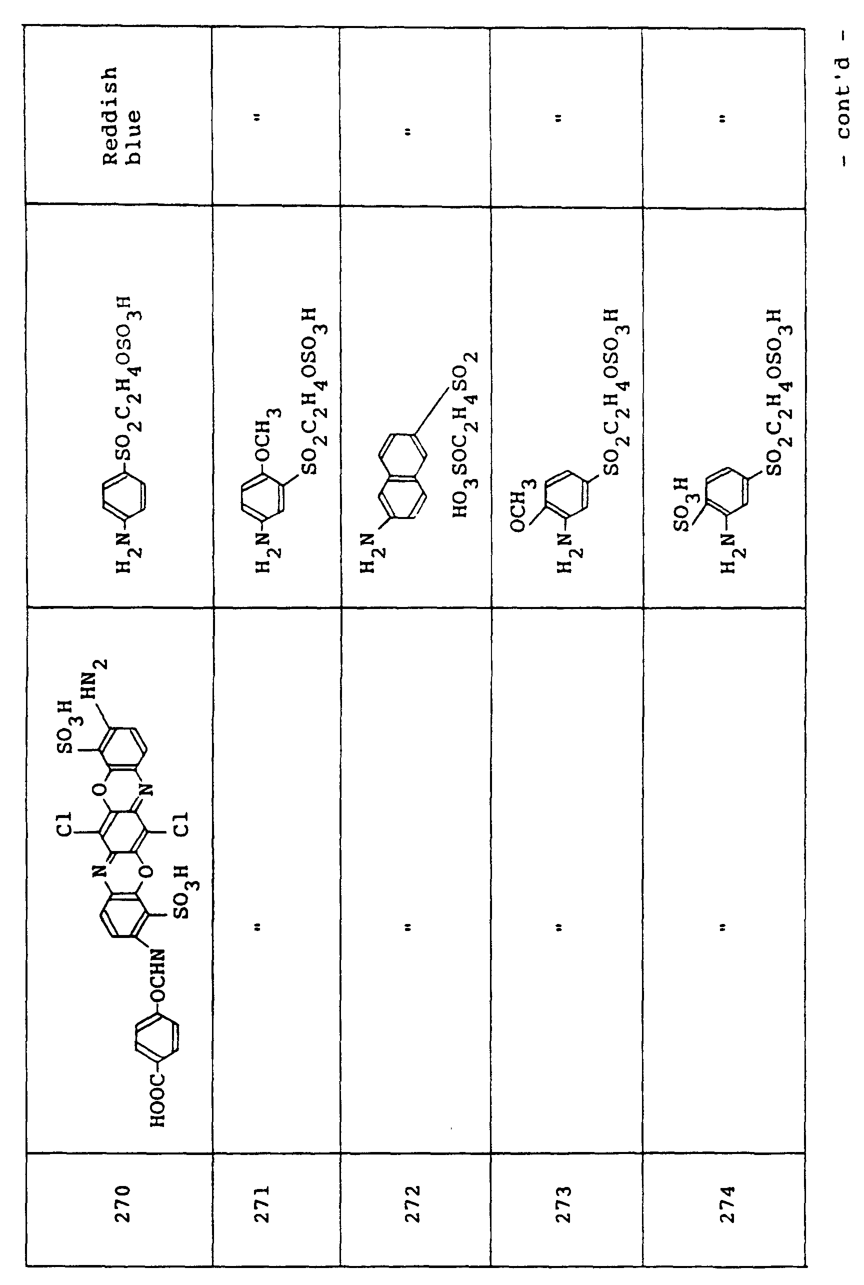

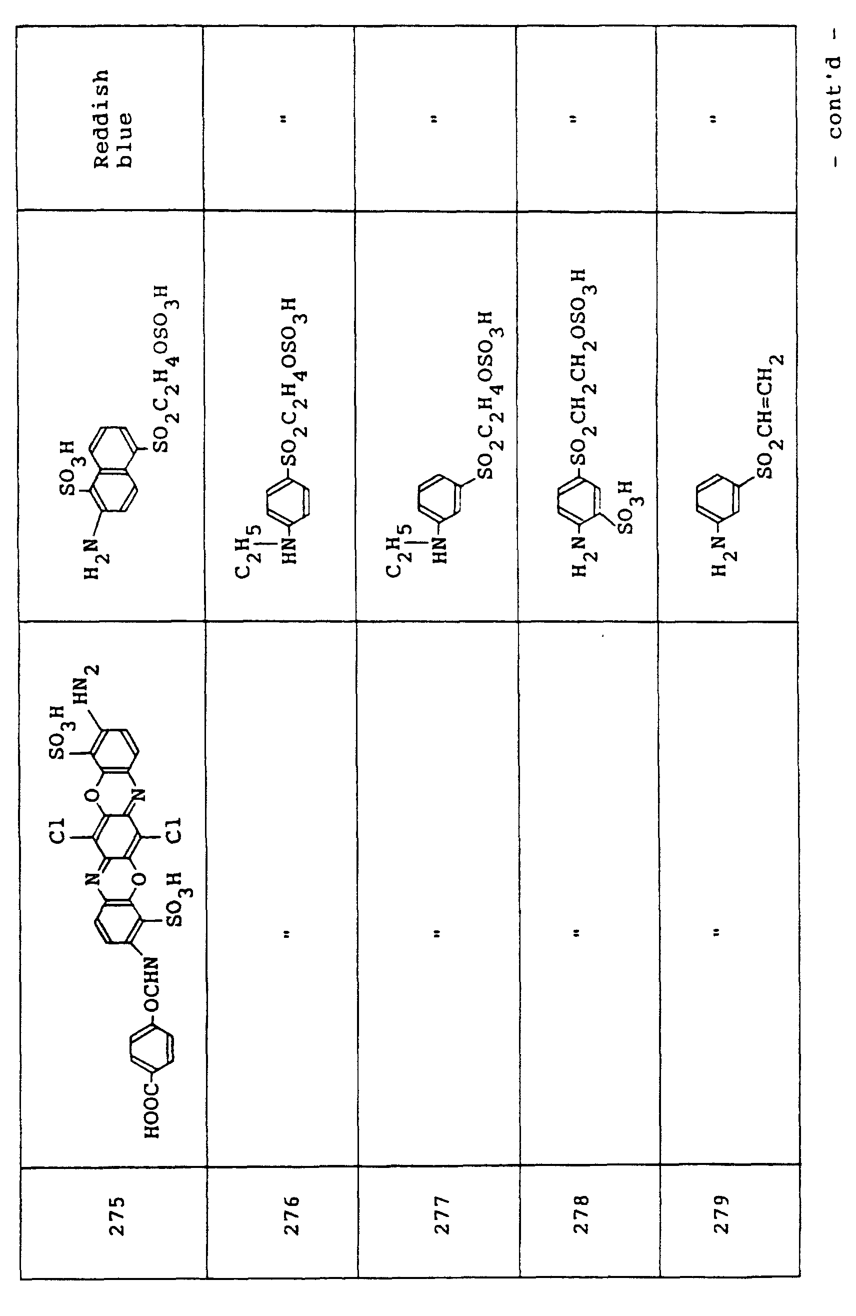

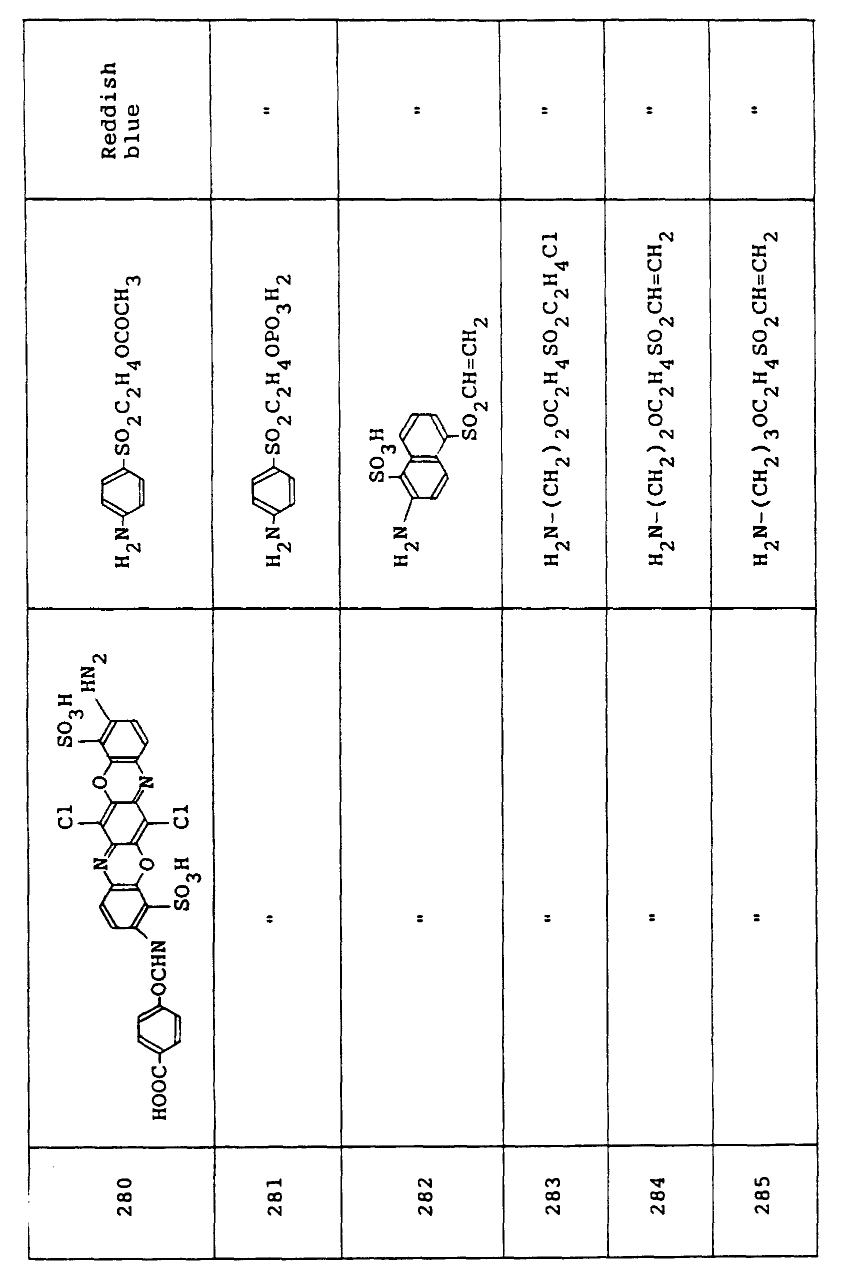

### Example 286

Example 171 was repeated, provided that an intermediate dioxazine compound of the following formula in the free acid form, 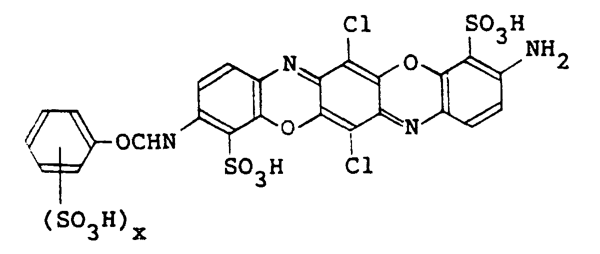 wherein x is a sulfonation degree of about 1.2, was used in place of that used in Example 171 in an amount equimolar thereto, thereby obtaining a desired asymmetric dioxazine compound of the following formula in the free acid form, 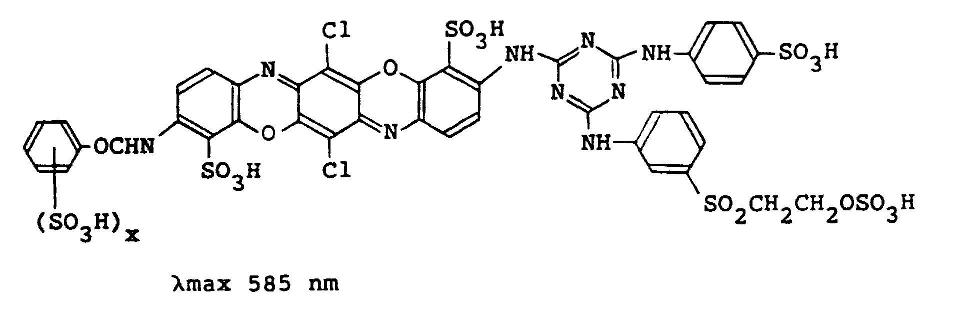 wherein x is as defined above.

The above intermediate dioxazine compound had been prepared by adding the same intermediate dioxazine compound (65 parts) used in Example 206 to 5 to 30% oleum (500 parts), stirring the mixture to complete the reaction at 20 ° to 70 °C, pouring the reaction mixture into ice water and then salting out it.

### Examples 287 to 302

Example 286 was repeated, provided that amines described in the following table was used in place of 1-aminobenzene-3-β-sulfatoethylsulfone used in Example 286 in an amount equimolar thereto, thereby obtaining corresponding asymmetric dioxazine compounds.

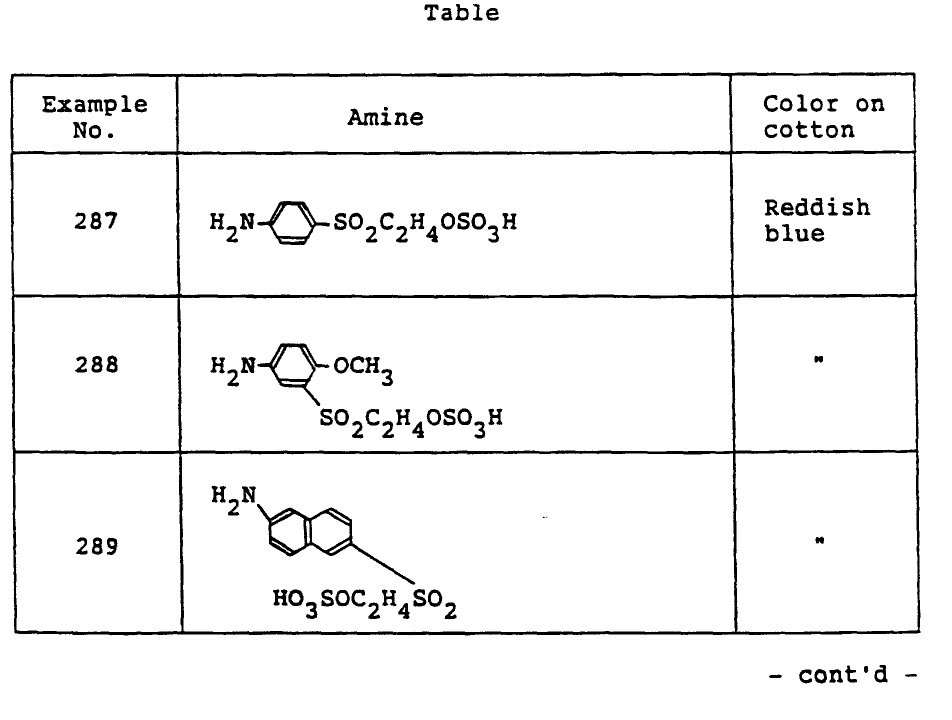

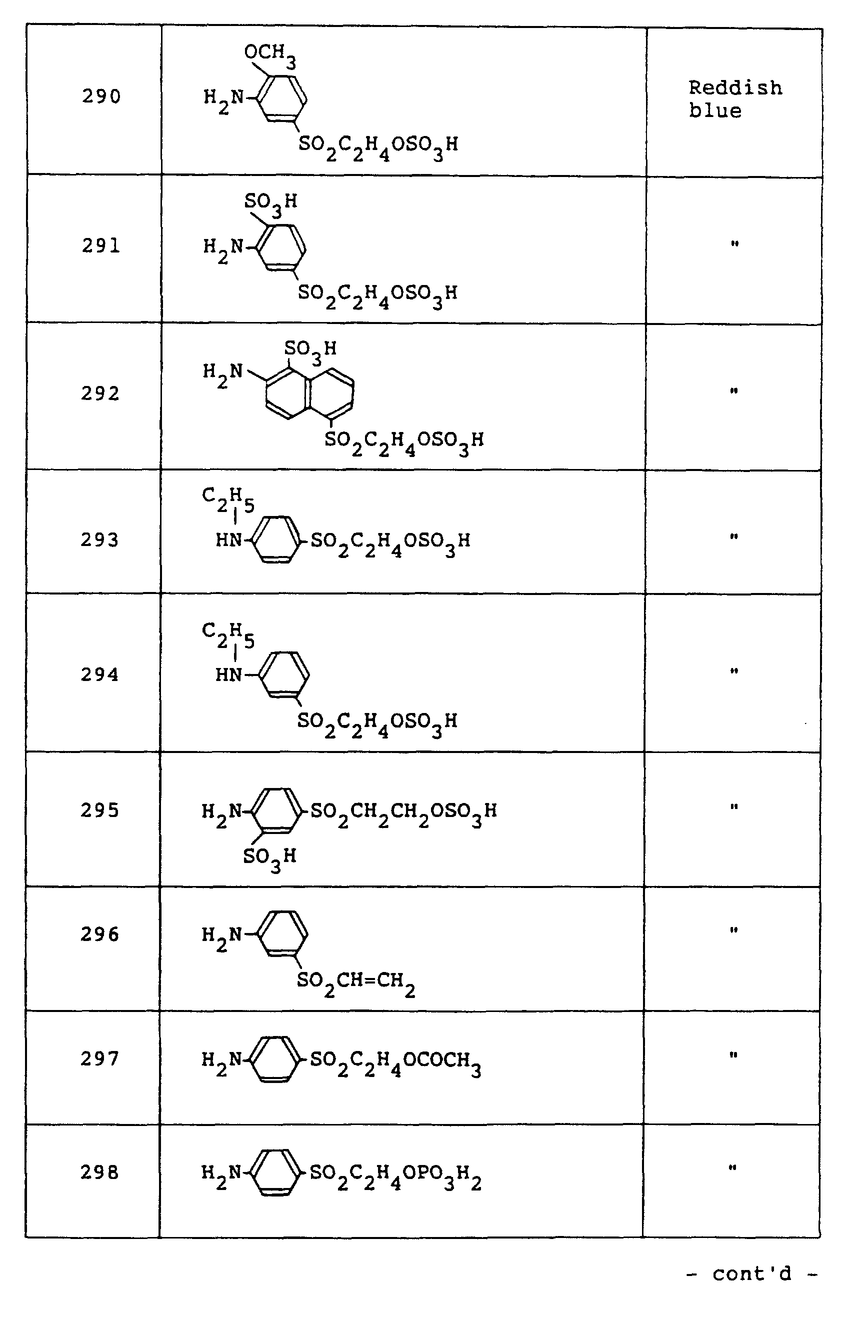

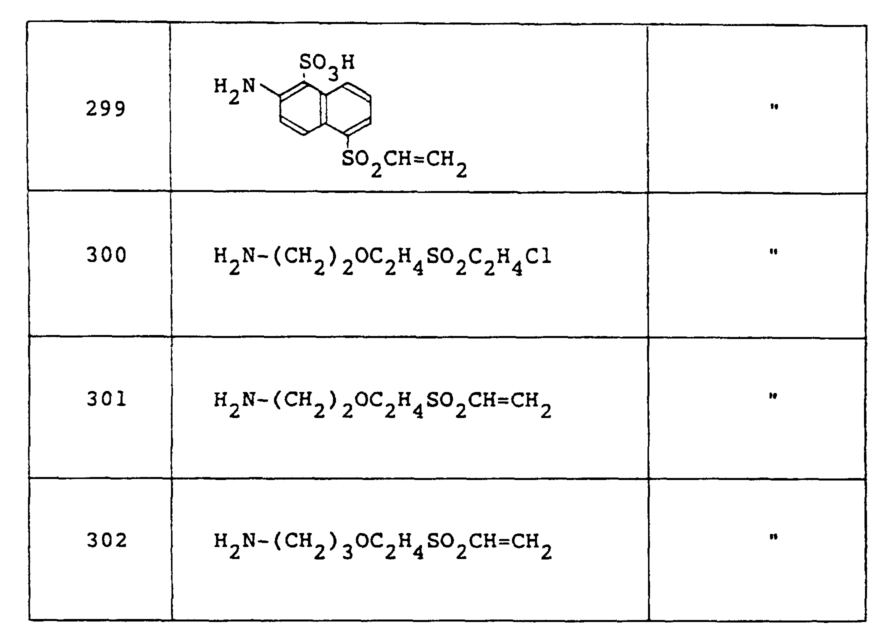

### Example 303

Example 171 was repeated, provided that amine compounds described below were used in place of the sulfanilic acid used in Example 171 in each amount equimolar thereto, thereby obtaining each corresponding asymmetric dioxazine compound.
(1) Orthanilic acid
(2) Methanilic acid
(3) 1-Aminonaphthalene-3,6-disulfonic acid
(4) 1-Aminonaphthalene-4,6,8-trisulfonic acid
(5) 2-Aminonaphthalene-4,8-disulfonic acid
(6) 2-Aminonaphthalene-3,6,8-trisulfonic acid
(7) Aniline-2,5-disulfonic acid
(8) Aniline
(9) m-Toluidine
(10) o-Anisidine
(11) Ammonia
(12) Ethylamine
(13) Ethanolamine
(14) β-Alanine
(15) Taurine
(16) N-Methyltaurine

### Example 304

Examples 174 to 302 were repeated, provided that amine compounds (1) to (16) described in Example 303 were used in place of sulfanilic acid, thereby obtaining each corresponding asymmetric dioxazine compound.

### Example 305

Each asymmetric dioxazine compound obtained in Examples 174 to 302 (each of 0.1, 0.3 and 0.6 parts) was dissolved in water (200 parts), and sodium sulfate (10 parts) and cotton (10 parts) were added thereto. The bath was heated to 60 °C and then sodium carbonate (4 parts) was added thereto. Thereafter, dyeing was continued for 1 hour at that temperature. The cotton taken out was washed with water, soaped, again washed with water and then dried to obtain each dyed product of a reddish blue color superior in fastness properties, particularly those such as chlorine fastness. Each dioxazine compound was found to be superior in build-up property.

### Example 306

Example 171 was repeated, provided that the reaction order of 1-aminobenzene-3-β-sulfatoethylsulfone and sulfanilic acid was exchanged, thereby also obtaining the same asymmetric dioxazine compound as obtained in Example 171.

### Example 307

A mixture of a dioxazine compound (55 parts) having the following formula in the free acid form, 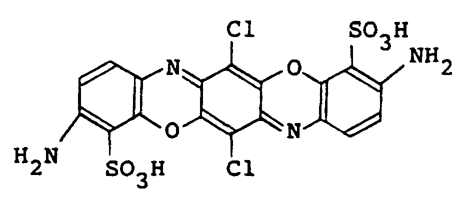 and cyanuric chloride (18 parts) in water (1500 parts) was stirred to complete the reaction at 0° to 30°C, while keeping the pH within a range of 5 to 8 using sodium carbonate. To the reaction mixture was added sulfanilic acid (17 parts), and the mixture was stirred to complete the reaction at 10° to 50°C and a pH ranging from 5 to 8. Then, acetic anhydride (10 parts) was added thereto, and the mixture was stirred to complete the reaction at 10° to 50°C and pH ranging from 2 to 7. Successively, aminobenzene-3-β-sulfatoethylsulfone (28 parts) was added thereto, and the mixture was further stirred to complete the reaction at 30 ° to 80 °C and a pH ranging from 3 to 6, thereby obtaining a compound, which was found to be the same as the asymmetric dioxazine compound obtained in Example 171.

### Example 308

Example 307 was repeated, provided that the reaction order of the 1-aminobenzene-3-β-sulfatoethylsulfone and sulfanilic acid was exchanged, thereby also obtaining the same asymmetric dioxazine compound as in Example 307.

### Example 309

A mixture of a dioxazine compound (55 parts) having the following formula in the free acid form, 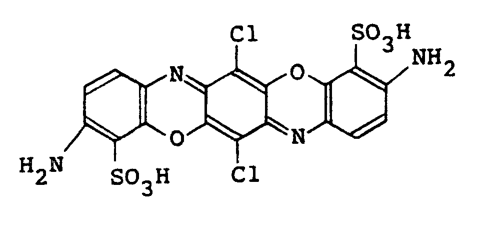 and cyanuric chloride (18 parts) in water (1500 parts) was stirred to complete the reaction at 0° to 30 °C, while keeping the pH within a range of 5 to 8 using sodium carbonate. To the reaction mixture was added sulfanilic acid (17 parts), and the mixture was stirred to complete the reaction at 10° to 50°C and a pH ranging from 5 to 8. Successively, 1-aminobenzene-3-β-sulfatoethylsulfone (28 parts) was added thereto, and the mixture was stirred to complete the reaction at 30° to 80 °C and a pH ranging from 3 to 6. Further, acetic anhydride (10 parts) was added to the reaction mixture, and the mixture was stirred to complete the reaction at 10° to 50°C and a pH ranging from 2 to 7, thereby obtaining a compound, which was found to be the same as the asymmetric dioxazine compound obtained in Example 171.

### Example 310

Example 309 was repeated, provided that the reaction order of the 1-aminobenzene-3-β-sulfatoethylsulfone and sulfanilic acid was exchanged, thereby also obtained the same desired compound.

### Example 311

Aniline-2,5-disulfonic acid (25.3 parts) was added to water (1500 parts) with neutralization using sodium carbonate to obtain a clear solution. Cyanuric chloride (18 parts) was added to the clear solution at 5° to 30 °C, and the mixture was stirred to complete the reaction. The intermediate dioxazine compound (59 parts) which had been obtained in the same manner as in Example 171 was added to the above reaction mixture, and the mixture was stirred to complete the reaction, while neutralizing the hydrochloric acid produced with sodium carbonate. Further, 1-aminobenzene-3-β-sulfatoethylsulfone (28 parts) was added thereto, and the mixture was heated to 50° to 70°C, while keeping the pH within a range of 2 to 5, and stirred to complete the reaction, thereby obtaining a product, which was found to be the same asymmetric dioxazine compound as obtained in Example 303(7).

### Example 312

The intermediate dioxazine compound (59 parts) which had been prepared in the same manner as that of Example 171 was dissolved in water (1500 parts), and cyanuric chloride (18 parts) was added thereto at 5° to 30°C. The mixture was stirred to complete the reaction, while keeping the pH within a range of 2 to 7 using sodium carbonate. Successively, 1-aminobenzene-3-β-sulfatoethylsulfone (28 parts) was added thereto, and the mixture was stirred to complete the reaction at 10° to 50°C and a pH ranging from 2 to 6. To the reaction mixture was added 1-N-ethylaminobenzene-3-β-sulfatoethylsulfone (31 parts), and the mixture was stirred to complete the reaction at 40 ° to 90 °C, while keeping the pH within a range of 2 to 6, thereby obtaining a desired asymmetric dioxazine compound of the following formula in the free acid form.

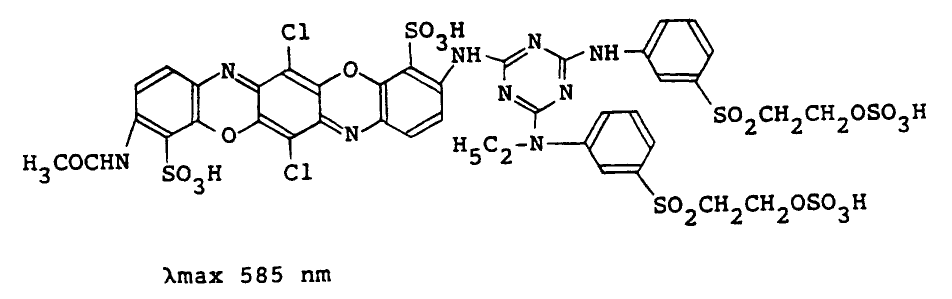

### Example 313

Example 312 was repeated, provided that amines described below were used in place of the 1-N-ethylaminobenzene-3-β-sulfatoethylsulfone used in Example 312 in an amount equimolar thereto, thereby obtaining a corresponding asymmetric dioxazine compound.

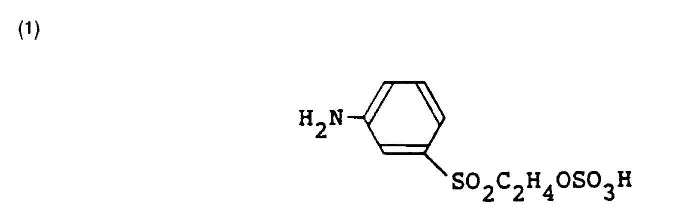

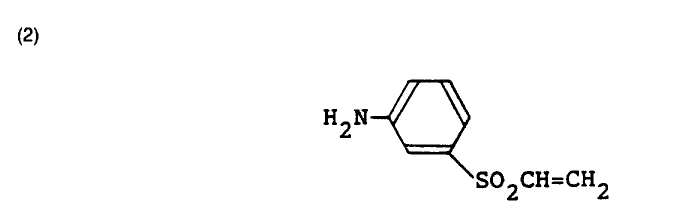

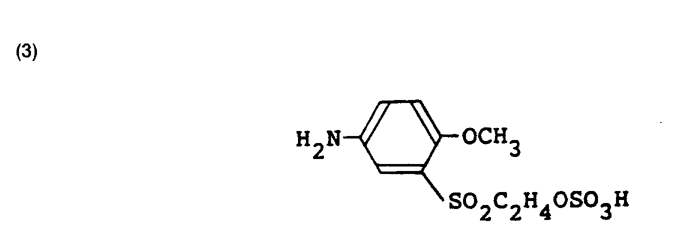

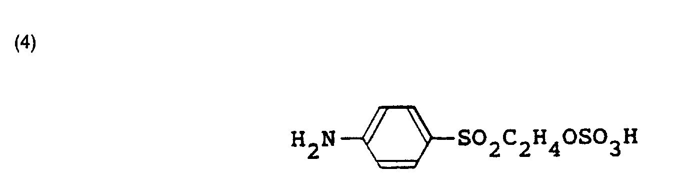

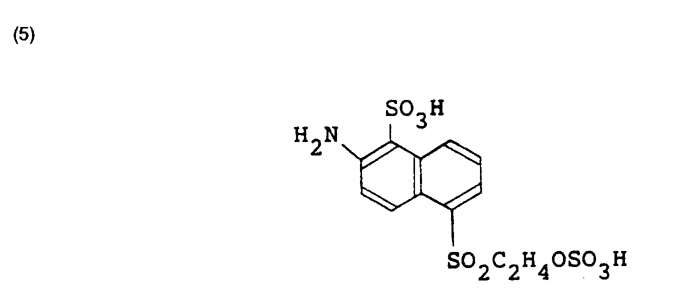

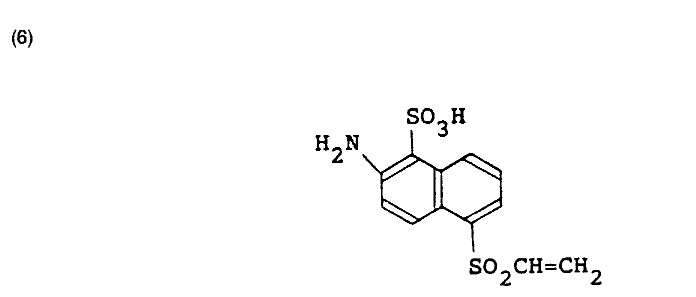

(7) H₂N-(CH₂)₂OC₂H₄SO₂C₂H₄Cl

(8) H₂N-(CH₂)₂OC₂H₄SO₂CH=CH₂

### Example 314

Example 312 was repeated, provided that the intermediate dioxazine compounds described in Examples 179 to 302 were used in place of that used in Example 312 in each amount equimolar thereto, thereby obtaining a corresponding asymmetric dioxazine compound.

### Example 315

Example 314 was repeated, provided that amines (1) to (8) described in Example 313 were used in place of the 1-N-ethylaminobenzene-3-β-sulfatoethylsulfone used in Example 314 in each amount equimolar thereto, thereby obtaining a corresponding asymmetric dioxazine compound.

### Example 316

Each asymmetric dioxazine compound obtained Examples 312 to 315 (each of 0.1, 0.3 and 0.6 parts) was dissolved in water (200 parts), and sodium sulfate (10 parts) and cotton (10 parts) were added thereto. The bath was heated to 60 °C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 317

Using each asymmetric dioxazine compound used in Examples 173, 305 and 316, each color paste of the composition described below was prepared.

| | |
|---|---|
| Asymmetric dioxazine compound | 5 parts |
| Urea | 5 parts |
| Sodium alginate (5%) stock paste | 50 parts |
| Hot water | 25 parts |
| Sodium hydrogencarbonate | 2 parts |
| Balance (water) | 13 parts |

Mercerized cotton broad cloth was printed with the color paste having the above composition, prepdried and steamed at 100°C for 5 minutes. The treated cloth was washed with hot water, soaped, again washed with hot water and then dried. Thus, there was obtained each printed product of a blue color excellent in fastness properties, particularly those such as chlorine fastness.

### Example 318

A mixture of a dioxazine compound (54.5 parts) having the following formula in the free acid form, 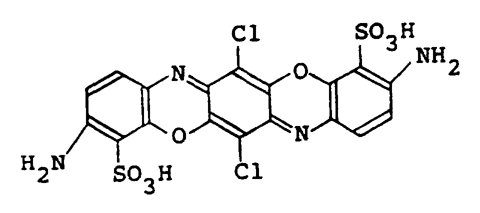 and cyanuric chloride (18.5 parts) in water (1500 parts) was stirred to complete the reaction at 5° to 30 °C, while keeping the pH within a range of 3 to 7 using aqueous sodium carbonate solution. Thereafter, sodium chloride was added to the reaction mixture, and the crystals produced were separated on a filter. The cake was dissolved in water (1500 parts), and sulfanilic acid (17.3 parts) was added thereto. The mixture was stirred to complete the reaction at 30 ° to 50 °C, while maintaining the pH within a range of 6 to 9. Sodium chloride was added thereto, and crystals produced were separated on a filter to obtain an intermediate dioxazine compound of the following formula in the free acid form.

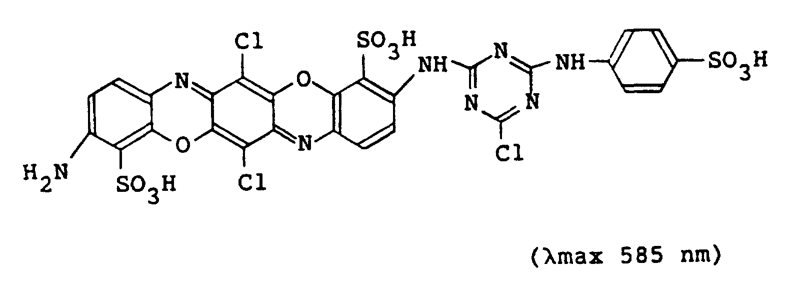

The intermediate dioxazine compound (83 parts) was dissolved in water (1000 parts), and 1-aminobenzene-3-β-sulfatoethylsulfone (28.1 parts) was added thereto. The mixture was stirred to complete the reaction at 50° to 80°C, while maintaining the pH within a range of 2 to 5. Thereafter, potassium chloride was added thereto and then crystals produced were separated on a filter to obtain a desired asymmetric dioxazine compound of the following formula in the free acid form.

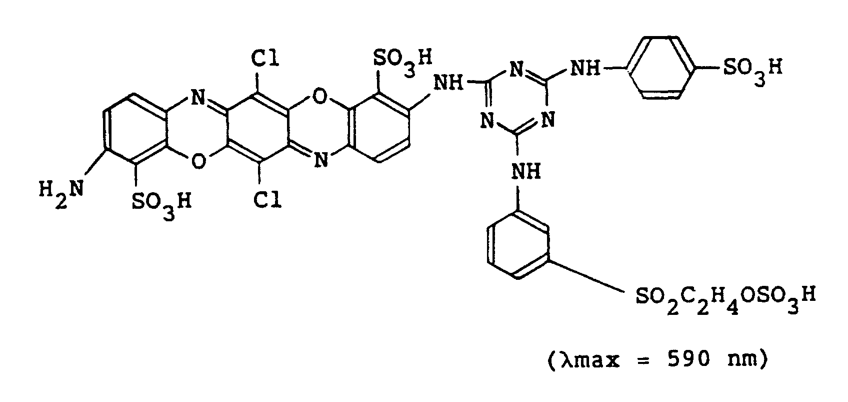

### Example 319

Example 318 was repeated, provided that amine compounds described below were used in place of the sulfanilic acid used in Example 318 in an amount equimolar thereto, thereby obtaining a corresponding asymmetric dioxazine compound.
(1) Orthanilic acid
(2) Methanilic acid
(3) 1-Aminonaphthalene-3,6-disulfonic acid
(4) 1-Aminonaphthalene-4,6,8-trisulfonic acid
(5) 2-Aminonaphthalene-4,8-disulfonic acid
(6) 2-Aminonaphthalene-3,6,8-trisulfonic acid
(7) Aniline-2,5-disulfonic acid
(8) Aniline
(9) m-Toluidine
(10) o-Anisidine
(11) Ammonia
(12) Ethylamine
(13) Ethanolamine
(14) β-alanine
(15) Taurine
(16) N-Methyltaurine

### Example 320

Example 318 was repeated, provided that amines described below were used in place of 1-aminobenaminobenzene-3-β-sulfatoethylsulfone used in Example 318 in an amount equimolar thereto, thereby obtaining a corresponding asymmetric dioxazine compound.

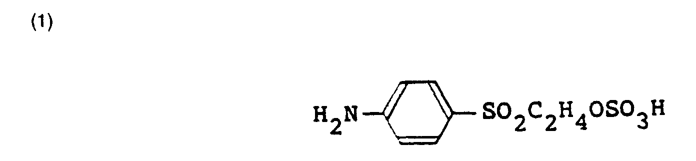

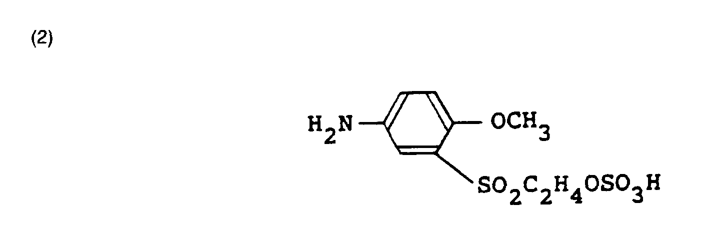

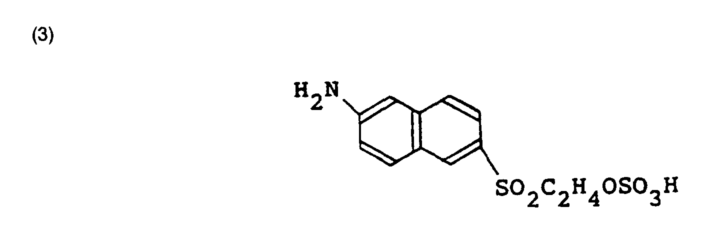

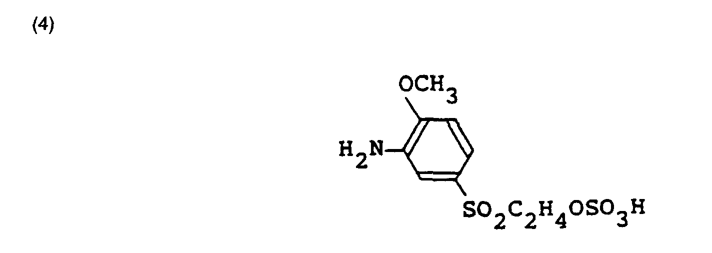

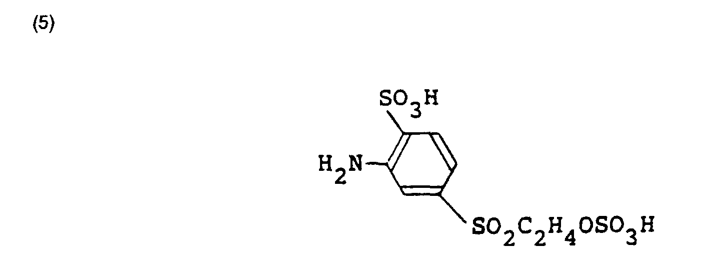

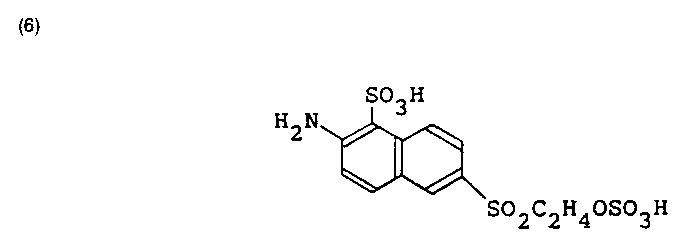

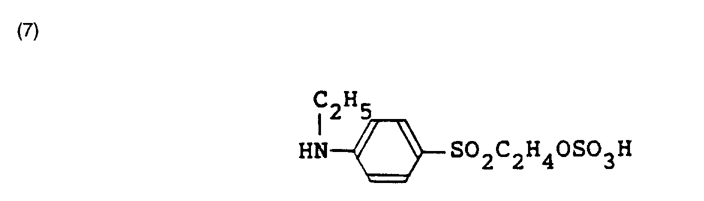

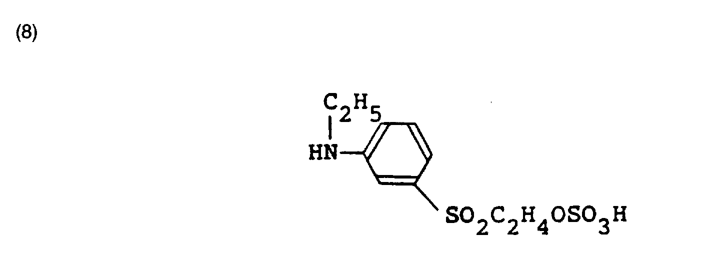

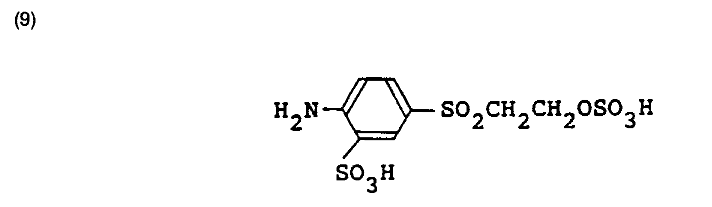

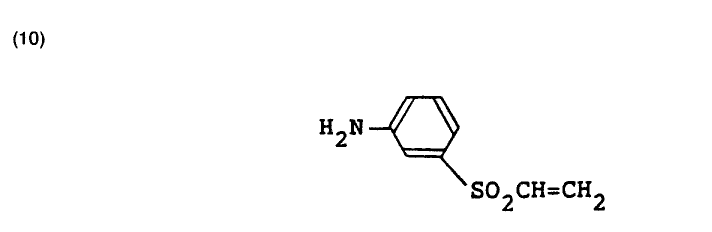

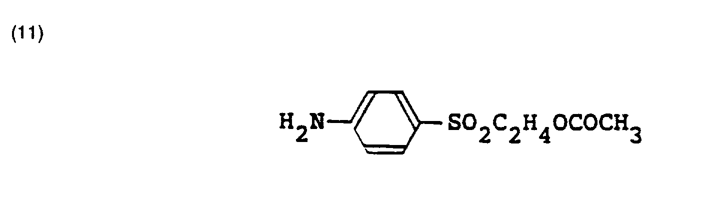

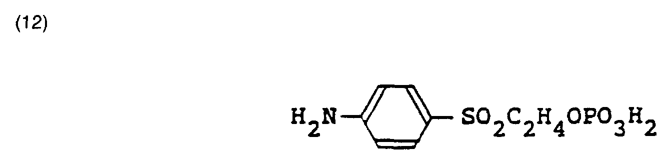

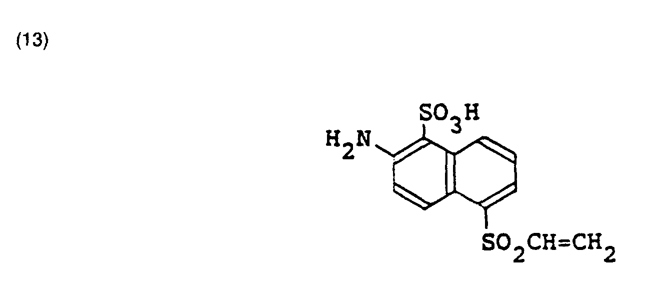

(14) H₂N-(CH₂)₂OC₂H₄SO₂C₂H₄Cl

(15) H₂N-(CH₂)₂OC₂H₄SO₂CH=CH₂

(16) H₂N-(CH₂)₃OC₂H₄SO₂CH=CH₂

### Example 321

Example 318 was repeated, provided that a dioxazine compound of the following formula in the free acid form, 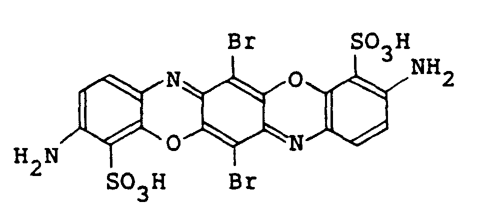 was used in place of the starting dioxazine compound used in Example 318 in an amount equimolar thereto, thereby obtaining a corresponding asymmetric dioxazine compound.

### Example 322

A mixture of 2-methoxy-4,6-dichloro-s-triazine (18 parts) and the same starting dioxazine compound as used in Example 318 was allowed to react with each other at 30 ° to 50 °C and a pH ranging from 2 to 7, followed by reaction with 1-aminobenzene-3-β-sulfatoethylsulfone (28.1 parts). Salting out of the reaction mixture gave a desired asymmetric dioxazine compound of the following formula in the free acid form.

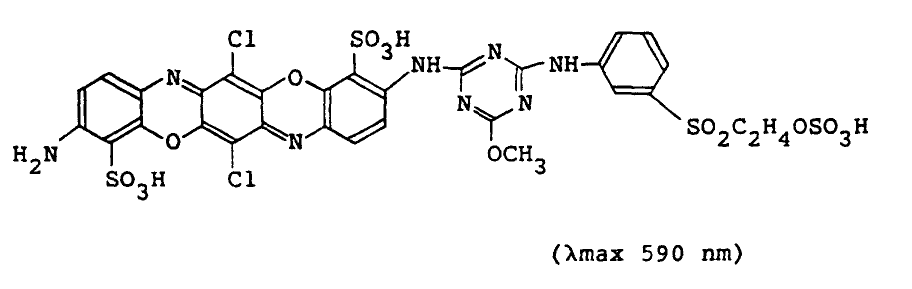

### Example 323

Example 322 was repeated, provided that 2-ethoxy-4,6-dichloro-s-triazine was used in place of the 2-methoxy-4,6-dichloro-s-triazine used in Example 322 in an amount equimolar thereto, thereby obtaining a desired corresponding dioxazine compound.

### Example 324

Example 322 was repeated, provided that the amines (1) to (16) described in Example 320 were used in place of the 1-aminobenzene-3-β-sulfatoethylsulfone used in Example 322 in each amount equimolar thereto, thereby obtaining a corresponding asymmetric dioxazine compound.

### Example 325

The same starting dioxazine compound (54.5 parts) as in Example 318 was dissolved in water (1500 parts), and cyanuric chloride (18.5 parts) was added thereto. The mixture was stirred to complete the reaction at 5° to 30 °C, while keeping the pH within a range of 3 to 7 using sodium carbonate. Thereafter, sodium chloride was added thereto, and crystals produced were separated on a filter. Successively, the cake was dissolved in water (1500 parts), and 1-aminobenzene-3-β-sulfatoethylsulfone (28.1 parts) was added thereto. The mixture was stirred to complete the reaction at 10° to 50°C, while keeping the pH within a range of 2 to 6, thereby obtaining a desired corresponding dioxazine compound.

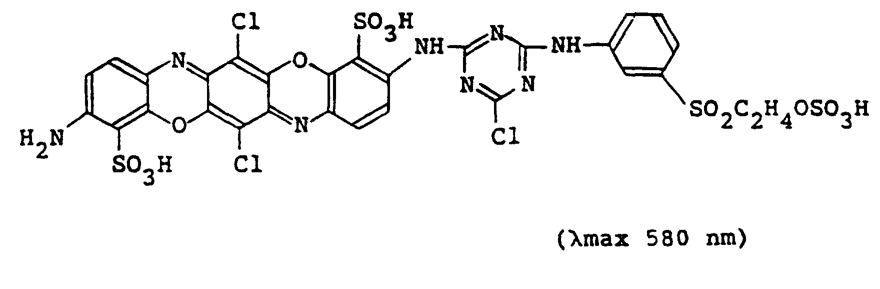

### Example 326

Example 325 was repeated, provided that the amines (1) to (16) described in Example 320 were used in place of the 1-aminobenzene-3-β-sulfatoethylsulfone used in Example 325 in an amount equimolar thereto, thereby obtaining a desired corresponding asymmetric dioxazine compound.

### Example 327

A mixture of the asymmetric dioxazine compound (93.8 parts) which had been obtained in the same manner as in Example 325, and 1-aminobenzene-3-β-sulfatoethylsulfone (28.1 parts) in water (1500 parts) was stirred to complete the reaction at 40 ° to 90 °C, while keeping the pH within a range of 2 to 6, thereby obtaining a desired asymmetric dioxazine compound of the following formula in the free acid form.

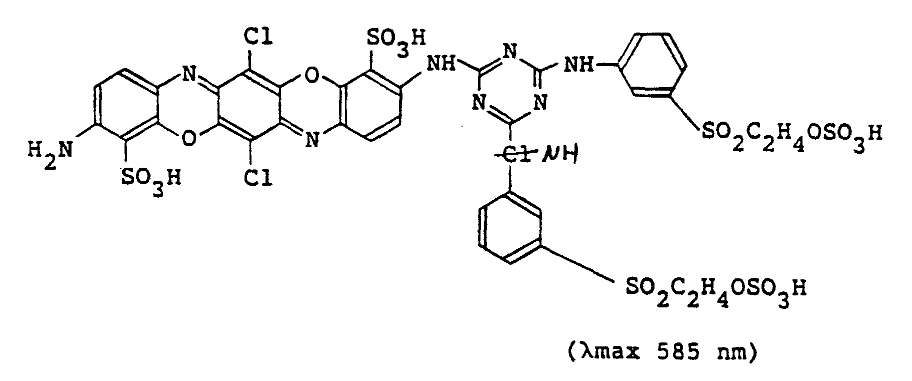

### Example 328

Example 327 was repeated, provided that the amines (1) to (16) described in Example 320 were used in place of the 1-aminobenzene-3-β-sulfatoethylsulfone used in Example 327 in each amount equimolar thereto, thereby obtaining a corresponding asymmetric dioxazine compound.

### Example 329

Each asymmetric dioxazine compound obtained in Examples 318 to 328 (each of 0.1, 0.3 and 0.6 parts) was dissolved in water (200 parts), and sodium sulfate (10 parts) and cotton (10 parts) were added thereto. The bath was heated to 60 °C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 330

A mixture of the intermediate dioxazine (83 parts) obtained in the same manner as in Example 318 and ethylenechlorohydrin (41 parts) in water (1000 parts) was stirred to complete reaction at 60° to 90°C while keeping the pH within a range of 6 to 9 using aqueous sodium hydroxide solution. Thereafter, potassium chloride was added to the reaction mixture, and separation of the crystals produced gave a desired intermediate dioxazine compound of the following formula in the free acid form.

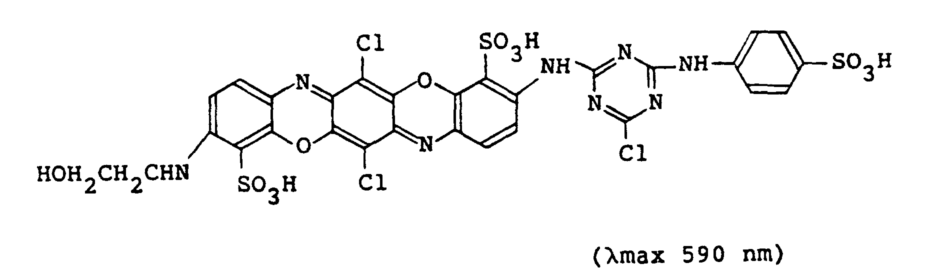

A mixture of the above intermediate dioxazine compound (87.4 parts) and 1-aminobenzene-3-β-sulfatoethylsulfone (28.1 parts) in water (1000 parts) was stirred to complete the reaction at 50° to 80°C while keeping the pH within a range of 2 to 5. Potassium chloride was added to the reaction mixture, and separation of the crystals produced gave a desired asymmetric dioxazine compound of the following formula in the free acid form.

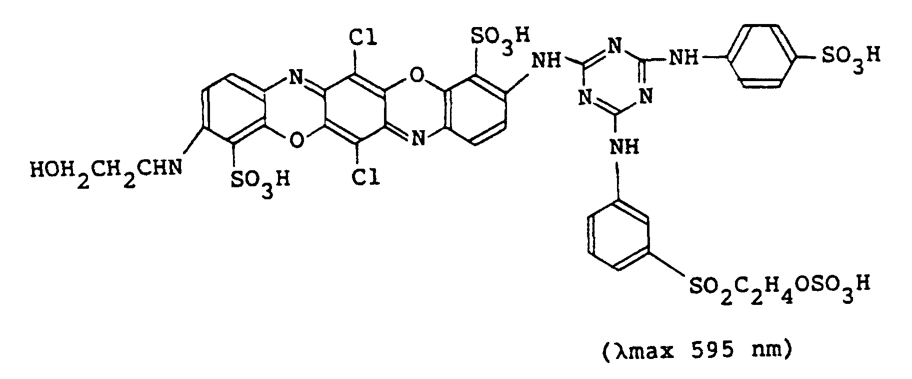

### Example 331

1,4-phenylenediamine-2-sulfonic acid (18.8 parts) and 2-aminoethyl-5-aminobenzenesulfonic acid (21.6 parts) were dissolved in water (1000 parts) and adjusted to a pH ranging from 5 to 7. Thereafter, chloranil (24.6 parts) was added thereto, and the mixture was stirred to complete the reaction at 15° to 30°C, while keeping the pH within a range of 5 to 8 using aqueous sodium carbonate solution. Thereafter, sodium chloride was added to the reaction mixture, and the crystals produced were separated on a filter and then dried at 80°C to obtain a dianilide compound of the following formula in the free acid form.

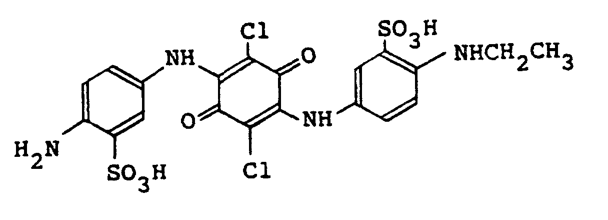

The dianilide compound (57.7 parts) was added to oleum of 5 to 30% strength containing potassium iodide (1.7 parts), and the mixture was stirred to complete the reaction at 5° to 25°C. Thereafter, the reaction mixture was poured into ice water to produce crystals, which were separated on a filter. The cake was dissolved in water (1500 parts) and adjusted to a pH ranging from 5 to 7, and sodium chloride was added thereto. The crystals produced were collected on a filter to obtain a dioxazine compound of the following formula in the free acid form.

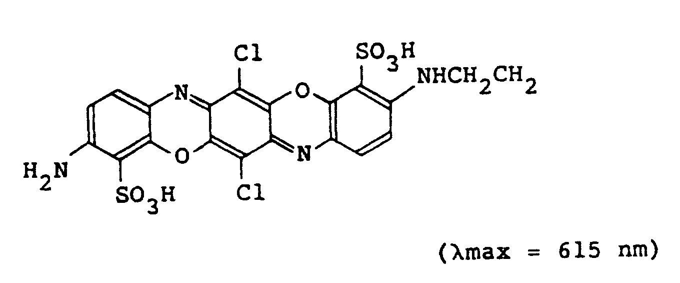

Aniline-2,5-disulfonic acid (25.3 parts) was added to water (100 parts), followed by adjustment of the pH to 7, and cyanuric chloride (18.5 parts) was added thereto. The mixture was stirred to complete the reaction at 15° to 30 °C, while keeping the pH within a range of 5 to 7 using aqueous sodium carbonate solution. The resulting reaction mixture was added to a solution of the above dioxazine compound (57.3 parts) in water (1500 parts), and the mixture was stirred to complete the reaction at 20° to 50 °C, while keeping the pH within a range of 5 to 7 using aqueous sodium carbonate solution. Sodium chloride was added thereto to produce crystals, and separation of the crystals gave an intermediate dioxazine compound of the following formula in the free acid form.

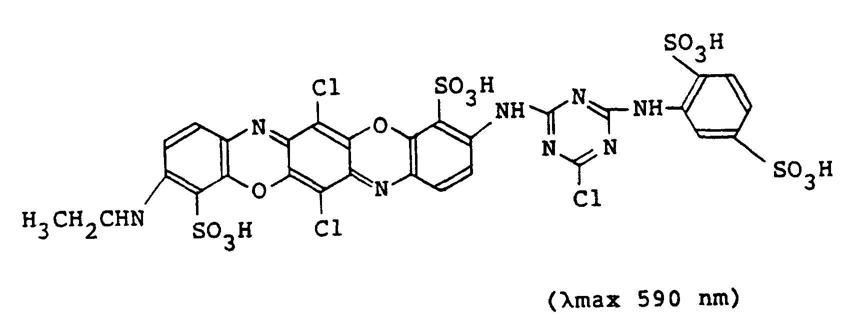

A mixture of the intermediate dioxazine compound (93.8 parts) and 1-aminobenzene-3-β-sulfatoethylsulfone (28.1 parts) in water (1500 parts) was stirred to complete the reaction, while keeping the pH within a range of 2 to 5. Sodium chloride was added to the reaction mixture, and the crystals were collected on a filter to obtain a desired asymmetric dioxazine compound of the following formula in the free acid form.

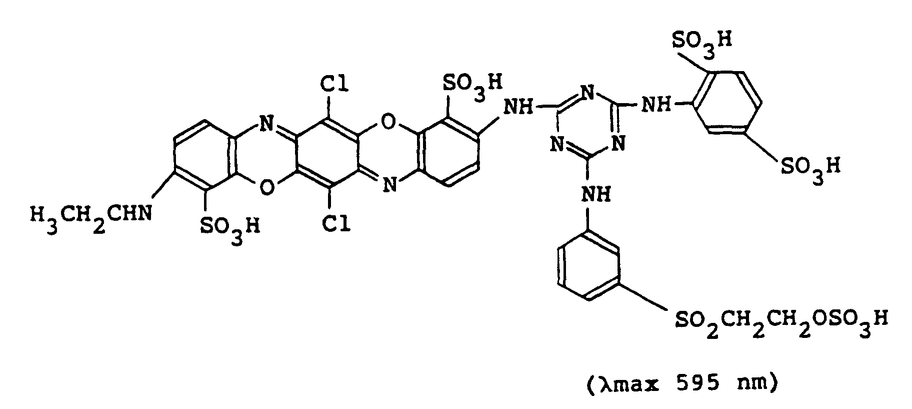

### Example 332

A solution of 2-aminoethyl-5-aminobenzenesulfonic acid (43.2 parts) in water (1000 parts) was adjusted to a pH ranging from 5 to 7, and chloranil (24.6 parts) was added thereto. The mixture was stirred to complete the reaction at 15° to 40°C, while keeping the pH within a range of 5 to 8 using aqueous sodium carbonate solution. Sodium chloride was added to the reaction mixture, producing crystals, which were then collected on a filter and dried at 80°C. The product obtained was found to be a dianilide having the following formula.

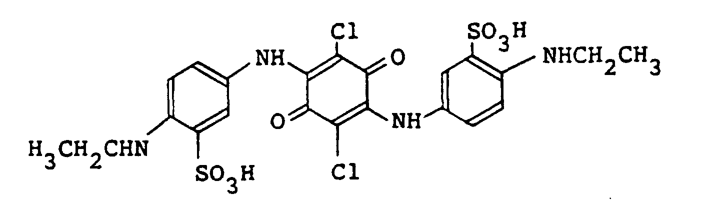

The dianilide (60.5 parts) was added to oleum of 5 to 30% strength (1800 parts) containing potassium iodide (1.7 parts), and the mixture was stirred to complete the reaction at 5° to 25°C. Thereafter the reaction mixture was poured into ice water to produce crystals, which were then collected on a filter. The cake was placed in water (1500 parts) and then adjusted to a pH ranging from 5 to 7 with aqueous sodium hydroxide solution. Salting out with sodium chloride gave a product, which was found to be the same dioxazine compound as that obtained in Example 331 (λmax 615 nm). Using the dioxazine compound, Example 321 was repeated to obtain a desired asymmetric dioxazine compound, which was the same as that obtained in Example 321.

### Example 333

Each asymmetric dioxazine compound obtained in Examples 330 and 331 (each of 0.1, 0.3 and 0.6 parts) was dissolved in water (200 parts), and sodium sulfate (10 parts) and cotton (10 parts) were added thereto. The bath was heated to 60°C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 334

Example 330 was repeated, provided that there was used each intermediate dioxazine compound which had been prepared using amine compounds (1) to (16) described in Example 319 in place of sulfanilic acid used in Example 318, thereby obtaining a corresponding asymmetric dioxazine compound.

### Example 335

Example 330 was repeated, provided that amines (1) to (16) described in Example 320 were used in place of the 1-aminobenzene-3-β-sulfatoethylsulfone used in that Example, thereby obtaining a corresponding asymmetric dioxazine compound.

### Example 336

Example 331 was repeated, provided that amine compounds (1) to (16) described in Example 319 were used in place of the aniline-2,5-disulfonic acid used in Example 331, thereby obtaining a corresponding asymmetric dioxazine compound.

### Example 337

Example 331 was repeated, provided that amines (1) to (16) described in Example 320 were used in place of the 1-aminobenzene-3-β-sulfatoethylsulfone used in that Example, thereby obtaining a corresponding asymmetric dioxazine compound.

### Example 338

Using a dioxazine compound having a formula described below in place of that used in Example 318, a manner similar to that in Example 318 or 330 was repeated to obtain a corresponding asymmetric dioxazine compound.

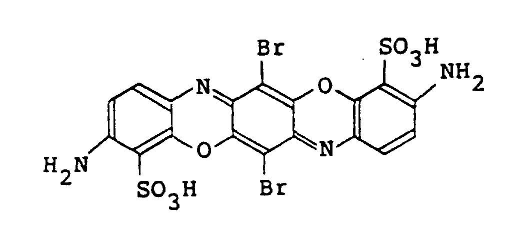

### Example 339

Example 331 was repeated, provided that bromanil was used in place of the chloranil used in that Example, thereby obtaining a corresponding asymmetric dioxazine compound.

### Example 340

Example 332 was repeated, provided that bromanil was used in place of the chloranil used in that Example, thereby obtaining a corresponding asymmetric dioxazine compound.

### Example 341

Each asymmetric dioxazine compound obtained in Examples 334 to 340 (each of 0.1, 0.3 and 0.6 parts) was dissolved in water (200 parts), and sodium sulfate (10 parts) and cotton (10 parts) were added thereto. The bath was heated to 60°C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 342

2-Methoxy-4,6-dichloro-s-triazine (18 parts) and the dioxazine compound (57.3 parts) which had been prepared in the same manner as in Example 331 were allowed to react with each other at 30° to 50°C and a pH ranging from 2 to 7, followed by reaction with 1-aminobenzene-3-β-sulfatoethylsulfone. Salting out of the reaction mixture gave a desired asymmetric dioxazine compound of the following formula in the free acid form.

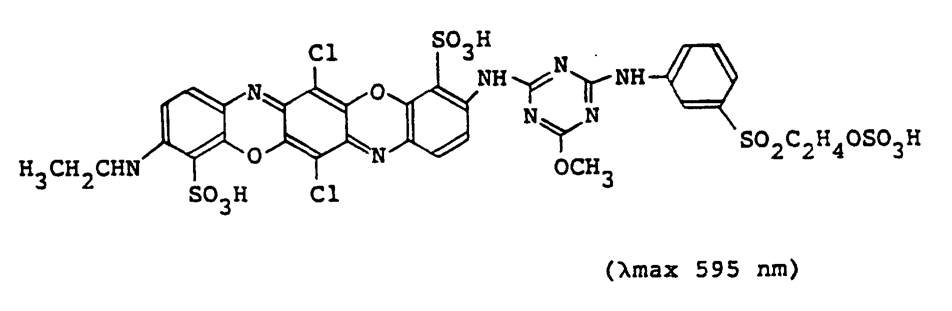

### Example 343

Example 342 was repeated, provided that 2-ethoxy-4,6-dichloro-s-triazine was used in place of the 2-methoxy-4,6-dichloro-s-triazine used in that in an amount equimolar thereto, thereby obtaining a corresponding asymmetric dioxazine compound.

### Example 344

Example 342 was repeated, provided that amines (1) to (16) described in Example 320 were used in place of the 1-aminobenzene-3-β-sulfatoethylsulfone used in Example 342 in each amount equimolar thereto, thereby obtaining a corresponding asymmetric dioxazine compound.

### Example 345

The dioxazine compound (57.3 parts) which had been prepared in the same manner as in Example 331 was dissolved in water (1500 parts), and cyanuric chloride (18.5 parts) was added thereto. The mixture was stirred to complete the reaction at 5° to 30 °C, while keeping the pH within a range of 3 to 7 with aqueous sodium carbonate solution. Successively, 1-aminobenzene-3-β-sulfatoethylsulfone (28.1 parts) was added thereto. The reaction was continued at 10° to 50°C and a pH ranging from 2 to 6 to obtain a desired asymmetric dioxazine compound of the following formula in the free acid form.

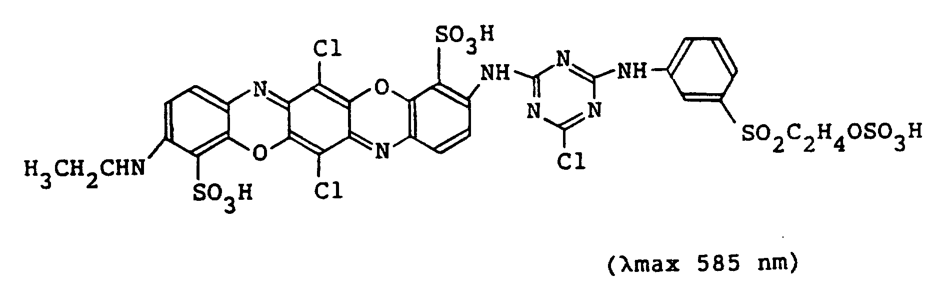

### Example 346

Example 345 was repeated, provided that amines (1) to (16) described in Example 320 were used in place of the 1-aminobenzene-3-β-sulfatoethylsulfone used in Example 345, thereby obtaining a corresponding asymmetric dioxazine compound.

### Example 347

The asymmetric dioxazine compound (96.6 parts) which had been produced in the same manner as in Example 345 was dissolved in water (1500 parts), and 1-aminobenzene-3-β-sulfatoethylsulfone (28.1 parts) was added thereto. The reaction was continued at 40 ° to 90 °C, while keeping the pH within a range of 2 to 9 using aqueous sodium carbonate solution, thereby obtaining a desired asymmetric dioxazine compound of the following formula in the free acid form.

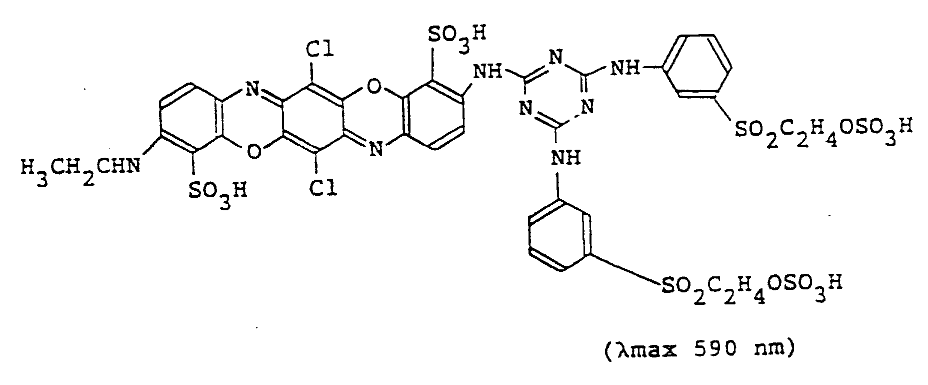

### Example 348

Example 347 was repeated, provided that amines (1) to (16) described in Example 320 were used in place of the 1-aminobenzene-3-β-sulfatoethylsulfone used in Example 347, thereby obtaining a desired corresponding asymmetric dioxazine compound.

### Example 349

Each asymmetric dioxazine compound obtained in Examples 342 to 348 (each of 0.1, 0.3 and 0.6 parts) was dissolved in water (200 parts), and sodium sulfate (10 parts) and cotton (10 parts) were added thereto. The bath was heated to 60°C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 350

Using asymmetric dioxazine compounds used in Examples 329, 333, 341 and 349, each color paste having the following composition was prepared.

| | |
|---|---|
| Asymmetric dioxazine compound | 5 parts |
| Urea | 5 parts |
| Sodium alginate (5%) stock paste | 50 parts |
| Hot water | 25 parts |
| Sodium hydrogencarbonate | 2 parts |
| Balance (water) | 13 parts |

Mercerized cotton broad cloth was printed with the color paste having the above composition, pre-dried and steamed at 100°C for 5 minutes. The treated cloth was washed with hot water, soaped, again washed with hot water and then dried. Thus, there was obtained each printed product of a blue color excellent in fastness properties, particularly those such as chlorine fastness.

### Examples 351 to 362

Using amine compounds described below in place of the 2-aminoethyl-5-aminobenzenesulfonic acid used in Example 331, that Example was repeated to obtain a corresponding asymmetric dioxazine compound.

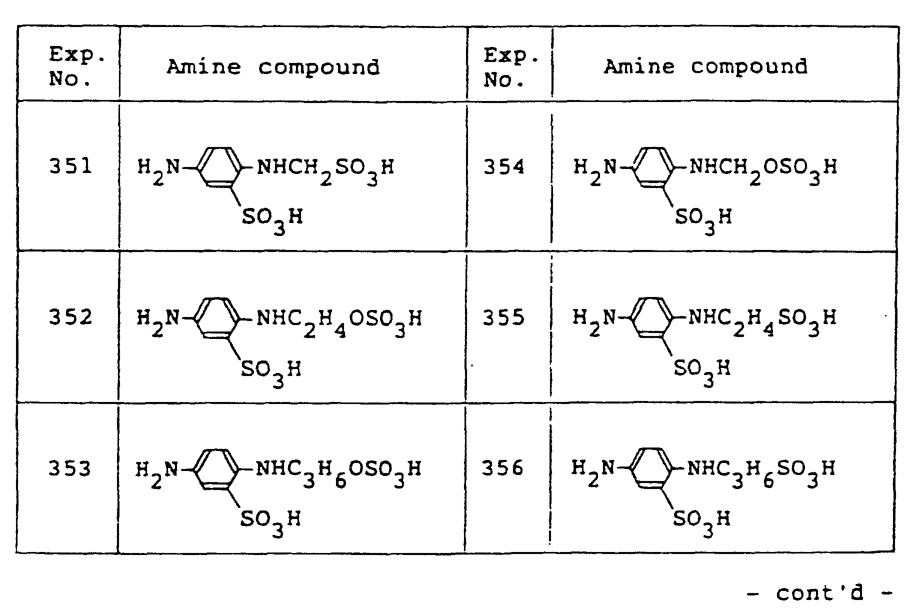

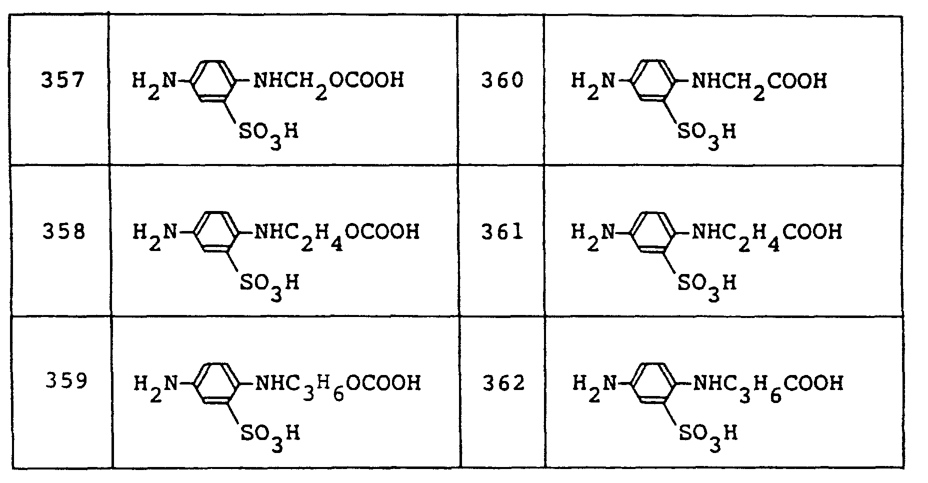

### Example 363

Example 318 was repeated, provided that aniline-2,5-disulfonic acid was used in place of the sulfanilic acid used in that Example. The asymmetric dioxazine compound obtained was subjected to sulfomethylation in a usual manner. A product obtained was found to be the same as the asymmetric dioxazine compound obtained in Example 351.

### Example 364

Using aniline-2,5-disulfonic acid in place of the sulfanilic acid used in Example 318, that Example was repeated to prepare a corresponding intermediate dioxazine compound. The intermediate was subjected to hydroxyethylation using ethylene oxide, followed by sulfuric acid-esterification in a conventional manner. A product obtained was found to be the same as the asymmetric dioxazine compound obtained in Example 352.

### Example 365

Example 318 was repeated, provided that aniline-2,5-disulfonic acid was used in place of the sulfanilic acid used in that Example. The corresponding asymmetric dioxazine compound obtained was subjected to methylolation in a usual manner, followed by esterification with sulfuric acid. A product obtained was found to be the same as the asymmetric dioxazine compound obtained in Example 354.

### Example 366

Each of Examples 351 to 362 was repeated, provided that amine compounds (1) to (16) described in Example 319 were used in place of the aniline-2,5-disulfonic acid used therein, thereby obtaining a corresponding asymmetric dioxazine compound.

### Example 367

Each of Examples 351 to 362 was repeated, provided that amines (1) to (16) described in Example 320 were used in place of the 1-aminobenzene-3-β-sulfatoethylsulfone used therein, thereby obtaining a corresponding asymmetric dioxazine compound.

### Example 368

Each of Examples 315 to 362 was repeated, provided that bromanil was used in place of the chloranil used therein in an amount equimolar thereto, thereby obtaining a corresponding asymmetric dioxazine compound.

### Example 369

Each asymmetric dioxazine compound obtained in Examples 351 to 362 and Examples 366 to 368 (each of 0.1, 0.3 and 0.6 parts) was dissolved in water (200 parts), and sodium sulfate (10 parts) and cotton (10 parts) were added thereto. The bath was heated to 60°C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 370

The asymmetric dioxazine compound which had been prepared in the same manner as in Example 322 was subjected to sulfomethylation in a usual manner, thereby obtaining a desired asymmetric dioxazine compound of the following formula in the free acid form.

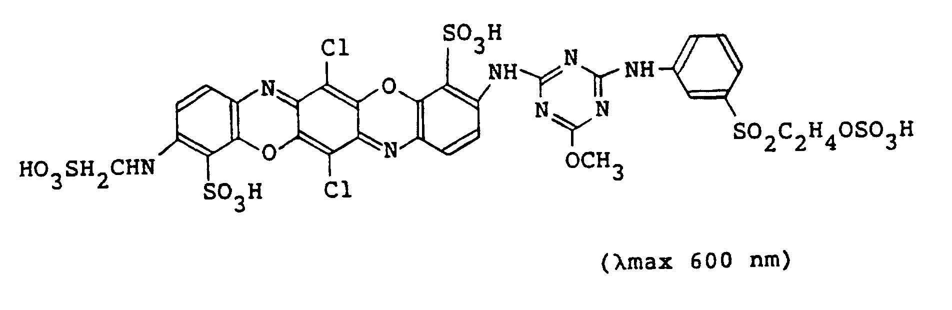

### Example 371

Using 2-ethoxy-4,6-dichloro-s-triazine in place of the 2-methoxy-4,6-dichloro-s-triazine used in Example 322, any manner of Examples 322 and 370 was repeated to obtain a corresponding sulfomethylated asymmetric dioxazine compound.

### Example 372

Using amines (1) to (16) described in Example 320 in place of the 1-aminobenzene-3-β-sulfatoethylsulfone used in Example 322, any manner of Examples 322 and 370 was repeated to obtain a corresponding sulfomethylated asymmetric dioxazine compound.

### Example 373

The asymmetric dioxazine compound which had been prepared in the same manner as in Example 325 was subjected to sulfomethylation in a usual manner, thereby obtaining a desired asymmetric dioxazine compound of the following formula in the free acid form.

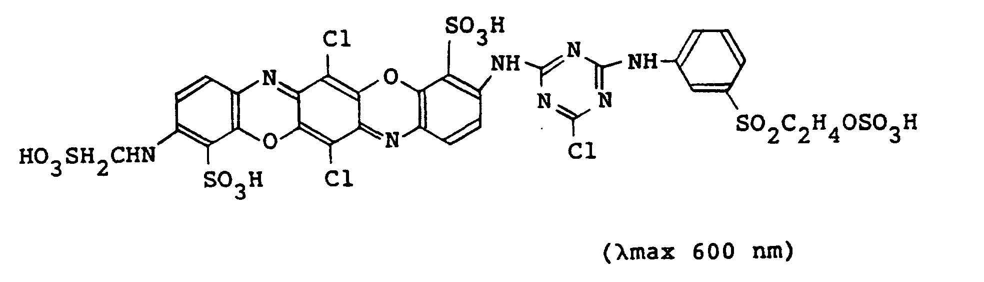

### Example 374

Using amines (1) to (16) described in Example 320 in place of the 1-aminobenzene-3-β-sulfatoethylsulfone used in Example 325, any manner of Examples 325 and 373 was repeated to produce a corresponding sulfomethylated asymmetric dioxazine compound.

### Example 375

The asymmetric dioxazine compound (103.2 parts) which had been prepared in the same manner as in Example 373 was dissolved in water (1500 parts), and 1-aminobenzene-3-β-sulfatoethylsulfone (28.1 parts) was added to the solution. The reaction was continued at 40 ° to 90 °C while keeping the pH within a range of 2 to 6 with aqueous sodium carbonate solution, thereby obtaining a desired asymmetric dioxazine compound of the following formula in the free acid form.

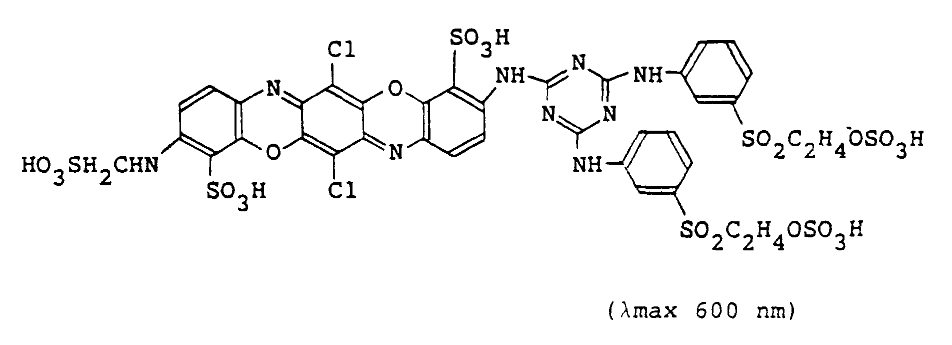

### Example 376

Example 375 was repeated, provided that amines (1) to (16) described in Example 320 were used in place of the 1-aminobenzene-3-β-sulfatoethylsulfone used in Example 375, thereby obtaining a corresponding asymmetric dioxazine compound.

### Example 377

The asymmetric dioxazine compound which had been prepared in the same manner as in Example 327 was subjected to sulfomethylation in a usual manner. A product obtained was found to be the same as the asymmetric dioxazine compound obtained in Example 375.

### Example 378

Each asymmetric dioxazine compound obtained in Examples 370 to 376 (each of 0.1, 0.3 and 0.6 parts) was dissolved in water (200 parts), and sodium sulfate (10 parts) and cotton (10 parts) were added thereto. The bath was heated to 60 °C and then sodium carbonate (4 parts) was added thereto. Thereafter, dyeing was continued for 1 hour at that temperature. The cotton taken out was washed with water, soaped, again washed with water and then dried to obtain each dyed product of a blue color superior in fastness properties, particularly those such as chlorine fastness. Each dioxazine compound was found to be superior in build-up property.

### Example 379

Using asymmetric dioxazine compounds used in Examples 369 and 378, each color paste having the following composition was prepared.

| | |
|---|---|
| Asymmetric dioxazine compound | 5 parts |
| Urea | 5 parts |
| Sodium alginate (5%) stock paste | 50 parts |
| Hot water | 25 parts |
| Sodium hydrogen carbonate | 2 parts |
| Balance (water) | 13 parts |

Mercerized cotton broad cloth was printed with the color paste having the above composition, pre-dried and steamed at 100°C for 5 minutes. The treated cloth was washed with hot water, soaped, again washed with hot water and then dried. Thus, there was obtained each printed product of a blue color excellent in fastness properties, particularly those such as chlorine fastness.

## Claims

1. A compound represented by any one of the following formulas I-1, I-2, I-3 and I-4 in the free acid form, 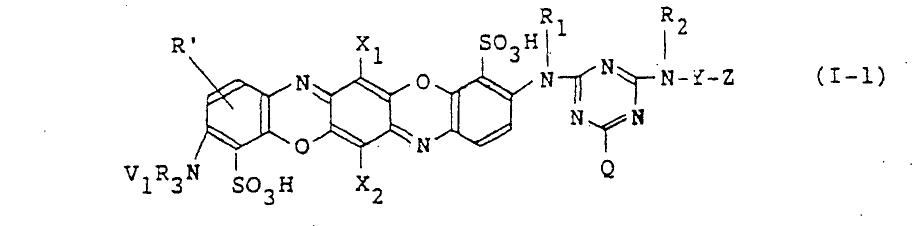 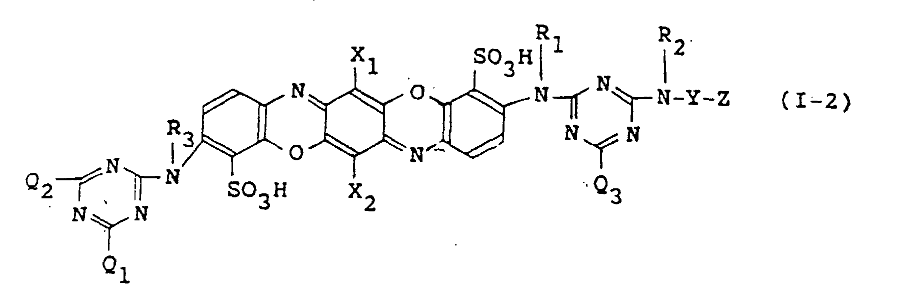 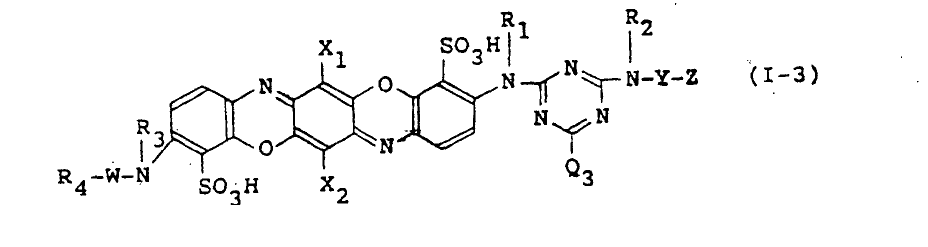 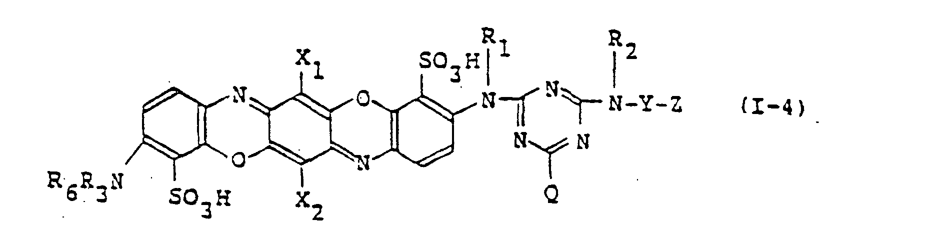 wherein R' is halogen, sulfo or alkoxy, R₁, R₂ and R₃ independently of one another are each hydrogen or unsubstituted or substituted alkyl, X₁ and X₂ independently of one another are each hydrogen, halogen, alkyl, alkoxy or phenoxy, Y is unsubstituted or substituted alkylene, phenylene or naphthylene, Z is -SO₂CH=CH₂ or -SO₂CH₂CH₂Z' in which Z' is a group capable of being split by the action of an alkali, V is hydrogen, unsubstituted or substituted alkyl or an acyl group of the formula (1)
-W-R₄ (1)
in which W is carbonyl or sulfonyl, and R₄ is unsubstituted or substituted alkyl or phenyl,
Q₁ and Q₂ independently of one another are each unsubstituted or substituted amino, and Q is halogen, alkoxy, unsubstituted or substituted amino or a group of the formula (3) 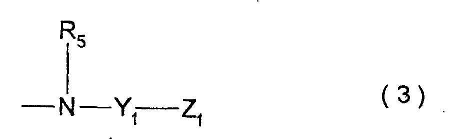 in which R₅ is hydrogen or unsubstituted or substituted alkyl, Y₁ is unsubstituted or substituted alkylene, phenylene or naphthylene, and Z₁ is -SO₂CH=CH₂ or -SO₂CH₂CH₂Z'' in which Z" is a group capable of being split by the action of an alkali, Q₃ is unsubstituted or substituted amino or a group of the formula (3) as defined above and R₆ is sulfoalkyl.

2. The compound according to Claim 1, wherein R₁ is hydrogen.

3. The compound according to Claims 1-2, wherein both X₁ and X₂ are chlorine or bromine.

4. The compound according to any one of Claims 1-3, wherein Y is phenylene unsubstituted or substituted once or twice by methyl, ethyl, methoxy, ethoxy, chlorine, bromine, nitro, sulfo or carboxy, or naphthylene unsubstituted or substituted by sulfo.

5. The compound according to any of Claims 1 to 4, which is represented by the formula I-1 in the free acid form.

6. The compound according to Claim 5, wherein R' is sulfo.

7. The compound according to any one, of Claims 1 to 4, which is represented by the formula I-2.

8. The compound according to Claim 7, wherein both R₁ and R₃ are hydrogens.

9. The compound according to any of Claims 1 to 4, which is represented by the formula I-3.

10. The compound according to Claim 9, wherein both R₁ and R₃ are hydrogens.

11. The compound according to any of Claims 1 to 4, which is represented by the formula I-4.

12. A process for producing a compound as defined in any one of Claims 1 to 11, which comprises subjecting 2,4,6-trihalogeno-s-triazine to condensation reactions with an intermediate dioxazine compound represented by the following formula (II) in the free acid form, 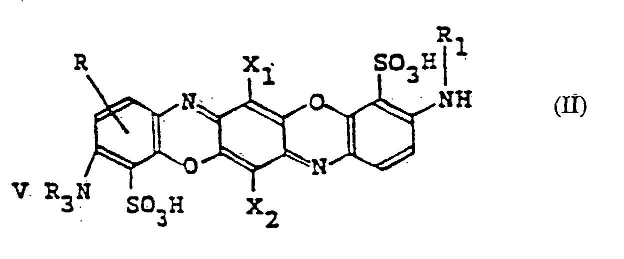 wherein R₁, R₃, V, X₁ and X₂ are as defined in Claim 1, R is hydrogen or R' as defined in claim 1, and V is V₁ or R₆ as defined in Claim 1 or a triazinyl group of the formula (2) 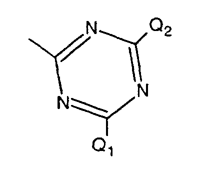 in which Q₁ and Q₂ are as defined in Claim 1, an amine compound represented by the following formula (III) 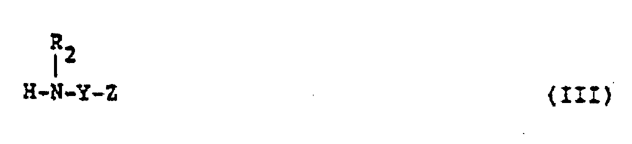 wherein R₂, Y and Z are as defined in Claim 1, and optionally a compound represented by the following formula (IV),
H-Q' (IV)
wherein Q' has the same meanings as those defined in Claim 1 for the symbol Q with the exception of halogen.

13. A process for dyeing or printing hydroxyl or amide group-containing materials, which comprises using a compound as defined in any one of Claims 1 to 11.

14. Use of the compound according to any one of Claims 1 to 11 as a fiber-reactive dye.

15. A compound represented by the following formula in the free acid form, 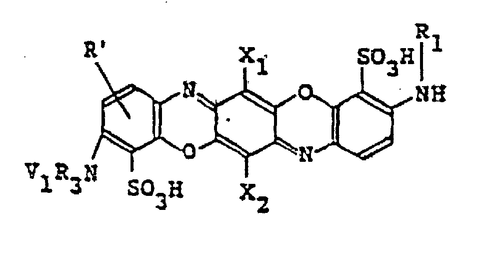 wherein R' is halogen, sulfo or C₁ to C₄ alkoxy;
R₁ and R₃ independently of one another are each hydrogen or unsubstituted or substituted alkyl;
X₁ and X₂ independently of one another are each hydrogen, halogen, alkyl, alkoxy or phenoxy; and
V₁ is hydrogen, unsubstituted or substituted alkyl or an acyl group of the formula (1),
-W-R₄ (1)
in which W is carbonyl or sulfonyl, and R₄ is unsubstituted or substituted alkyl or phenyl.

16. A compound represented by the following formula in the free acid form,

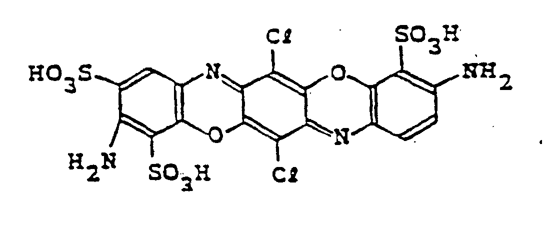

## Patentansprüche

1. Verbindung einer der folgenden Formeln I-1, I-2, I-3 und I-4 in Form der freien Säure 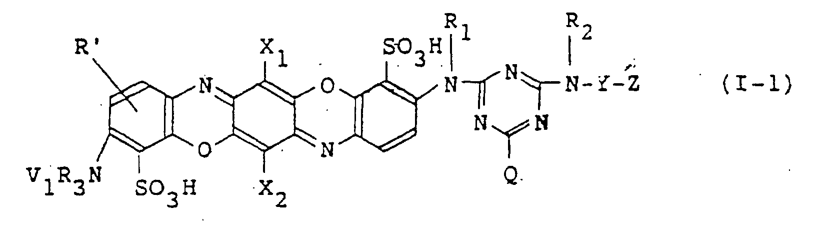 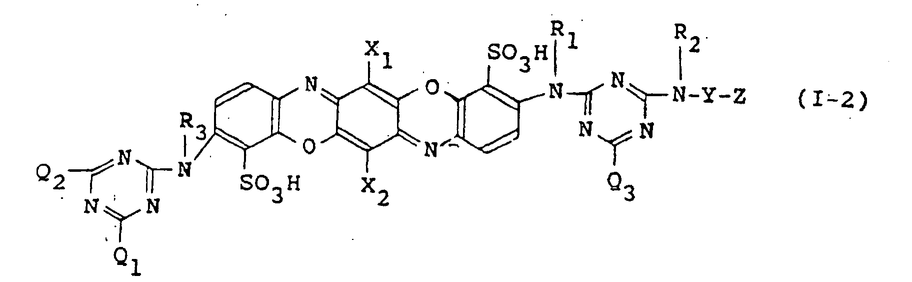 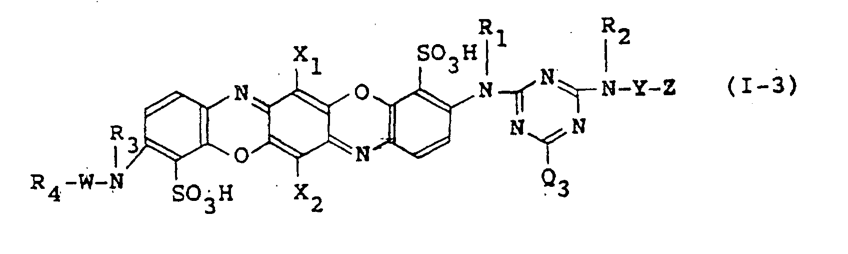 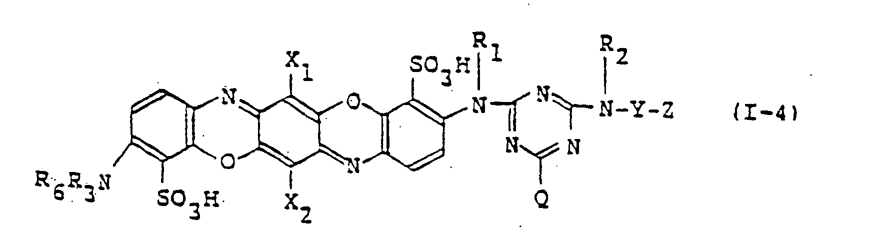 in der R' ein Halogenatom, eine Sulfogruppe oder ein Alkoxyrest ist, R₁, R₂ und R₃ unabhängig voneinander jeweils ein Wasserstoffatom oder ein unsubstituierter oder substituierter Alkylrest sind, X₁ und X₂ unabhängig voneinander jeweils ein Wasserstoff-, Halogenatom, Alkyl-, Alkoxyrest oder eine Phenoxygruppe sind, Y ein unsubstituierter oder substituierter Alkylen-, Phenylen- oder Naphthylenrest ist, Z -SO₂CH=CH₂ oder -SO₂CH₂CH₂Z' ist, wobei Z' ein durch die Wirkung einer Base abspaltbarer Rest ist, V₁ ein Wasserstoffatom, ein unsubstituierter oder substituierter Alkylrest oder ein Acylrest der Formel (1)
-W-R₄ (1)
ist, wobei W eine Carbonyl- oder Sulfonylgruppe ist, und R₄ ein unsubstituierter oder substituierter Alkyl- oder Phenylrest ist,
Q₁ und Q₂ unabhängig voneinander jeweils ein unsubstituierter oder substituierter Aminorest sind, und Q ein Halogenatom, Alkoxyrest, unsubstituierter oder substituierter Aminorest oder ein Rest der Formel (3) 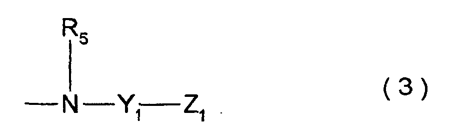 ist, wobei R₅ ein Wasserstoffatom oder unsubstituierter oder substituierter Alkylrest ist, Y₁ ein unsubstituierter oder substituierter Alkylen-, Phenylen- oder Naphthylenrest ist, und Z₁ -SO₂CH=CH₂ oder -SO₂CH₂CH₂Z" ist, wobei Z" ein durch die Wirkung einer Base abspaltbarer Rest ist,
Q₃ ein unsubstituierter oder substituierter Aminorest oder ein Rest der Formel (3), wie vorstehend definiert, ist, und R₆ ein Sulfoalkylrest ist.

2. Verbindung nach Anspruch 1, in der R₁ ein Wasserstoffatom ist.

3. Verbindung nach den Ansprüchen 1 bis 2, in der sowohl X₁ als auch X₂ Chlor- oder Bromatome sind.

4. Verbindung nach einem der Ansprüche 1 bis 3, in der Y eine unsubstituierte oder einmal oder zweimal mit einer Methyl-, Ethyl-, Methoxy-, Ethoxygruppe, einem Chlor-, Bromatom, einer Nitro-, Sulfo- oder Carboxygruppe substituierte Phenylengruppe oder eine unsubstituierte oder mit einer Sulfogruppe substituierte Naphthylengruppe ist.

5. Verbindung nach einem der Ansprüche 1 bis 4, die durch die Formel I-1 wiedergegeben ist in Form der freien Säure.

6. Verbindung nach Anspruch 5, in der R' eine Sulfogruppe ist.

7. Verbindung nach einem der Ansprüche 1 bis 4, die durch die Formel 1-2 wiedergegeben ist.

8. Verbindung nach Anspruch 7, in der sowohl R₁ als auch R₃ Wasserstoffatome sind.

9. Verbindung nach einem der Ansprüche 1 bis 4, die durch Formel 1-3 wiedergegeben ist.

10. Verbindung nach Anspruch 9, in der sowohl R₁ als auch R₃ Wasserstoffatome sind.

11. Verbindung nach einem der Ansprüche 1 bis 4, die durch Formel I-4 wiedergegeben ist.

12. Verfahren zur Herstellung einer Verbindung nach einem der Ansprüche 1 bis 11, umfassend Kondensationsreaktionen von 2,4,6-Trihalogen-s-triazin mit einer Dioxazinverbindung als Zwischenprodukt der folgenden Formel (II) in Form der freien Säure, 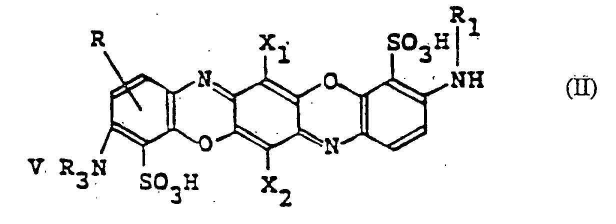 in der R₁, R₃, V, X₁ und X₂ die in Anspruch 1 angegebene Bedeutung haben, R ein Wasserstoffatom oder R', wie in Anspruch 1 definiert, ist und V V₁ oder R₆, wie in Anspruch 1 definiert, oder eine Triazinylgruppe der Formel (2) 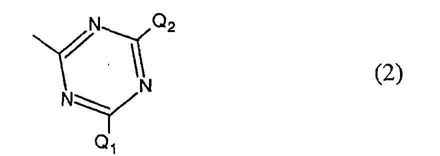 ist, in der Q₁ und Q₂ wie in Anspruch 1 definiert sind, einer Aminverbindung der folgenden Formel (III) 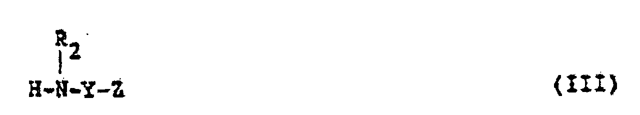 in der R₂, Y und Z die in Anspruch 1 angegebene Bedeutung haben, und gegebenenfalls einer Verbindung der folgenden Formel (IV),
H-Q' (IV)
in der Q' die gleiche Bedeutung hat wie für das Symbol Q in Anspruch 1 definiert, mit der Ausnahme des Halogenatoms.

13. Verfahren zum Färben oder Bedrucken von Hydroxyl- oder Amidgruppen-enthaltenden Materialien, umfassend die Verwendung einer Verbindung nach einem der Ansprüche 1 bis 11.

14. Verwendung der Verbindung nach einem der Ansprüche 1 bis 11 als faserreaktiver Farbstoff.

15. Verbindung der folgenden Formel in Form der freien Säure, 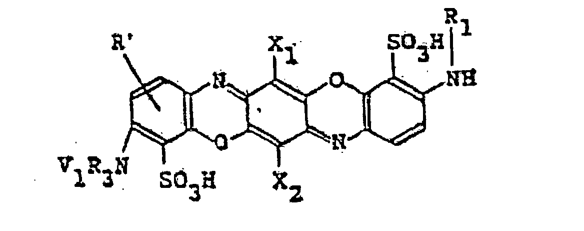 in der R' ein Halogenatom, eine Sulfogruppe oder ein C₁₋₄-Alkoxyrest ist;
R₁ und R₃ unabhängig voneinander jeweils ein Wasserstoffatom oder ein unsubstituierter oder substituierter Alkylrest sind;
X₁ und X₂ unabhängig voneinander jeweils ein Wasserstoff-, Halogenatom, Alkyl-, Alkoxyrest oder eine Phenoxygruppe sind; und
V₁ ein Wasserstoffatom, ein unsubstituierter oder substituierter Alkylrest oder ein Acylrest der Formel (1) ist
-W-R₄ (1)
in der W eine Carbonyl- oder Sulfonylgruppe ist, und R₄ ein unsubstituierter oder substituierter Alkyl- oder Phenylrest ist.

16. Verbindung der folgenden Formel in Form der freien Säure

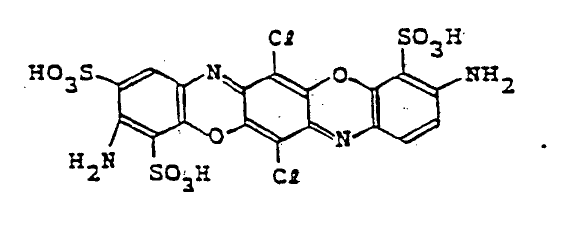

## Revendications

1. Composé représenté par une quelconque des formules suivantes I-1, I-2, I-3 et I-4 sous la forme acide libre, 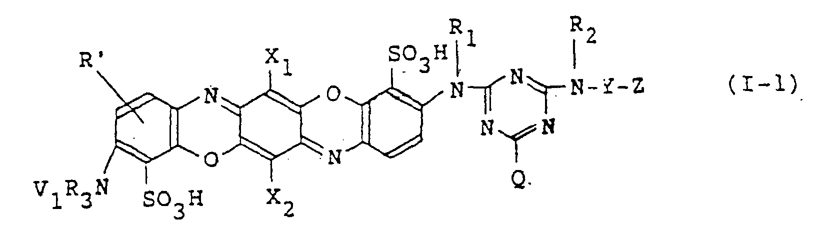 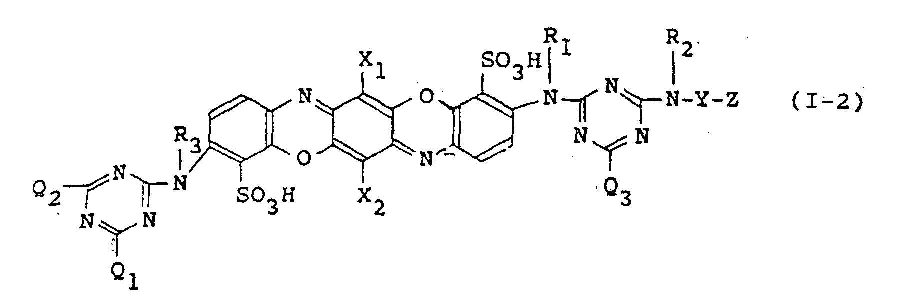 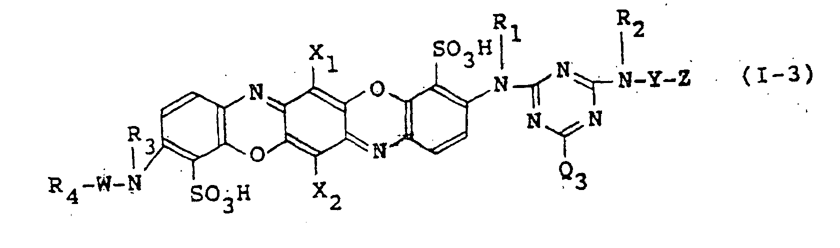 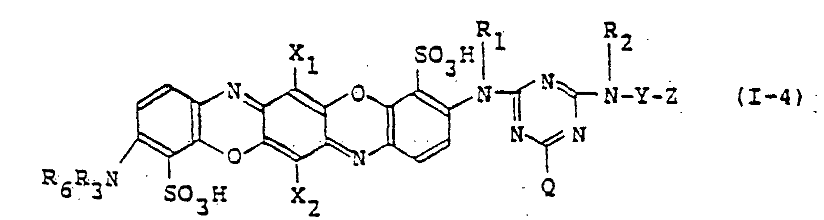 dans laquelle R' est un atome d'halogène, un groupe sulfo ou alcoxy, R₁, R₂ et R₃ représentent chacun indépendamment l'un de l'autre un atome d'hydrogène ou un groupe alkyle non substitué ou substitué, X₁ et X₂ représentent chacun indépendamment l'un de l'autre un atome d'hydrogène, d'halogène, un groupe alkyle, alcoxy ou phénoxy, Y est un groupe alkylène, phénylène ou naphtylène non substitué ou substitué, Z est -SO₂CH=CH₂ ou -SO₂CH₂CH₂Z' où Z' est un groupe susceptible d'être enlevé par l'action d'une base, V₁ est un atome d'hydrogène, un groupe alkyle non substitué ou substitué, ou un groupe acyle de formule (1),
-W-R₄ (1)
dans laquelle W est un groupe carbonyle ou sulfonyle, et R₄ est un groupe alkyle ou phényle non substitué ou substitué,
Q₁ et Q₂ représentent chacun indépendamment l'un de l'autre un groupe amino non substitué ou substitué, et Q est un atome d'halogène, un groupe alcoxy, amino non substitué ou substitué ou un groupe de formule (3) 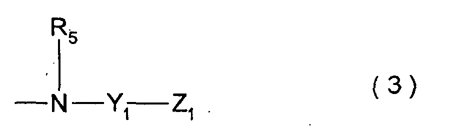 dans laquelle R₅ est un atome d'hydrogène ou un groupe alkyle non substitué ou substitué, Y₁ est un groupe alkylène, phénylène ou naphtylène non substitué ou substitué, et Z₁ est -SO₂CH=CH₂ ou -SO₂CH₂CH₂Z'' où Z" est un groupe susceptible d'être enlevé par l'action d'une base,
Q₃ est un groupe amino non substitué ou substitué ou un groupe de formule (3) tel que défini ci-dessus, et R₆ est un groupe sulfoalkyle.

2. Composé selon la revendication 1, dans lequel R₁ est un atome d'hydrogène.

3. Composé selon les revendications 1 à 2, dans lequel les deux radicaux X₁ et X₂ représentent des atomes de chlore ou de brome.

4. Composé selon l'une quelconque des revendications 1 à 3, dans lequel Y est un groupe phénylène non substitué ou substitué une ou deux fois par un groupe méthyle, éthyle, méthoxy, éthoxy, chloro, bromo, nitro, sulfo ou carboxy, ou un groupe naphtylène non substitué ou substitué par un groupe sulfo.

5. Composé selon l'une quelconque des revendications 1 à 4, qui est représenté par la formule I-1 sous la forme acide libre.

6. Composé selon la revendication 5, dans lequel R' est un groupe sulfo.

7. Composé selon l'une quelconque des revendications 1 à 4, qui est représenté par la formule I-2.

8. Composé selon la revendication 7, dans lequel les deux radicaux R₁ et R₃ sont des atomes d'hydrogène.

9. Composé selon l'une quelconque des revendications 1 à 4, qui est représenté par la formule I-3.

10. Composé selon la revendication 9, dans lequel les deux radicaux R₁ et R₃ sont des atomes d'hydrogène.

11. Composé selon l'une quelconque des revendications 1 à 4, qui est représenté par la formule I-4.

12. Procédé de préparation d'un composé tel que défini dans l'une quelconque des revendications 1 à 11, qui comprend l'étape consistant à soumettre une 2,4,6-trihalogéno-s-triazine à des réactions de condensation avec un composé de dioxazine intermédiaire représenté par la formule (II) suivante sous la forme acide libre, 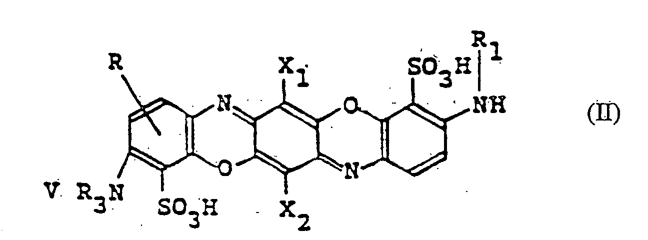 dans laquelle R₁, R₃, V, X₁ et X₂ sont tels que définis dans la revendication 1, R est un atome d'hydrogène ou R' tel que défini dans la revendication 1, et V est V₁ ou R₆ tels que définis dans la revendication 1, ou un groupe triazinyle de formule (2) 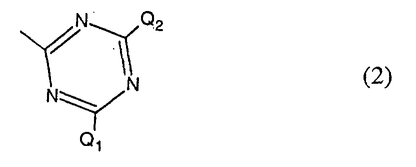 dans laquelle Q₁ et Q₂ sont tels que définis dans la revendication 1, une amine représentée par la formule (III) suivante, 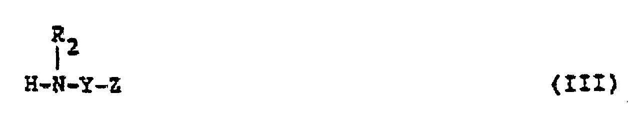 dans laquelle R₂, Y et Z sont tels que définis dans la revendication 1, et éventuellement un composé représenté par la formule (IV) suivante,
H-Q' (IV)
dans laquelle Q' comprend les mêmes significations que celles définies dans la revendication 1 pour le symbole Q, à l'exception d'un atome d'halogène.

13. Procédé pour teindre ou imprimer des matières contenant des groupes hydroxyle ou amide, qui comprend l'utilisation d'un composé tel que défini dans l'une quelconque des revendications 1 à 11.

14. Utilisation du composé selon l'une quelconque des revendications 1 à 11 comme colorant réagissant avec les fibres.

15. Composé représenté par la formule suivante sous la forme acide libre, 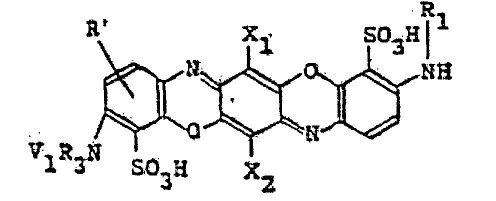 dans laquelle R' est un atome d'halogène, un groupe sulfo ou alcoxy en C₁-C₄;
R₁ et R₃ représentent chacun indépendamment l'un de l'autre un atome d'hydrogène ou un groupe alkyle non substitué ou substitué;
X₁ et X₂ représentent chacun indépendamment l'un de l'autre un atome d'hydrogène, d'halogène, un groupe alkyle, alcoxy ou phénoxy; et
V₁ est un atome d'hydrogène, un groupe alkyle non substitué ou substitué ou un groupe acyle de formule (1),
-W-R₄ (1)
dans laquelle W est un groupe carbonyle ou sulfonyle, et R₄ est un groupe alkyle ou phènyle non substitué ou substitué.

16. Composé représenté par la formule suivante sous la forme acide libre,
